# EUROPEAN PATENT SPECIFICATION

(11) **EP 4 339 989 B1**
(45) Date of publication and mention of the grant of the patent: **04.12.2024**
(21) Application number: 23194818.3
(22) Date of filing: 01.09.2023
(51) Int. Cl.: H01H 85/44, H01T 1/14, H01T 2/02, H02H 9/06

(54) **ELECTRICAL PROTECTION ASSEMBLIES AND SURGE PROTECTIVE DEVICES**
ELEKTRISCHE SCHUTZANORDNUNGEN UND ÜBERSPANNUNGSSCHUTZVORRICHTUNGEN
ENSEMBLES DE PROTECTION ÉLECTRIQUE ET DISPOSITIFS DE PROTECTION CONTRE LES SURTENSIONS

(30) Priority: 14.09.2022 US 202263375588 P; 14.09.2022 US 202263375591 P; 30.03.2023 US 202363493026 P; 25.08.2023 US 202318455692; 25.08.2023 US 202318455697
(43) Date of publication of application: 20.03.2024
(60) Divisional application: 24207069.6
(73) Proprietor: RIPD IP Development Ltd, 2012 Nicosia (CY)
(72) Inventor: TOPCAGIC, Zumret, 1000 Ljubljana (SI); ROZMAN, Robert, 1216 Smlednik (SI); ROZMAN, Blaz, 4270 Jesenice (SI); ZUNIC, Rok, 1000 Ljubljana (SI)
(74) Representative: Yeadon IP Limited

(56) References cited:
- EP-A1- 1 458 072
- DE-A1- 102019 210 236
- US-A1- 2016 035 529

## Description

### Field

The present invention relates to fuse assemblies and surge protective devices (SPDs).

### Background

Frequently, excessive voltage or current is applied across or through service lines that deliver power to residences and commercial and institutional facilities. Such excess voltage or current spikes (transient overvoltages and surge currents) may result from lightning strikes, for example. The above events may be of particular concern in telecommunications distribution centers, hospitals and other facilities where equipment damage caused by overvoltages and/or current surges is not acceptable and resulting downtime may be very costly.

Typically, sensitive electronic equipment may be protected against transient overvoltages and surge currents using surge protective devices (SPDs). For example, an overvoltage protection device may be installed at a power input of equipment to be protected, which is typically protected against overcurrents when it fails. Typical failure mode of an SPD is a short circuit. The overcurrent protection typically used is a combination of an internal thermal disconnector to protect the SPD from overheating due to increased leakage currents and an external fuse to protect the SPD from higher fault currents. Different SPD technologies may avoid the use of the internal thermal disconnector because, in the event of failure, they change their operation mode to a low ohmic resistance.

SPDs may use one or more active voltage switching/limiting components, such as a varistor or gas discharge tube, to provide overvoltage protection. These active voltage switching/limiting components may degrade at a rapid pace as they approach the end of their operational lifespans, which may result in their exhibiting continuous short circuit behavior.

US 2016/035529 A1 discloses an electrical protection assembly comprising a fuse assembly forming an overcurrent protection circuit and including a fuse element; and a gap assembly electrically connected in series with the fuse element, wherein the gap assembly includes a first gap electrode and an opposing second gap electrode and a trigger gap.

### Summary

According to the invention, an electrical protection assembly includes a semiconductive gap-assisted (SGA) fuse assembly forming an overcurrent protection circuit. The SGA fuse assembly includes a fuse element and a semiconductive gap assembly electrically connected in series with the fuse element. The semiconductive gap assembly includes: a first gap electrode and an opposing second gap electrode; a trigger gap defined between the first and second gap electrodes; and a semiconductive member disposed in the trigger gap. The semiconductive member is configured to assist in initiation of an electrical arc flashover across the trigger gap between the first and second gap electrodes responsive to an overvoltage developed across the first and second gap electrodes.

In some embodiments, the semiconductive member is formed of a composition including a mixture of a polymeric material, as a nonconductive matrix, and an electrically conductive filler.

In some embodiments, the semiconductive member is formed of a semiconductive ceramic selected from the group consisting of zinc oxide, barium titanate, and silicon carbide.

In some embodiments, the fuse element is a bimetallic fuse element including a first metal layer having a first coefficient of thermal expansion, and a second metal layer having a second coefficient of thermal expansion. The first coefficient of thermal expansion is greater than the second coefficient of thermal expansion. The bimetallic fuse element is configured to disintegrate in response to a current flowing through the bimetallic fuse element. The bimetallic fuse element is configured to bend in a deformation direction, due to the difference in the coefficients of thermal expansion of the first and second metal layers, in response to heat generated in the bimetallic fuse element by the current flowing through the bimetallic fuse element. Said bending assists in extinguishing electrical arcing from the bimetallic fuse element.

According to some embodiments, a portion of the fuse element forms the first gap electrode or the second gap electrode.

In some embodiments, the electrical protection assembly includes a second fuse element and the semiconductive gap assembly is connected in electrical series between the first and second fuse elements.

In some embodiments, a portion of the first fuse element forms the first gap electrode, and a portion of the second fuse element forms the second gap electrode.

According to some embodiments, the electrical protection assembly includes a thermal disconnect mechanism configured to disconnect the overcurrent protection circuit in response to a current insufficient to disintegrate the fuse element.

In some embodiments, the thermal disconnect mechanism includes a springloaded electrode and a meltable retainer.

According to some embodiments, the electrical protection assembly includes a deion chamber connected in electrical in series with the semiconductive gap assembly.

In some embodiments, wherein the deion chamber is connected in electrical series with the fuse element.

In some embodiments, the deion chamber is connected in electrical parallel with the fuse element.

In some embodiments, the deion chamber includes a set of serially spaced apart deion plates, and the fuse element extends along and in contact with the deion plates.

According to some embodiments, the electrical protection assembly includes an overcurrent failure indicator system configured to signal when the overcurrent protection circuit is interrupted.

In some embodiments, the overcurrent failure indicator system is electronic.

According to some embodiments, the electrical protection assembly is a fused surge protective device (SPD) including an overvoltage protection circuit connected in electrical series with the SGA fuse assembly to form a fused SPD circuit.

In some embodiments, the fused SPD includes an SPD module housing and first and second electrical terminals on the SPD module housing, and the overvoltage protection circuit and the overvoltage protection circuit are disposed in the SPD module housing.

In some embodiments, the overvoltage protection circuit includes a voltage-switching/limiting component.

In some embodiments, the voltage-switching/limiting component is a varistor, a spark gap, a diode or a thyristor.

In some embodiments, the overvoltage protection circuit includes a gas discharge tube connected in electrical series with the voltage-switching/limiting component.

In some embodiments, the overvoltage protection circuit includes a thermal disconnect mechanism configured to interrupt the fused SPD circuit in response to heat from the voltage-switching/limiting component and/or from the semiconductive gap assembly.

In some embodiments, the thermal disconnect mechanism includes a solder joint.

In some embodiments, the overvoltage protection circuit includes a fail-safe mechanism configured to short circuit the overvoltage protection circuit in response to heat from the voltage-switching/limiting component.

In some embodiments, the electrical protection assembly includes a third gap electrode and a main spark gap defined at least in part by the third gap electrode, wherein the electrical protection assembly is configured such that the electrical arc flashover will propagate into and through the main spark gap from the trigger gap.

In some embodiments, the electrical protection assembly includes a varistor and/or a gas discharge tube connected in electrical series with the semiconductive member and in electrical parallel with the main spark gap.

In some embodiments, the electrical protection assembly includes a deion chamber connected in electrical series with semiconductive gap assembly.

In some embodiments, the electrical protection assembly includes an overcurrent failure indicator system configured to signal when the overcurrent protection circuit is interrupted, and an overvoltage indicator system configured to signal when the overvoltage protection circuit is interrupted.

In some embodiments, the electrical protection assembly includes an SPD module including the overvoltage protection circuit, and a fuse assembly module. The fuse assembly module is mounted on and secured to the SPD module such that the SPD module and the fuse assembly module in combination form a unitary fused SPD module.

According to some embodiments, the SPD module includes: a housing electrode including an end wall and an integral sidewall collectively defining a cavity, wherein the housing electrode is unitarily formed of metal; a piston electrode extending into the cavity; and a varistor wafer disposed in the cavity between the housing electrode and the piston electrode; and the fuse assembly module is mounted on the piston electrode or the housing electrode.

According to some embodiments, the overvoltage protection circuit includes a voltage-switching/limiting component, and the fused SPD includes: a spark gap assembly, the spark gap assembly including a first spark gap electrode and a second spark gap electrode defining a spark gap therebetween; and a thermal disconnector mechanism positioned in a ready configuration, wherein the voltage-switching/limiting component is electrically connected in electrical series with the spark gap, the thermal disconnector mechanism being repositionable to electrically disconnect the voltage-switching/limiting component from the spark gap. The thermal disconnector mechanism includes: the first spark gap electrode; a voltage-switching/limiting component electrode electrically connecting the spark gap to the voltage-switching/limiting component; and a solder securing the first spark gap electrode in electrical connection with the voltage-switching/limiting component electrode in the ready configuration. The solder is meltable in response to overheating in the fused SPD. The thermal disconnector mechanism is configured to displace the first spark gap electrode away from the voltage-switching/limiting component electrode and thereby electrically disconnect the voltage-switching/limiting component from the spark gap when the solder is melted.

According to some embodiments, a surge protective device includes a voltage-switching/limiting component, a spark gap assembly, and a thermal disconnector mechanism. The spark gap assembly includes a first spark gap electrode and a second spark gap electrode defining a spark gap therebetween. The thermal disconnector mechanism is positioned in a ready configuration, wherein the voltage-switching/limiting component is electrically connected in electrical series with the spark gap. The thermal disconnector mechanism is repositionable to electrically disconnect the voltage-switching/limiting component from the spark gap. The thermal disconnector mechanism includes: the first spark gap electrode; a voltage-switching/limiting component electrode electrically connecting the spark gap to the voltage-switching/limiting component; and a solder securing the first spark gap electrode in electrical connection with the voltage-switching/limiting component electrode in the ready configuration. The solder is meltable in response to overheating in the surge protective device. The thermal disconnector mechanism is configured to displace the first spark gap electrode away from the voltage-switching/limiting component electrode and thereby electrically disconnect the voltage-switching/limiting component from the spark gap when the solder is melted.

In some embodiments, the spark gap is a horn spark gap.

### Brief Description of the Drawings

The accompanying drawings, which form a part of the specification, illustrate embodiments of the present invention.
**FIG. 1** is a block diagram that illustrates an electrical power supply circuit including a fused surge protective device (SPD) module in accordance with some embodiments.
**FIG. 2** is a schematic view of a fused SPD circuit and module including an SGA fuse assembly in accordance with some embodiments.
**FIG. 3** is an enlarged, fragmentary view of the SGA fuse assembly of **FIG. 2** showing an SGA gap assembly forming a part of the SGA fuse assembly.
**FIG. 4** is an enlarged, perspective view of a fuse element forming a part of the SGA fuse assembly of **FIG. 2****.**
**FIG. 5** is a perspective view of a semiconductive member forming a part of the SGA fuse assembly of **FIG. 2****.**
**FIG. 6** is a cross-sectional view of an overvoltage protection circuit forming a part of the fused SPD module of **FIG. 1****.**
**FIG. 7** is a fragmentary view of an SGA fuse assembly according to further embodiments.
**FIG. 8** is a schematic view of a fused SPD circuit and module including an SGA fuse assembly in accordance with further embodiments.
**FIG. 9** is a fragmentary, perspective view of the fused SPD circuit and module of **FIG. 8****.**
**FIG. 10** is a schematic view of a fused SPD circuit and module including an SGA fuse assembly in accordance with further embodiments in a ready position.
**FIG. 11** is a schematic view of the fused SPD circuit and module of **FIG. 10** in a first open circuit position.
**FIG. 12** is a schematic view of the fused SPD circuit and module of **FIG. 10** in a second open circuit position.
**FIG. 13** is a schematic view of a fused SPD circuit and module in accordance with further embodiments.
**FIG. 14** is a side view of a bimetallic fuse element according to some embodiments.
**FIG. 15** is a side view of the bimetallic fuse element of **FIG. 14** in an open or broken condition.
**FIG. 16** is a schematic view of a fused SPD circuit and module in accordance with further embodiments.
**FIG. 17** is a perspective view of the fused SPD circuit and module of **FIG. 16****.**
**FIG. 18** is a perspective view of a fused SPD module according to some embodiments.
**FIG. 19** is a fragmentary, perspective view of the fused SPD module of **FIG. 18****.**
**FIG. 20** is a fragmentary, perspective view of the fused SPD module of **FIG. 18****.**
**FIG. 21** is a fragmentary, side view of the fused SPD module of **FIG. 18****.**
**FIG. 22** is an enlarged, fragmentary, perspective view of the fused SPD module of **FIG. 18****.**
**FIG. 23** is an enlarged, fragmentary, cross-sectional view of the fused SPD module of **FIG. 18** taken along the line **23-23** of **FIG. 20****.**
**FIG. 24** is a schematic view of the fused SPD module of **FIG. 18** illustrating operation of the fused SPD module in response to a surge current event.
**FIG. 25** is a schematic view of the fused SPD module of **FIG. 18** illustrating operation of the fused SPD module in response to a high fault current event.
**FIG. 26** is a schematic view of the fused SPD module of **FIG. 18** illustrating operation of the fused SPD module in response to a high fault current event.
**FIG. 27** is a fragmentary, side view of the fused SPD module of **FIG. 18** illustrating operation of the fused SPD module in response to a low fault current event.
**FIG. 28** is a perspective view of an SPD module according to some embodiments.
**FIG. 29** is a fragmentary, perspective view of the fused SPD module of **FIG. 28****.**
**FIG. 30** is a fragmentary, perspective view of the fused SPD module of **FIG. 28****.**
**FIG. 31** is a fragmentary, side view of the fused SPD module of **FIG. 28****.**
**FIG. 32** is an enlarged, fragmentary, side view of the fused SPD module of **FIG. 28****.**
**FIG. 33** is a fragmentary, side view of the fused SPD module of **FIG. 28** illustrating operation of the fused SPD module in response to a high fault current event.
**FIG. 34** is a fragmentary, side view of the fused SPD module of **FIG. 28** illustrating operation of the fused SPD module in response to a low fault current event.
**FIG. 35** is an exploded, perspective view of an SGA fuse assembly according to some embodiments.
**FIG. 36** is a fragmentary, side of the SGA fuse assembly of **FIG. 35****.**
**FIG. 37** is a perspective view of a fused SPD module and a base according to some embodiments.
**FIG. 38** is a fragmentary, perspective view of the fused SPD module and base of **FIG. 37****.**
**FIG. 39** is a perspective view of a fused SPD module according to some embodiments.
**FIG. 40** is an exploded, perspective view of the fused SPD module of **FIG. 39****.**
**FIG. 41** is an exploded, perspective view of the fused SPD module of **FIG. 39****.**
**FIG. 42** is a fragmentary, perspective view of the fused SPD module of **FIG. 39****.**
**FIG. 43** is a fragmentary, perspective view of the fused SPD module of **FIG. 39****.**
**FIG. 44** is a perspective view of a fused SPD module according to some embodiments.
**FIG. 45** is an enlarged, fragmentary, cross-sectional view of the fused SPD module of **FIG. 44** taken along the line **45-45** of **FIG. 44****.**
**FIG. 46** is an exploded, perspective view of an SGA fuse assembly forming a part of the fused SPD module of **FIG. 44****.**
**FIG. 47** is fragmentary, top view of the SGA fuse assembly of **FIG. 44****.**

### Detailed Description

The present invention now will be described more fully hereinafter with reference to the accompanying drawings, in which illustrative embodiments of the invention are shown. In the drawings, the relative sizes of regions or features may be exaggerated for clarity. This invention may, however, be embodied in many different forms and should not be construed as limited to the embodiments set forth herein; rather, these embodiments are provided so that this disclosure will be thorough and complete, and will fully convey the scope of the invention to those skilled in the art.

It is noted that aspects described with respect to one embodiment may be incorporated in different embodiments although not specifically described relative thereto. That is, all embodiments and/or features of any embodiments can be implemented separately or combined in any way and/or combination. Moreover, other apparatus, methods, and systems according to embodiments of the inventive concept will be or become apparent to one with skill in the art upon review of the following drawings and detailed description. It is intended that all such additional apparatus, methods, and/or systems be included within this description, be within the scope of the present inventive subject matter, and be protected by the accompanying claims.

As used herein, "monolithic" means an object that is a single, unitary piece formed or composed of a material without joints or seams. Alternatively, a unitary object can be a composition composed of multiple parts or components secured together at joints or seams.

Some embodiments of the inventive concept stem from a realization that fuses used to protect surge protective devices (SPDs) from short circuit currents when they fail by disconnecting them from the circuit have generally very high current ratings. These high current ratings may allow the fuses to handle high impulse voltages and/or impulse currents from overvoltage events, such as lightning strikes, when configured in series with the SPD between the power line and ground or handle ongoing current when provided inline in the power line. The fuse must also safely disconnect short-circuit (fault) currents. In an AC system, the combined effects of the disintegration of the fusible element (contained in an arc-extinguishing media) and the zero-crossing of the mains voltage may enable successful fault current breaking. However, in DC systems, the absence of zero-crossing mains voltage often prevents the successful disconnection of standard fuses having electrically continuous fusible element(s). As a result, the fault current may be forced through the fuse in a high resistive state. This behavior can gradually thermically overstress the fuse, resulting in a rupture and arcing outside of the fuse's insulating body.

According to some embodiments of the inventive concept, a semiconductive gap-assisted (SGA) fuse element includes at least one fuse element and a semiconductive gap assembly. Each fuse element is electrically conductive and configured to melt or disintegrate in response to a sufficient amount of current. The semiconductive gap assembly includes two opposing gap electrodes and a semiconductive member. The gap electrodes are spaced apart by a trigger gap. The semiconductive member is interposed in electrical series between the two gap electrodes. In some embodiments, the semiconductive member is in contact with each of the two gap electrodes. In some embodiments, the gap electrodes and the semiconductive member form a unitary assembly. In some embodiments, the fuse element(s) and the semiconductive member form a unitary assembly.

In some embodiments, at least one of the gap electrodes is an end of one of the fuse elements. In some embodiments, the SGA fuse element includes first and second fuse elements, the first gap electrode is an end of the first fuse element, and the second gap electrode is an end of the second fuse element.

According to some embodiments of the inventive concept, an SGA fuse assembly or device includes an SGA fuse element as described above, first and second fuse device terminals electrically connected to opposed ends of the SGA fuse element, and a device housing containing the SGA fuse element.

In some embodiments, the SGA fuse assembly includes an electric arc extinguishing agent, such as SiO2, to terminate arcing along the fuse element(s). The SiO2 may be provided in the form of sand or powder.

According to some embodiments of the inventive concept, an overvoltage protection circuit may be connected in series with a semiconductive gap-assisted (SGA) fuse element as described above to form, in combination, a fused SPD circuit. In some embodiments, the fused SPD circuit is provided in the form of a fused SPD unit or module, wherein the overvoltage protection circuit and the SGA fuse element are each integrated in the fused SPD unit or module.

The fused SPD circuit may include a thermal disconnector device along with the overvoltage protection circuit and the SGA fuse element. In some embodiments, the thermal disconnector device is integrated in the fused SPD unit or module along with the overvoltage protection circuit and the SGA fuse element.

The overvoltage protection circuit of the fused SPD circuit may include one or more active voltage-switching/limiting components, such as a varistor or gas discharge tube.

The SGA fuse assembly may be configured to electrically open the circuit through melting or disintegration of the fuse element(s) within a specified time period in response to a minimum short circuit current received therethrough from the overvoltage protection circuit (referred to herein as the "minimum SPD short circuit current"). For example, in a power line application, the minimum SPD short circuit current expected through the overvoltage protection circuit may be in a range from 300A - 1000A. A standard for protecting SPDs from short circuit current events may be that the SPD be disconnected from the circuit within 5 seconds of the SPD short circuit current event. Thus, when used in the example power line application, the SGA fuse assembly may be configured such that the fuse element(s) melt or disintegrate within 5 seconds to open the circuit in response to an SPD short circuit current of at least 300A.

The SGA fuse assembly may also be configured to handle very large SPD surge impulse currents that are generated due to overvoltage or current surge events, such as lightning strikes. An SPD may be required to re-direct a surge impulse current of up to 25 kA, which lasts between 1 ms to 5 ms, to ground. The SGA fuse assembly, according to some embodiments of the inventive concept, may conduct such high currents for up to 5 ms without the fuse element(s) melting or disintegrating to open the circuit.

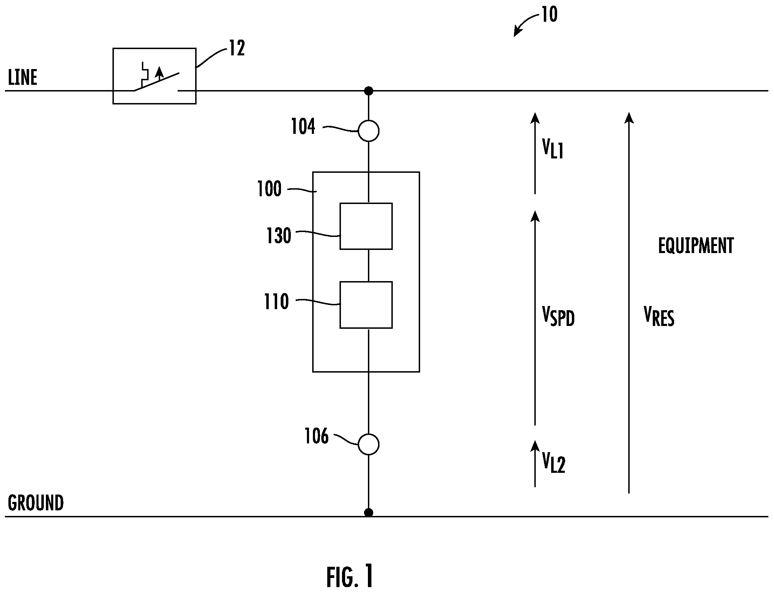

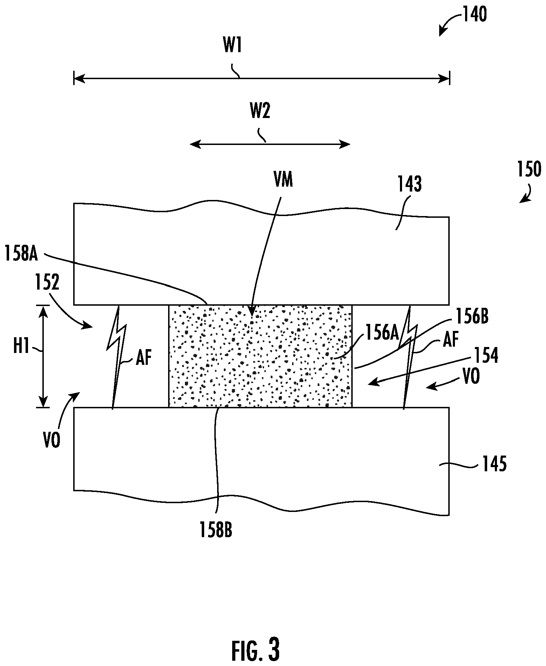

With reference to **FIGS. 1-5****,** an SGA fuse device or assembly **130** according to some embodiments is shown therein. The SGA fuse assembly **130** includes an SGA fuse element assembly **140** according to some embodiments.

In some embodiments, the SGA fuse assembly **130** is integrated into a fused surge protective device (SPD) unit or module **100** including an overvoltage protection circuit (OPC) **110.** In this case, the SGA fuse assembly **130** operates as an integrated backup fuse. In other embodiments, the SGA fuse assembly **130** may be provided, installed and used as an individual component in a protection circuit of a power supply circuit *(e.g.,* not physically integrated in a module with the OPC **110**).

In some embodiments, the SGA fuse assembly **130** or the fused SPD module **100** are provided, installed and used as a component in a protection circuit of a power supply circuit **10** as shown in **FIG. 1****,** for example. In the power supply circuit **10,** the OPC **110** is in electrical series with the SGA fuse assembly **130,** and the OPC **110** and the SGA fuse assembly **130** are in electrical parallel across sensitive equipment. The fused SPD module **100** is designed to protect the sensitive equipment from overvoltages and current surges. The fused SPD module **100** may also be connected to the power source via an upstream second fuse or circuit breaker **12.**

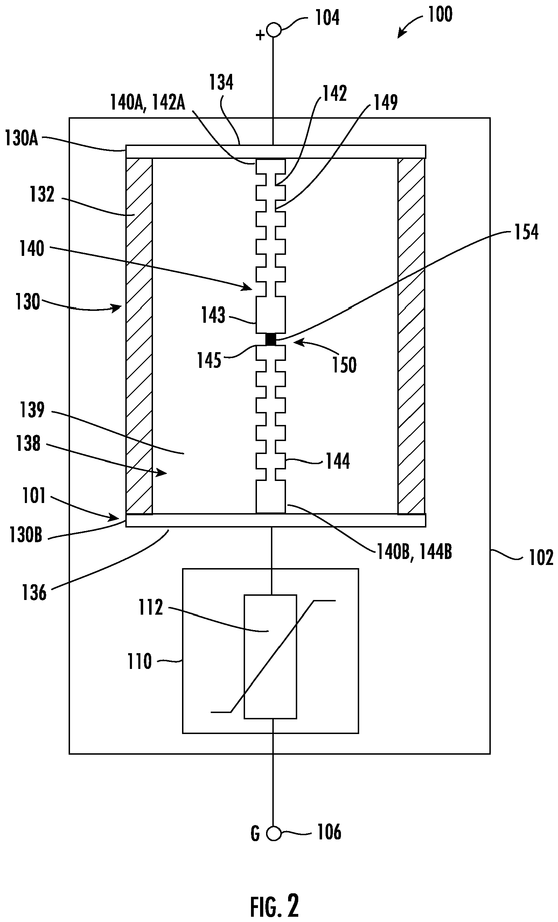

With reference to **FIG. 2****,** the fused SPD module **100** includes the fuse assembly **130,** a module housing **102,** a first electrical terminal **104,** a second electrical terminal 106, and the OPC **110.** The SGA fuse assembly **130** and the OPC **110** are disposed in the housing **102,** and are electrically connected between the terminals **104** and **106** to form a fused SPD electrical circuit **101.**

As mentioned above, in other embodiments the SGA fuse assembly **130** and the OPC **110** are not combined in a module. It will be appreciated that the discussion herein regarding the construction and operation of the fused SPD module **100** likewise applies to the fused SPD electrical circuit **101** in such embodiments.

The OPC **110** may be any suitable overvoltage protection circuit. In some embodiments, the OPC **110** includes an active voltage-switching or active voltage limiting component (referred to herein as a "voltage-switching/limiting component) **112.**

In some embodiments, the OPC **110** is a varistor-based overvoltage protection circuit and the voltage-switching/limiting component **112** is a varistor. In some embodiments, the voltage-switching/limiting component **112** is a metal oxide varistor (MOV). the voltage-switching/limiting component **112.** For example, in some embodiments the OPC **110** is a varistor-based SPD as disclosed in U.S. Patent No. 8,743,525 to Xepapas et al., the disclosure of which is incorporated herein by reference.

In some embodiments, the voltage-switching/limiting component **112** is a spark gap. In some embodiments, the voltage-switching/limiting component **112** is a gas discharge tube (GDT). In some embodiments, the voltage-switching/limiting component **112** is diode. In some embodiments, the voltage-switching/limiting component **112** is a thyristor.

The voltage-switching/limiting component **112** may also be another type of voltage-switching/limiting surge protective device. Other types of voltage-switching/limiting component **112** that may form, or form a part of, the OPC **110** may include spark gap devices, multi-cell GDTs *(e.g.,* as disclosed in U.S. Patent No. 10,685,805 to Rozman and U.S. Patent No. 10,186,842 to Rozman, the disclosures of which are incorporated herein by reference), diodes, or thyristors.

The OPC **110** may include or consist of only a single voltage-switching/limiting component **112.** In some embodiments, the OPC **110** includes or consists of only the active voltage-switching/limiting component(s) **112** and associated electrical connections, if any.

The OPC **110** may include a plurality of voltage-switching/limiting components **112.** The OPC **110** may include one or more voltage-switching/limiting components **110** in combination with other electrical components. In some embodiments, the OPC **110** includes multiple varistors (connected in electrical parallel or series between the module terminals), multiple GDTs (*e.g*., connected in electrical series), and/or both varistor(s) and GDT(s) (*e.g.*, connected in electrical series with the varistor(s)), and/or other circuit elements, such as resistors, inductors, or capacitors.

With reference to **FIGS. 2-4****,** the SGA fuse assembly **130** has a first end **130A** and an opposing second end **130B.** The SGA fuse assembly **130** includes a fuse assembly housing **132**, a first terminal **134** (at the end **130A**), a second terminal **136** (at the end **130B**), an electric arc extinguishing agent **139,** and an SGA fuse element assembly **140.** The housing **132** and the terminals **134, 136** define a chamber **138.**

The housing **132** may be formed of any suitable electrically insulating material. In some embodiments, the housing **132** is formed of ceramic.

The terminals **134, 136** may be formed of any suitable electrically conductive metal. In some embodiments, the terminals **134, 136** are formed of copper, brass, stainless steel, aluminum copper (AlCu) or tungsten copper (WCu). The terminals **134, 136** may be formed of a base metal as stated above with additional surface plating (galvanization) of nickel or tin.

The electric arc extinguishing agent **139** may be formed of any suitable material. In some embodiments, the arc extinguishing agent **139** is a flowable media. In some embodiments, the arc extinguishing agent is flowable granules. In some embodiments, the electric arc extinguishing agent **139** is silica granules (silicon dioxide). The granule size and packing may be selected to optimize the performance of the extinguishing agent **139** as described herein.

The SGA fuse element assembly **140** has a first end **140A** and an opposing second end **140B.** The SGA fuse element assembly **140** includes a first fuse element **142,** a second fuse element **144,** and a semiconductive gap assembly **150.** The SGA fuse element **140** is disposed in the chamber **138.** The SGA fuse element assembly **140** is generally surrounded by the extinguishing agent **139** that fills the chamber **138.**

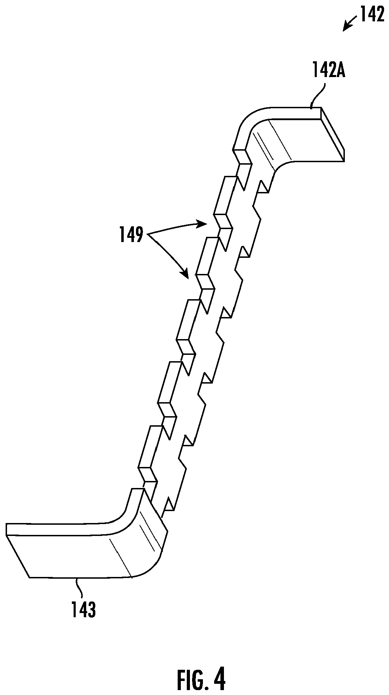

The first fuse element **142** is elongate and extends from an outer terminal end **142**A to an internal end **143,** which serves as a first gap electrode. The second fuse element **144** is elongate and extends from an outer terminal end **144A** to an internal end **145,** which serves as a second gap electrode. Holes and/or cutouts may be defined in the fuse elements **142, 144** to form constrictions **149** therein as shown in **FIG. 4****.**

The fuse elements **142, 144** are each formed of a fusible material that will melt or disintegrate when subjected to a current energy. In some embodiments, the fuse elements **142, 144** are formed of a material or materials selected from the group consisting of nickel, iron, copper, chromium, and silver. In some embodiments, the fuse elements **142, 144** are formed of a material or materials having a specific electrical resistance in the range of 1 × 10⁻⁸ to 1 × 10⁻⁶ [Ω m].

In some embodiments, one or both fuse elements **142, 144** are bimetallic fuse elements as described in more detail below.

In further embodiments, the SGA fuse element assembly **140** may include fuse elements **142** and/or **144** that are arranged in electrical parallel. In some embodiments, the SGA fuse element assembly **140** may include only one of the fuse elements **142, 144.**

In further embodiments, the fuse elements **142, 144** may be formed of bimetallic material. For example, each fuse element **142, 144** may include a first fusible layer of a first metal laminated to a second fusible layer of a second metal different from the first metal.

With reference to **FIG. 4****,** the semiconductive gap assembly **150** includes the first gap electrode **143,** the second gap electrode **145,** a semiconductive or trigger gap **152,** and a semiconductive member **154.** The trigger gap **152** is defined by and between the opposing gap electrodes **143** and **145.** The semiconductive member **154** is positioned in the trigger gap **152** and interposed between the gap electrodes **143** and **145.** The semiconductive member **154** is connected in electrical series between the fuse elements **142** and **144.**

The semiconductive member **154** has a body **156A** and an exterior surface **156B.** The semiconductive member **154** extends from a first end face **158A** to an opposing second end face **158B.** In some embodiments and as illustrated, the first end face **158A** is in electrical contact with the first gap electrode **143,** and the second end face **158B** is in electrical contact with the second gap electrode **145.**

The semiconductive member **154** may be formed of any suitable semiconductive material. In some embodiments, the semiconductive member **154** is formed of a composition including a mixture of a polymeric material (*e.g.*, a rubber or a plastic) as a nonconductive matrix and an electrically conductive filler. In some embodiments, the conductive filler is graphite powder. In some embodiments, the conductive filler is expanded graphite powder.

The conductive filler may be a material other than graphite powder having a relatively high secondary emission, such as beryllium oxide (BeO), magnesium oxide (MgO), or gallium phosphide (GaP).

The semiconductive member **154** can be rigid or flexible depending on the polymer matrix. In some embodiments, the semiconductive member **154** has a porous structure.

In some embodiments, the semiconductive member **154** is formed of a semiconductive ceramic. In some embodiments, the semiconductive member **154** is formed of ZnO (zinc oxide) or BaTiO3 (Barium titanate) or SiC (silicon carbide), with different dopants (oxides, metals).

The gap electrodes **143, 145** and the semiconductive member **154** define gap open regions or volumes **VO** in the trigger gap **152** around the semiconductive member **154** (*i.e*., around the volume **VM** of the trigger gap **152** filled or occupied by the semiconductive member **154**). Opposed regions **143A, 145A** of the gap electrodes **143, 145** are exposed (*i.e*., are not covered by the semiconductive member **154**).

In some embodiments, the gap spacing distance **H1** between the gap electrodes **143, 145** in the gap open volumes **VO** is at least 1 mm. In some embodiments, the gap spacing distance **H1** is in the range of from about 0.2 mm to 2 mm.

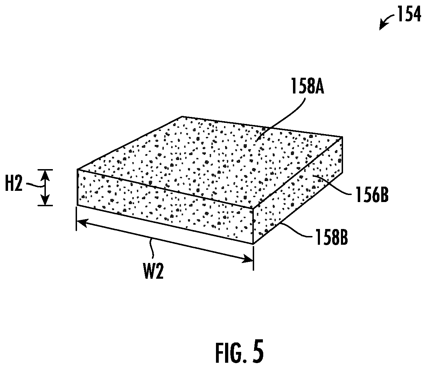

Referring to **FIG. 5****,** in some embodiments, the thickness or height **H2** of the semiconductive member **154** is at least 1 mm. In some embodiments, the height **H2** is in the range of from about 0.2 mm to 2 mm. In some embodiments, the height **H2** is substantially the same as the gap spacing distance **H1**.

In some embodiments, the width **W1** of the trigger gap **152** is at least 5 mm. In some embodiments, the width **W1** is in the range of from about 2 mm to 20 mm.

In some embodiments, the width **W2** of the semiconductive member **154** is in the range of from about 10 to 100 percent of the width **W1.**

The SGA fuse assembly **130** and the fused SPD assembly **100** may operate as follows in service.

According to some embodiments of the inventive concept, the fused SPD module 100 is configured to operate under four different conditions:
1) normal (stand by) operation;
2) an overvoltage or current surge event in which the fused SPD module 100 is designed to shunt an SPD surge impulse current to ground;
3) a high short circuit (fault) event; and
4) a low short circuit (fault) event.

The fused SPD module **100** is designed to shunt an SPD surge impulse current to ground in response to an overvoltage or current surge event.

A high short circuit (fault) event (condition 3)) may occur when the voltage-switching/limiting component **112** of the OPC **110** degrades at the end of its lifecycle and begins acting or operating as a short circuit. A high short circuit (fault) event (condition 3)) may also occur when a fail-safe mechanism of the OPC **110** is actuated to short-circuit the voltage-switching/limiting component **112.**

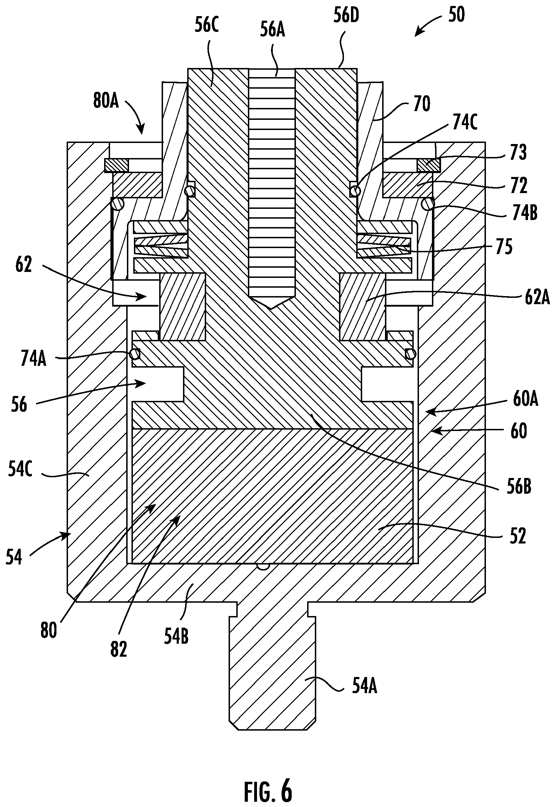

**FIG. 6** shows an example OPC module **50** that is used as the OPC **110** in accordance with some embodiments. The OPC module **50** may be constructed and operate, for example, as disclosed in U.S. Patent No. 8,743,525 to Xepapas et al.), the disclosure of which is incorporated herein by reference.

The illustrated OPC module **50** includes a housing or housing assembly **51,** a voltage-switching/limiting component **52** *(e.g.,* a varistor), a first fail-safe mechanism **60,** a second fail-safe mechanism **62,** an electrically insulating member **70,** an end cap **72,** a clip **73,** an O-ring **74A,** an O-ring **74B,** an O-ring **74C,** and one or more biasing devices in the form of loading springs **75** *(e.g.,* spring washers).

In some embodiments, the voltage-switching/limiting component **52** is a varistor wafer and, in some embodiments, is an MOV.

Either or both of the fail-safe mechanisms **60, 62** may be automatically actuated to short-circuit the voltage-switching/limiting component **52** *(e.g.,* a varistor) under appropriate conditions.

The housing assembly **51** includes a metal first or housing electrode **54** and a metal second or piston electrode **56.**

The housing electrode **54** is a cup-shaped metallic structure. The housing electrode **54** has an end or electrode wall **54B** and an integral tubular, cylindrical side wall **54C** extending from the end wall **54B.** The side wall **54C** and the end wall **54B** form a chamber or cavity **80** communicating with an opening **80A.** An integral threaded terminal post **54A** projects axially outwardly from the end wall **54B** for electrically connecting an input or output electrical line. The end wall **54B** has an inwardly facing, substantially planar contact surface.

According to some embodiments, the housing electrode **54** is formed of aluminum. However, any suitable electrically conductive metal may be used. According to some embodiments, the housing electrode **54** is unitary and, in some embodiments, monolithic.

The piston electrode **56** has a head **56B** disposed in the cavity **80** and an integral shaft **56C** that projects outwardly through the opening **80A.** The varistor wafer **52** is disposed in the cavity **80** between and in contact with each of the electrode wall **54B** and the head **56B.** The shaft **56C** has a terminal end face **56D.** An integral threaded bore **56A** is provided in the end of the shaft **56C** for electrically connecting an input or output electrical line.

According to some embodiments, the piston electrode **56** is formed of aluminum. However, any suitable electrically conductive metal may be used. According to some embodiments, the piston electrode **56** is unitary and, in some embodiments, monolithic.

The components **54, 56, 70, 72, 73, 74A, 74B, 74C,** collectively form a housing assembly **51** defining a sealed, enclosed chamber **82.** The varistor **52** is disposed axially between the housing electrode **54** and the piston electrode **56** along a lengthwise axis in the enclosed chamber **82.**

When the OPC module **50** is assembled as shown in **FIG. 6****,** the springs **75** are resiliently deflected and thereby persistently load the head **56B.** In this way, the varistor wafer **52** is clamped between the head **56B** and the electrode wall **54B.**

It will be appreciated that, when an overvoltage or current surge event (*e.g*., a transient power surge) applies a surge impulse current to the OPC module **50,** the varistor **52** will temporarily go to a low impedance state (*e.g*., effectively becoming a short circuit) and the OPC module **50** will become a short circuit from the electrode post **54A** to the electrode shaft **56C.**

The first fail-safe mechanism **60** can be triggered when the varistor **52** fails as a short circuit. In this case, arcing will occur adjacent and within a short circuit failure site in the varistor **52** *(i.e.,* the arc is initiated at the varistor **52**) and propagate or occur directly between the outer peripheral side wall of the piston electrode **56** and the adjacent interior surface of the housing electrode **54.** This arcing causes a metal surface portion of the piston electrode **56** and a metal surface portion of the housing electrode **54** to fuse or bond directly to one another in a prescribed region at a bonding or fusing site in a fusing region **60A** to form a bonded or fused interface portion. The fusing or bonding may occur by welding induced by the arc. In this way, the electrodes **54, 56** are shorted at the interface to bypass the varistor **52** so that the current induced heating of the failed varistor **52** ceases.

The second fail-safe mechanism **62** includes an electrically conductive metal meltable member **62A.** When heated to a threshold temperature, the meltable member **62A** will flow to bridge and electrically connect the electrodes **54, 56.** The meltable member **62A** thereby redirects the current applied to the OPC module **50** to bypass the varistor **52** so that current induced heating of the varistor **52** ceases.

The fail-safe mechanisms **60, 62** may thereby serve to prevent or inhibit thermal runaway and catastrophic failure of the OPC module **50.**

A low short circuit (fault) event (condition 4)) may be, for example, an ambient leakage current event associated with the OPC **110** (*e.g*., associated with diode junctions of a varistor **112** of the OPC **110**). The low fault current may be the result of a varistor in end of life state with impedance that is not very low, and/or a low prospective current (maximum short circuit amplitude) at the point of installation of the fused SPD device **100.** A low short circuit (fault) event (condition 4)) may also occur when a fail-safe mechanism of the OPC **110** *(e.g.,* the OPC **50** as described above) is actuated to short-circuit the voltage-switching/limiting component **112.**

The SGA fuse assembly **130** is configured to operate in three alternative modes: 1) a standby mode; 2) a surge current mode; and 3) a high short circuit (fault) current mode. As discussed below, these three modes may correspond to the first three conditions of the fused SPD assembly **100** listed above.

The semiconductive gap assembly **150** has a prescribed threshold flashover voltage. When a voltage is applied across the gap electrodes **143, 145** that is less than the threshold flashover voltage, the applied voltage will not initiate arc flashover between the gap electrodes **143, 145.** As discussed below, when a voltage is applied across the gap electrodes **143, 145** that is greater than or equal to the threshold flashover voltage, the applied voltage will initiate arc flashover between the gap electrodes **143, 145.**

The SGA fuse assembly **130** is constructed and installed with the fuse assembly **130** in the configuration shown in **FIG. 2****.** The electrodes **134** and **136** are electrically connected by the SGA fuse element assembly **140,** which makes electrical contact with the electrodes **134** and **136** via the fuse ends **142A** and **144A,** respectively. The terminal **104** is electrically connected to the Line (L) of the circuit **10,** and the terminal **106** is electrically connected to the Ground (G) of the circuit **10** (**FIG. 1**).

During normal operation, the OPC **110** practically acts as an insulator. The voltage applied across the semiconductive gap assembly **150** is insufficient to initiate a spark across the semiconductive gap assembly **150.** The SGA fuse assembly **130** remains in the configuration shown in **FIG. 2** and no current is conducted through the SGA fuse element assembly **140.**

When an overvoltage or current surge event *(e.g.,* a transient power surge) applies a surge impulse current to the fused SPD circuit **101,** the OPC **110** will temporarily go to a low impedance state (*e.g.*, effectively becoming a short circuit), and the SGA fuse assembly **130** is supplied with an SPD surge impulse current. The voltage-switching/limiting component **112** *(e.g.,* varistor or GDT) of the OPC **110** is designed to shunt the surge impulse current associated with such events to ground to protect sensitive equipment. The SPD surge impulse current may be on the order of tens of kA, but will typically last only a short duration (in the range of from about tens of microseconds to a few milliseconds).

During the surge event, the voltage applied across the trigger gap **152** by the surge event exceeds the prescribed threshold flashover voltage of the semiconductive gap assembly **150.** In response, the voltage across the semiconductive gap assembly **150** initiates electrical arc flashover **AF** (**FIG**. **3**) across the trigger gap **152.** That is, electrical arcing **AF** is generated between the gap electrodes **143** and **145.** In some embodiments, the voltage applied across the trigger gap **152** by the surge event is essentially or nearly the same as the voltage across the terminals **134, 136** of the SGA fuse assembly **130.**

The initiation of the flashover is assisted by the semiconductive member **154** in response to the overvoltage developed across the first gap electrode **143** and the second gap electrode **145.** At the beginning of the surge current, current conduction occurs through the bulk of the semiconductive member body **156A** and along the exterior surface **156B** of the semiconductive member **154.** Very quickly thereafter (*e.g.*, within less than 1 microsecond), the flashover **AF** occurs so that most of the surge current is bypassed through the arc column(s) established between the gap electrodes **143, 145.** By diverting the current around the semiconductive member **154,** degradation of the semiconductive member **154** is prevented or reduced.

The surge current flows between the terminals through the fuse element **142,** across the trigger gap **152,** and through the fuse element **144.** When the supplied surge current ceases, the voltage across the gap electrodes **143, 145** drops below the ignition voltage, the flashover ends and the SGA fuse assembly **130** stops conducting. The fused SPD module **100** may return to its standby mode.

The semiconductive member **154** functions as a spark gap trigger that assists in initiating the flashover between the gap electrodes **143, 145.** Because the semiconductive member **154** is provided, the threshold flashover voltage of the semiconductive gap assembly **150** is less than the voltage that would be required to initiate the flashover across the trigger gap **152** in the absence of the semiconductive member **154** *(i.e.,* if only the airgap **152** was provided). By reducing the minimum required flashover voltage, the semiconductive member **154** lowers the protection level of the fused SPD electrical circuit **101.**

In some embodiments, the SGA fuse element assembly **140** is capable of conducting this SPD surge impulse current without disintegrating or significantly degrading the SGA fuse element assembly **140** (*i.e.*, without disintegrating or significantly degrading the fuse elements **142, 144** or the semiconductive member **154**). The SGA fuse assembly **130** remains in the configuration shown in **FIG. 2****.** The SGA fuse assembly **130** therefore will not interrupt the SPD surge impulse current, and will remain usable for further operation.

Accordingly, the SGA fuse assembly **130** may be configured to carry the SPD surge impulse current therethrough without the SGA fuse element assembly **140** disintegrating to open the circuit. In some embodiments, the SGA fuse element assembly **140** and the fused SPD module **100** are designed to conduct and withstand multiple surges without failure (where "failure" means the device ruptures or is no longer capable of operating in the modes described herein).

In some embodiments of the inventive concept, the SGA fuse assembly **130** may be configured to carry therethrough an SPD surge impulse current of up to 25kA for a time of up to 5 ms, a 25kA 8/20 impulse waveform, and/or 25kA 10/350 impulse waveform without the SGA fuse element assembly **140** disintegrating to open the circuit.

When a high short circuit event (condition 3) discussed above) occurs, the OPC **110** will supply the SGA fuse assembly **130** with a relatively high SPD short circuit current. In some instances, the OPC **110** assumes a low impedance state *(e.g.,* an MOV thereof assumes an end of life state), which permits a high system fault current (referred to herein as a "high short circuit fault current") to flow through the OPC **110** and the SGA fuse assembly **130.** In some embodiments, this high short circuit fault current is in the range of from 1kA to 20kA.

During the high short circuit event, the voltage applied across the trigger gap **152** by the high short circuit event exceeds the prescribed threshold flashover voltage of the semiconductive gap assembly **150.** In response, the voltage across the semiconductive gap assembly **150** initiates electrical arc flashover across the trigger gap **152.** That is, electrical arcing **AF** is generated between the gap electrodes **143** and **145.**

During the high short circuit event, the semiconductive member **154** functions as a spark gap trigger that assists in initiating the flashover between the gap electrodes **143, 145** in the same manner as described above for the surge current event operation. At the beginning of the fault current, current conduction occurs through the bulk of the semiconductive member body **156A** and along the exterior surface **156B** of the semiconductive member **154.** Very quickly thereafter (*e.g*., within less than 1 microsecond), the flashover occurs so that the majority of the fault current is bypassed through the arc column(s) established between the gap electrodes **143, 145** across the trigger gap **152.** By diverting the fault current around the semiconductive member **154,** degradation of the semiconductive member **154** is prevented or reduced.

The arcing **AF** across the trigger gap **152** enables the fault current conducted through the SGA fuse assembly **130** to increase. The increased fault current melts one or both of the fuse elements **142, 144** at sections thereof. The melted fuse element material mixes with and is cooled by the arc extinguishing media **139.** This creates high resistance sections along the fuse element(s) **142, 144.** These high resistance sections may be conductive or semiconductive. The high resistance sections create voltage drops along the fuse element(s) **142, 144.** These voltage drops add together and increasingly reduce the voltage across the semiconductive gap assembly **150** to relatively low values, until the voltage across the semiconductive gap assembly **150** is less than the ignition voltage necessary to sustain the arcing between the gap electrodes **143, 145.** The voltage across the semiconductive gap assembly **150** is then also less than necessary to trigger flashover between the gap electrodes **143, 145** or to conduct current through or along the surface of the semiconductive member **154.** That is, at this lower voltage, the semiconductive member **154** operates as an electrical insulator between the gap electrodes **143, 145.** The SGA fuse assembly **130** is thereby opened at the semiconductive gap assembly **150** and the fault current through the SGA fuse assembly **130** and the fused SDP module **100** is cut off or interrupted.

The semiconductive gap assembly **150** serves to electrically open the SGA fuse element assembly **140** (and thereby the circuit between the fuse device terminals **134, 136**) once the fuse element(s) **142, 144** have achieved a threshold amount of disintegration. Without the semiconductive gap assembly **150,** the intact portions of the fuse elements **142, 144,** the semiconductive fuse/media sections, and arcing between portions of the fuse elements **142, 144** may continue to support sufficient flow through current to enable the fault current to continue longer than desired. The semiconductive member **154** serves both to lower the threshold flashover voltage (to initiate fault current thought the SGA fuse element assembly **140**) and to thereafter cut off the fault current to interrupt the fault current.

The threshold flashover voltage and the time are which flashover occurs are tuned or calibrated properties of the semiconductive gap assembly **150** that may be controlled by the dimensions of the trigger gap **152,** the dimensions of the gap electrodes **143, 145,** the dimensions of the semiconductive member **154,** and the composition of the semiconductive member **154.**

The threshold flashover voltage value is made low by making the separation distance between the gap electrodes **143, 145** relatively small (*e.g.*, 0.2-5mm). The threshold flashover voltage value is also made low by using expanded graphite powder to form the semiconductive member **154.**

The SGA fuse assembly **130** may be particularly beneficial when used in a DC electrical system. In the case of AC systems, zero-crossing of mains voltage can assist in fault current breaking. In the case of a DC system, even when the fuse elements disintegrate and thereby increase the fuse resistance and reduce the fault current amplitude to relatively low values, the absence of mains zero-crossing continues to force current through the fuse in a high resistive state. This behavior can gradually thermically overstress the fuse, resulting in explosion and arcing outside the insulating body of the fuse.

As mentioned above, the melted fuse element material mixes with the arc extinguishing media **139** to create fuse/media mixture sections. The electrical conductivity of these fuse/media sections depends on their temperature. When hot, the fuse/media mixture sections are more electrically conductive. Because DC systems lack zero crossing, the mixtures cannot be rapidly cooled by as may occur with AC systems.

In some embodiments, the SGA fuse assembly **130** is primarily provided open quickly to prevent overheating of the OPC **110.** The threshold flashover voltage of the semiconductive gap assembly **150** is set relatively low, so that the clamping voltage of the fused SPD device **100** is not significantly greater than the clamping voltage of the OPC **110** alone. In some embodiments, the OPC **110** includes a fail-safe mechanism that short circuits the voltage-switching/limiting component **112** *(e.g.,* a varistor) in response to overheating of the voltage-switching/limiting component **112.** In some embodiments, the short-circuiting fail-safe mechanism melts a meltable member or arc welds adjacent electrodes responsive to overheating, as disclosed in U.S. Patent No. 8,743,525 to Xepapas et al., the disclosure of which is incorporated herein by reference.

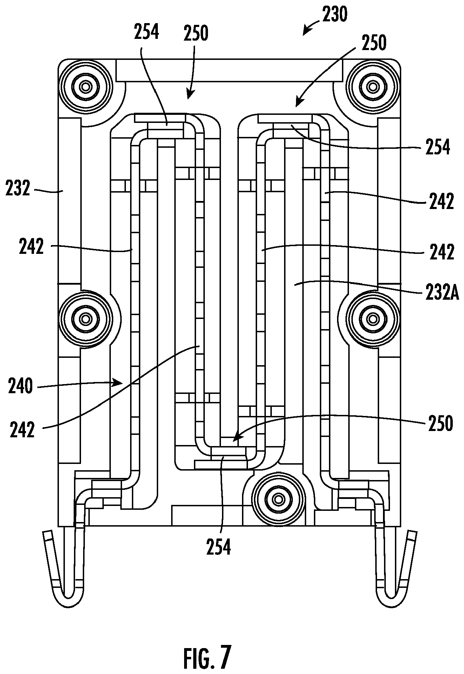

SGA fuse assemblies as disclosed herein may include multiple semiconductive gap assemblies and/or may have a meandric shape to increase the effective length of the fuse. For example, with reference to **FIG. 7****,** an SGA fuse assembly **230** according to further embodiments is shown therein. The SGA fuse assembly **230** may be used and constructed in the same manner as the SGA fuse assembly **130,** except as follows. The SGA fuse assembly **230** may be used in place of the SGA fuse assembly **130** in the fused SPD device **100** or circuit **101,** for example.

The SGA fuse assembly **230** includes an electrically insulating module housing **232,** electrically insulating partition walls **232A,** and an SGA fuse element assembly **240.** The SGA fuse element assembly **240** differs from the SGA fuse element assembly **140** in that the SGA fuse element assembly **240** includes four fuse elements **242,** three semiconductive members **254,** and three SGA gap assemblies **250** corresponding to the fuse elements **142, 144,** the semiconductive member **154,** and the SGA gap assembly **150,** respectively.

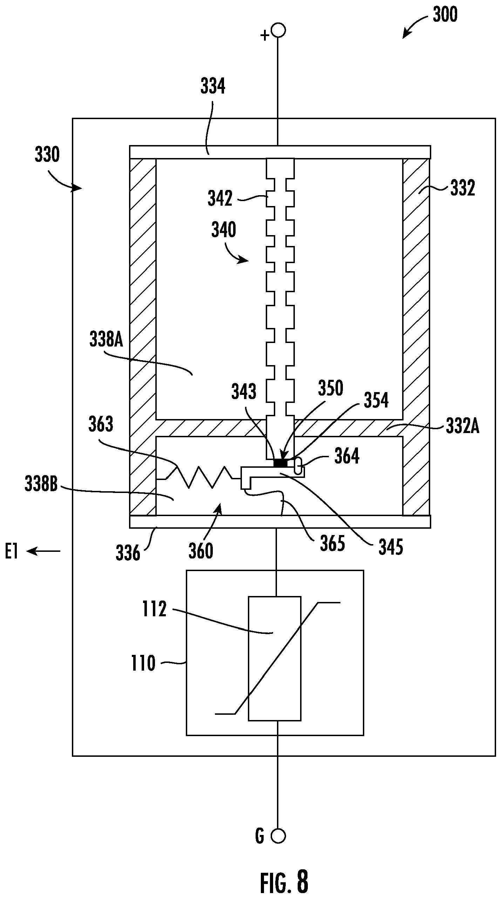

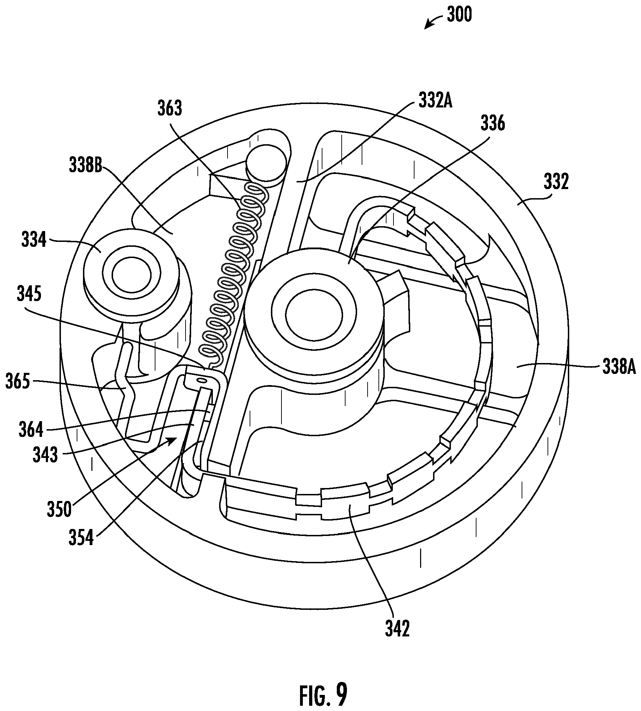

With reference to **FIGS. 8** and **9****,** a fused SPD module **300** according to further embodiments is shown therein. The fused SPD module **300** includes an SGA fuse assembly **330** and may be used and constructed in the same manner as the fused SPD module **100,** except as follows. **FIG. 8** is a schematic view of the fused SPD module **300.** **FIG. 9** is a fragmentary, perspective view of the SGA fuse assembly **330.**

The SGA fuse assembly **330** is configured to operate in the same manner as the SGA fuse assembly **130** in response to surge current events and high short circuit (fault) currents. The SGA fuse assembly **330** further includes a thermally-actuated disconnect mechanism **360** to interrupt a low short circuit (fault) current in the case of a low short circuit (fault) current event.

The SGA fuse assembly **330** includes a first terminal **334,** a second terminal **336,** a module housing **332** and a partition wall **332A** that define a fuse chamber **338A** and a disconnect chamber **338B.** The SGA fuse assembly **330** further includes an SGA fuse element assembly **340** and the disconnect mechanism **360.**

The SGA fuse element assembly **340** includes a fuse element **342** and a semiconductive gap assembly **350.** The fuse element **342** may be constructed the same as the fuse element **142.** The semiconductive gap assembly **350** includes a semiconductive or trigger gap **352,** a first gap electrode **343,** a second gap electrode **345,** and a semiconductive member **354** corresponding to the trigger gap **152,** the gap electrode **143,** the gap electrode **145,** and the semiconductive member **154,** respectively. The first gap electrode **343** is an end of the fuse element **342.** The second gap electrode **345** is a movable contact forming a part of the disconnect mechanism **360.**

The disconnect mechanism **360** includes the movable contact **345,** a loading or biasing device *(e.g.,* a spring) **363,** a meltable retainer or element **364,** and a flexible conductor **365.**

The trigger gap **352** is defined by and between the opposing gap electrodes **343** and **345.** The semiconductive member **354** is positioned in the gap **352** and interposed between the gap electrodes **343** and **345.** The semiconductive member **354** is connected in electrical series between the fuse elements **342** and the movable contact **345.** In some embodiments and as illustrated, the opposed end faces of the semiconductive member **354** are each in electrical contact with a respective one of the gap electrodes **343, 345.**

The movable contact **345** is electrically connected to the terminal **336** by the flexible conductor **365.** The spring **363** loads, biases or pulls the movable contact **345** in a disconnect direction **E1.** The meltable element **364** holds the movable contact **345** in position relative to the gap electrode **343** against the load the spring **363.**

The SGA fuse assembly **330** is configured to respond to surge current events and high short circuit events in the same manner as described for the SGA fuse assembly **130,** except that the movable contact **345** serves as the second gap electrode in place of the gap electrode **145.**

When a low short circuit event (condition 4) discussed above) occurs, the OPC **110** will supply the SGA fuse assembly **330** with a relatively low SPD short circuit current. In some instances, the OPC **110** assumes a moderately low impedance state (e.g., an MOV thereof assumes an end of life state), which permits a low system fault current or leakage current (referred to herein as a "low short circuit fault current") to flow through the OPC **110** and the SGA fuse assembly **330.** In some embodiments, this low short circuit fault current is in the range of from 1A to 100A.

During the low short circuit event, the voltage applied across the semiconductive gap assembly **350** by the low short circuit event exceeds the prescribed threshold flashover voltage of the semiconductive gap assembly **350.** In response, the voltage across the semiconductive gap assembly **350** initiates electrical arc flashover across the trigger gap **352.** That is, electrical arcing is generated between the gap electrodes **343** and **345.**

During the low short circuit event, the semiconductive member **354** functions as a spark gap trigger that assists in initiating the flashover between the gap electrodes **343, 345** in the same manner as described above for the semiconductive member **154.** At the beginning of the fault current, current conduction occurs through the bulk of the semiconductive member body and along the exterior surface of the semiconductive member **354.** Very quickly thereafter (*e.g*., within less than 1 microsecond), the flashover occurs so that the majority of the fault current is bypassed through the arc column(s) established between the gap electrodes **343, 345.**

The low short circuit fault current then conducted through the SGA fuse element assembly **340** is insufficient to interrupt the current in the manner described above for a high short circuit fault current (*i.e*., by disintegrating the fuse element). Instead, the heat generated by the arcing across the semiconductive gap assembly **350** is conducted to the meltable element **364,** which causes the meltable element **364** to melt *(e.g.,* soften). The melting of the meltable element **364** permits the spring **363** to displace or pull the gap electrode (movable contact) **345** away from the gap electrode **343,** thereby disconnecting the terminal **336** of the SGA fuse device **330** from the fuse element **342.** The fault current is thereby interrupted.

In some embodiments, the SGA fuse device **330** is mechanically secured directly to the end of an OPC module such as the OPC module **50** (**FIG. 6**). The SGA fuse device **330** may be connected to the OPC module **50** by a fastener (*e.g*., bolt) that extends through a hole in the terminal **336** and is threaded into the bore **56A.** A power line may be secured to the terminal **334.**

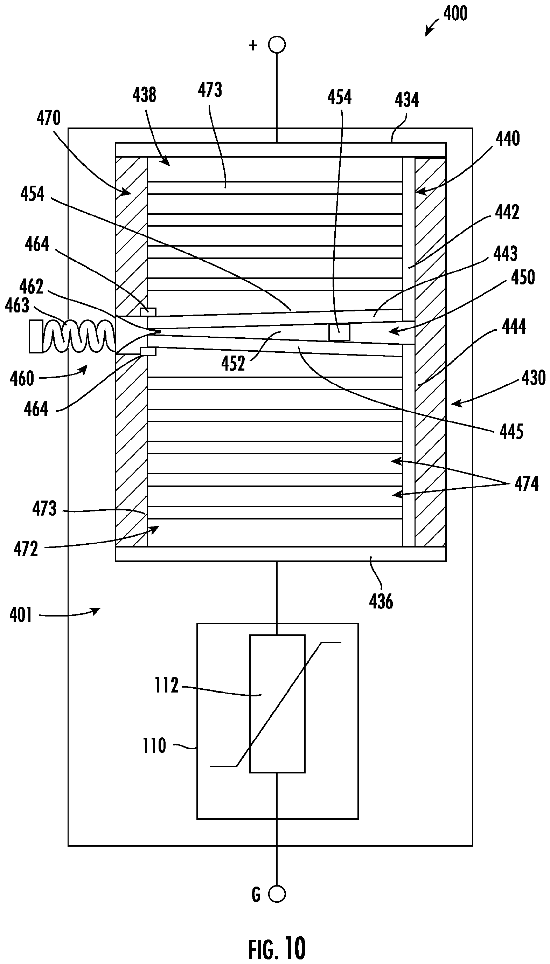

With reference to **FIGS. 10-12****,** a fused SPD module **400** according to further embodiments is shown therein. The fused SPD module **400** includes an SGA fuse assembly **430** and may be used and constructed in the same manner as the fused SPD module **300,** except as follows.

The SGA fuse assembly **430** includes a first terminal electrode **434,** a second terminal electrode **436,** a chamber **438,** an SGA fuse element assembly **440,** and a thermally-actuated disconnect mechanism **460.**

The SGA fuse element assembly **440** includes a first fuse element **442,** a second fuse element **444,** a first deion plate set or arc chute **470,** a second deion plate set or arc chute **472,** and a semiconductive gap assembly **450.**

The deion plate sets **470, 472** each include a series of electrically conductive deion plates **473** separated by deion plate arc gaps **474.**

The fuse elements **442, 444** may be constructed the same as the fuse elements **142, 144.** The first fuse element **442** extends along the deion plate set **470** and electrically contacts an edge of each deion plate **473** thereof, and also electrically contacts the terminal **434** and a first gap electrode **443.** The second fuse element **444** extends along the deion plate set **472** and electrically contacts an edge of each deion plate **473** thereof, and also electrically contacts the terminal **436** and a second gap electrode **445.**

The semiconductive gap assembly **450** includes a semiconductive or trigger gap **452,** the first gap electrode **443,** the second gap electrode **445,** and a semiconductive member **454** corresponding to the gap **152,** the gap electrode **143,** the gap electrode **145,** and the semiconductive member **154,** respectively. The gap electrodes **443, 445** are electrically conductive. The gap electrodes **443, 445** are mounted in the housing to be displaceable relative to one another.

The semiconductive member **454** is connected in electrical series between gap electrodes **443, 445,** and thereby in electrical series between the fuse elements **342.** In some embodiments and as illustrated, the opposed end faces of the semiconductive member **454** are each in electrical contact with a respective one of the gap electrodes **443, 445.**

The disconnect mechanism **460** includes a movable separator (insulating) **462,** a loading or biasing device *(e.g.,* a spring) **463,** and two meltable retainers or elements **464.**

The movable separator **462** is electrically insulating. The spring **463** loads, biases or pushes the movable separator **462** in direction **E2** to thereby drive the gap electrodes **443, 445** away from one another in opposing disconnect directions **E3.** The meltable elements **464** hold the gap electrodes **443, 445** in position against the load the spring **462.**

The SGA fuse assembly **430** and the fused SPD assembly **400** may operate as follows in service.

During normal operation, the SPD OPC **110** practically acts as an insulator. The voltage applied across the semiconductive gap assembly **450** is insufficient to initiate a spark across the trigger gap **452.** The SGA fuse assembly **430** remains in the configuration shown in **FIG. 10** and no current is conducted through the SGA fuse element assembly **440.**

When an overvoltage or current surge event *(e.g.,* a transient power surge) applies a surge impulse current to the fused SPD circuit **401,** the OPC **110** will temporarily go to a low impedance state (*e.g*., effectively becoming a short circuit), and the SGA fuse assembly **430** is supplied with an SPD surge impulse current as discussed above.

During the surge event, the voltage applied across the semiconductive gap assembly **450** by the surge event exceeds the prescribed threshold flashover voltage of the semiconductive gap assembly **450.** In response, the voltage across the semiconductive gap assembly **450** initiates electrical arc flashover between the gap electrodes **443, 445** across the gap **452.**

The semiconductive member **454** functions as a spark gap trigger, and initiation of the flashover is assisted by the semiconductive member **454,** in the same manner as described above for the semiconductive member **154.**

The surge current flows between the terminals **434, 436** through the fuse element **442,** across the gap **452,** and through the fuse element **444.** When the supplied surge current ceases, the voltage across the gap electrodes **443, 445** drops below the ignition voltage, the flashover ends and the SGA fuse assembly **430** stops conducting. The fused SPD module **400** may return to its standby mode.

As discussed with regard to the SGA fuse element assembly **140,** the SGA fuse element assembly **440** is capable of conducting this SPD surge impulse current without disintegrating or significantly degrading the SGA fuse element assembly **440** (*i.e.*, without disintegrating or significantly degrading the fuse elements **442, 444** or the semiconductive member **454**).

When a high short circuit event (condition 3) discussed above) occurs, the OPC **110** will supply the SGA fuse assembly **430** with a relatively high SPD short circuit current. The voltage applied across the gap **452** by the high short circuit event exceeds the prescribed threshold flashover voltage of the semiconductive gap assembly **450.** In response, the voltage across the semiconductive gap assembly **450** initiates electrical arc flashover across the gap **452** between the gap electrodes **443** and **445.** The semiconductive member **454** functions as a spark gap trigger that assists in initiating the flashover between the gap electrodes **443, 445** in the same manner as described above with regard to the semiconductive member **154.** The high fault current initially flows between the terminals **434, 436** through the fuse element **442,** across the gap **452,** and through the fuse element **444.**

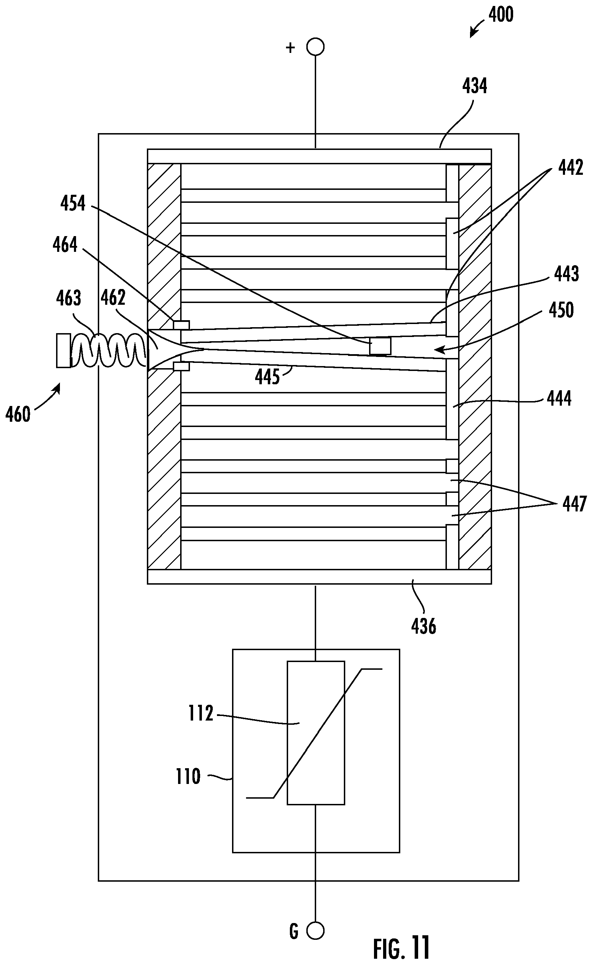

As illustrated in **FIG. 11****,** the high fault current disintegrates connecting sections **447** of the fuse elements **442, 444** between the deion plates **473.** As the high fault current disintegrates the connecting sections of the fuse elements, the current between the adjacent fuse element sections is redirected to arcing between the deion plates **473** at those locations. Each deion plate arc creates a voltage drop between the terminals. These voltage drops add together and increasingly reduce the voltage across the semiconductive gap assembly **450** to relatively low values, until the voltage across the semiconductive gap assembly **450** is less than the ignition voltage necessary to sustain the arcing between the gap electrodes **443, 445.** The voltage across the semiconductive gap assembly **450** is then also less than necessary to trigger flashover between the gap electrodes **443, 445** or to conduct current through or along the surface of the semiconductive member **454.** That is, at this lower voltage, the semiconductive member **454** operates as an electrical insulator between the gap electrodes **453, 445.** The SGA fuse assembly **430** is thereby opened at the semiconductive gap assembly **450** and the fault current through the SGA fuse assembly **430** and the fused SDP module **400** is cut off or interrupted.

When a low short circuit event (condition 4) discussed above) occurs, the OPC 110 will supply the SGA fuse assembly **430** with a relatively low SPD short circuit current. The voltage applied across the semiconductive gap assembly **450** by the low short circuit event exceeds the prescribed threshold flashover voltage of the semiconductive gap assembly **450.** In response, the voltage across the semiconductive gap assembly **450** initiates electrical arc flashover across the gap **452** between the gap electrodes **443** and **445.**

During the low short circuit event, the semiconductive member **454** functions as a spark gap trigger that assists in initiating the flashover between the gap electrodes **443, 445** in the same manner as described above for the semiconductive member **154.**

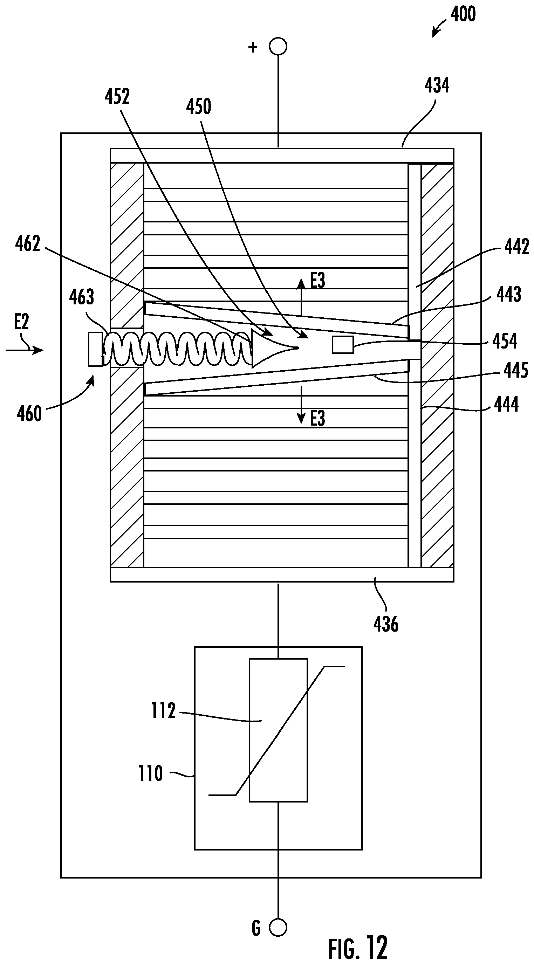

The low short circuit fault current then conducted through the SGA fuse element assembly **440 is** insufficient to interrupt the current in the manner described above for a high short circuit fault current (*i.e*., by disintegrating the fuse element). Instead, the heat generated by the arcing across the semiconductive gap assembly **450** is conducted to one or both of the meltable elements **464,** which causes the meltable elements **464** to melt (*e.g.*, soften). As illustrated in **FIG. 12****,** the melting of the meltable elements **464** permits the spring **463** to push the movable separator **462** in the direction **E2,** which forces the gap electrodes **443, 445** apart in directions **E3.** The gap electrodes **443, 445** are thereby spaced so far apart that the arcing between the gap electrodes **443, 445** can no longer be sustained. The fault current is thereby interrupted.

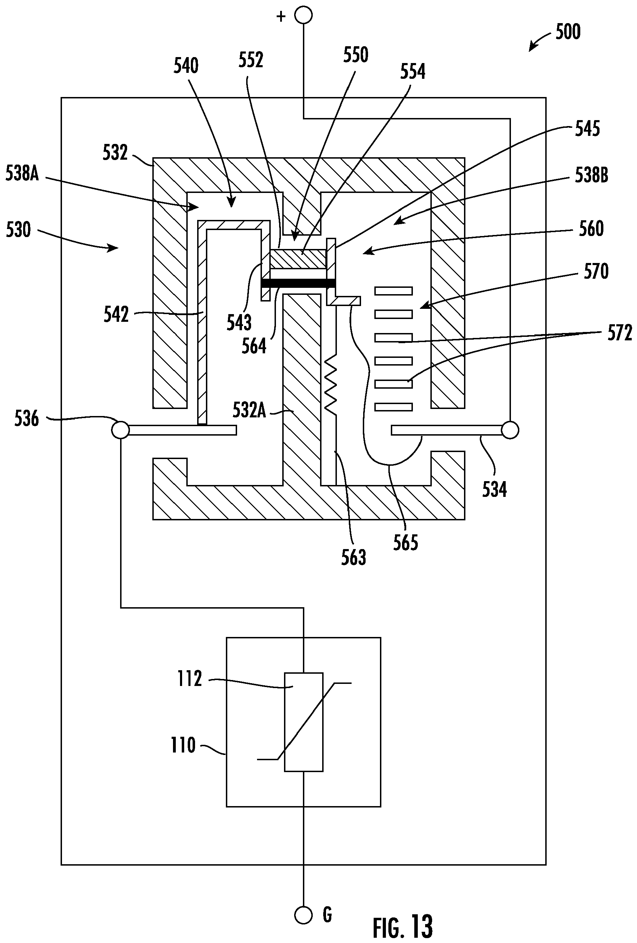

With reference to **FIG. 13****,** a fused SPD module **500** according to further embodiments is shown therein. The fused SPD module **500** includes an SGA fuse assembly **530** and may be used and constructed in the same manner as the fused SPD module **300,** except as follows.

The SGA fuse assembly **530** includes a module housing **532** and a partition wall **532A** that define a fuse chamber **538A** and a disconnect chamber **538B.** The SGA fuse assembly **530** further includes terminal electrodes **534, 536,** an SGA fuse element assembly **540,** a thermally-actuated disconnect mechanism **560,** a fusible flexible wire **565,** and a set **570** of deion plates **572.**

The SGA fuse element assembly **540** includes a fuse element **542** and a semiconductive gap assembly **550.** The fuse element **542** may be constructed the same as the fuse element **142.** The semiconductive gap assembly **550** includes a semiconductive or trigger gap **552,** a first gap electrode **543,** a second gap electrode **545,** and a semiconductive member **554** corresponding to the gap **152,** the gap electrode **143,** the gap electrode **145,** and the semiconductive member **154,** respectively. The first gap electrode **543** is an end of the fuse element **542.** The second gap electrode **545** is a movable contact forming a part of the disconnect mechanism **560.**

The disconnect mechanism **560** includes the movable contact **545,** a loading or biasing device *(e.g.,* a spring) **563,** a meltable retainer or element **564,** and the flexible conductor **565.** The meltable element **564** may be constructed and operate in the same manner as described for the meltable element **364.**

The gap **552** is defined by and between the opposing gap electrodes **543** and **545.** The semiconductive member **554** is positioned in the gap **552** and interposed between the gap electrodes **543** and **545.** The semiconductive member **554** is connected in electrical series between the fuse elements **542** and the movable contact **545.** In some embodiments and as illustrated, the opposed end faces of the semiconductive member **554** are each in electrical contact with a respective one of the gap electrodes **543, 545.**

The movable contact **545** is electrically connected to the terminal **536** by the flexible conductor **565.** The spring **563** loads, biases or pulls the movable contact **545** in a disconnect direction **E4.** The meltable element **564** holds the movable contact **545** in position relative to the gap electrode **543** against the load the spring **563.**

The SGA fuse assembly **530** is configured to operate in the same manner as the SGA fuse assembly **330** in response to surge current events.

The SGA fuse assembly **530** is configured to operate in the same manner as the SGA fuse assembly **330** in response to a low short circuit event (condition 4) discussed above). When a low short circuit event (condition 4) discussed above) occurs, the OPC **110** will supply the SGA fuse assembly **530** with a relatively low SPD short circuit current. During the low short circuit event, the voltage applied across the semiconductive gap assembly **550** by the low short circuit event exceeds the prescribed threshold flashover voltage of the semiconductive gap assembly **550.** In response, the voltage across the semiconductive gap assembly **550** initiates electrical arc flashover across the gap **552.**

The low short circuit fault current then conducted through the SGA fuse element assembly **540** is insufficient to interrupt the current by disintegrating the fuse element **542** or the fusible wire **565.** Instead, the heat generated by the arcing across the semiconductive gap assembly **550** is conducted to the meltable element **564,** which causes the meltable element **564** to melt *(e.g.,* soften). The melting of the meltable element **564** permits the spring **563** to displace or pull the gap electrode (movable contact) **545** away from the gap electrode **543,** thereby disconnecting the terminal **536** of the SGA fuse device **530** from the fuse element **542.** The fault current is thereby interrupted.

The SGA fuse assembly **530** differs from the SGA fuse assembly **330** in its response to a high short circuit (fault) current.

When a high short circuit event (condition 3) discussed above) occurs, the OPC **110** will supply the SGA fuse assembly **530** with a relatively high SPD short circuit current. The voltage applied across the gap **552** by the high short circuit event exceeds the prescribed threshold flashover voltage of the semiconductive gap assembly **550.** In response, the voltage across the semiconductive gap assembly **550** initiates electrical arc flashover across the gap **552** between the gap electrodes **543** and **545.** The semiconductive member **554** functions as a spark gap trigger that assists in initiating the flashover between the gap electrodes **543, 545** in the same manner as described above with regard to the semiconductive member **154.** The high fault current initially flows between the terminals **534, 536** through the fuse element **542,** across the gap **552,** and through the flexible fusible wire **565.**

The high fault current disintegrates the fuse element **542** and the fusible flexible wire **565.** As the high fault current disintegrates the flexible fusible wire **565,** the current is redirected to (flashes over to or arcs to) the deion plates **573** from the electrode **545** and/or the flexible fusible wire **565.** The current then flows through the set **570** of deion plates to the terminal **534** by arcing between the deion plates **573.** Each deion plate arc creates a voltage drop between the terminals. These voltage drops add together and increasingly reduce the voltage across the semiconductive gap assembly **550** to relatively low values, until the voltage across the semiconductive gap assembly **550** is less than the ignition voltage necessary to sustain the arcing between the gap electrodes **543, 545.** The voltage across the semiconductive gap assembly **550** is then also less than necessary to trigger flashover between the gap electrodes **543, 545** or to conduct current through or along the surface of the semiconductive member **554.** That is, at this lower voltage, the semiconductive member **554** operates as an electrical insulator between the gap electrodes **543, 545.** The SGA fuse assembly **530** is thereby opened at the semiconductive gap assembly **550** and the fault current through the SGA fuse assembly **530** and the fused SDP module **500** is cut off or interrupted.

In some embodiments, the fuse element or fuse elements as disclosed herein are bimetallic fuse elements. For the purpose of explanation, the construction and operation of a bimetallic fuse element **142** *(i.e.,* of the fuse assembly **130**) will be described. However, any or each of the fuse elements described herein (*e.g*., the fuse elements **144, 242, 342, 442, 444,** or **542)** may also be a bimetallic fuse element as described and may function in the same manner.

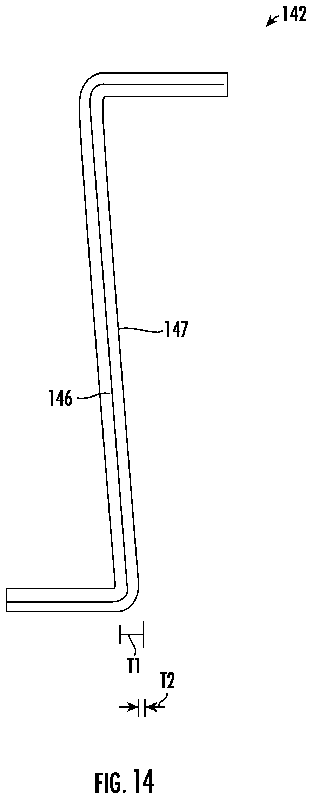

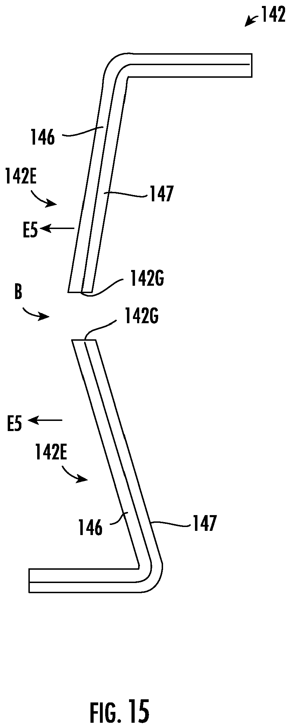

With reference to **FIGS. 14** and **15****,** the bimetallic fuse element **142** is a bimetallic strip including a first or inner metal band or layer **146** and a second or outer metal band or layer **147** mated *(e.g.,* face to face) with the inner metal layer **146** along the length of the fuse element **142.** The inner metal layer **146** and the outer metal layer **147** are formed of different metal compositions from one another. More particularly, the outer metal layer **147** is formed of a metal having a higher coefficient of thermal expansion than that of the inner metal layer **146.** When the fuse element **142** is heated, the different rates of thermal expansion between the metal layers **146, 147** will cause the fuse element **142** to bend or deform in a deformation direction **E5.**

In some embodiments, the bimetallic fuse element **142** further includes a third metal band or layer (not shown) mated *(e.g.,* face to face) with the inner metal layer **146** or the outer metal layer **147** along the length of the fuse element **142.** In some embodiments, the third metal layer is formed of a metal having a higher electrical conductivity than the metals or alloys forming the inner metal layer **146** and the outer metal band or layer **147.**

The metal layers **146, 147** may be formed of any suitable metals. In some embodiments, the inner metal layer **146** *(i.e.,* the low expansion side layer) is formed of FeNi36 nickel alloy, and the outer metal layer **147** *(i.e.,* the high expansion side layer) is formed of FeNi22Cr3 nickel alloy.

In some embodiments, the fuse element **142** has a specific thermal curvature in the range of 1 × 10⁻⁶ to 30 × 10⁻⁶ [K⁻¹] and a specific resistance in the range of 1 × 10⁻⁸ to 1 × 10⁻⁶ [Ω m].

In some embodiments, the fuse element **142** has a strip thickness T1 in the range of from about 0.5 mm to 2 mm.

In some embodiments, the inner metal layer **146** and the outer metal layer **147** each have a layer thickness **T2** in the range of from about 1/3 to 2/3 times the overall thickness **T1** of the fuse element **142.**

When the fuse assembly **130** is subjected to a high short circuit event, the high fault current will heat, melt and disintegrate the fuse element **142** as described above with reference to **FIGS. 1-5****.** As discussed above, the fuse element **142** will disintegrate or break apart at a midsection of the fuse element **142** to form a gap or break **B** as shown in **FIG. 15****,** for example. Once the fuse element **142** has broken, electrical arcing will occur between the opposed ends **142G** of the fuse element **142** at the break **B.** This arcing causes a portion or portions of the fuse element **142** at these opposed ends **142G** to quickly evaporate or disintegrate. The extinguishing agent **139,** the loss of material from the fuse element **142,** and/or the spatial distance between the opposed ends **142G** at the break **B** will then cause the electrical arcing to terminate, cease or be extinguished.

Additionally, the bimetallic fuse element **142** will bend or deform in directions **E5** in response to the heat generated in the bimetallic fuse element **142.** More particularly, in response to the heat generated in the remaining sections **142E** of the bimetallic fuse element **142** by the surge current flowing therethrough, the layers **146** and **147** are differentially expanded as discussed above. The differentially expanding layers **146** and **147** cause the sections **142E** to bend, deform or deflect in directions **E5.** This bending or deformation can assist in spacing apart the opposed ends **142G** at the break **B** to extinguish arcing. However, in some situations, the electrodes **134, 136** may be fully disconnected by the disintegration of the fuse elements **142, 144** before the sections **142E** bend or deform, or before the extent of the bending or deformation can appreciably contribute to the disconnection.

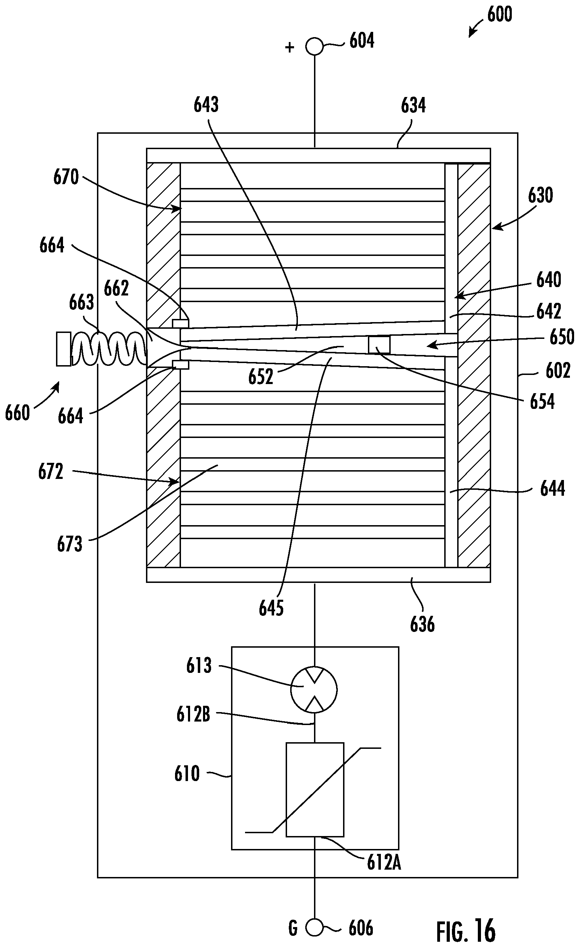

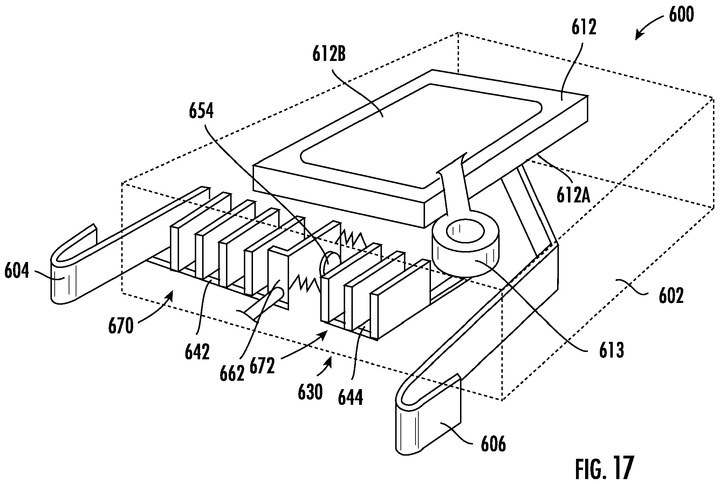

With reference to **FIGS. 16** and **17****,** a fused SPD module **600** according to further embodiments is shown therein. The fused SPD module **600** includes an SGA fuse assembly **630** and may be used and constructed in the same manner as the fused SPD module **400,** except as follows.

The fused SPD module **600** includes the SGA fuse assembly **630,** a module carrier or housing **602,** and module electrical terminals **604, 606** corresponding to the SGA fuse assembly **430,** the module housing **102,** and the module electrical terminals **104, 106.**

The SGA fuse assembly **630** includes a first terminal electrode **634,** a second terminal electrode **636,** a chamber **638,** an SGA fuse element assembly **640,** a thermally-actuated disconnect mechanism **660,** a first fuse element **642,** a second fuse element **644,** a first deion plate set **670** (including electrically conductive deion plates **673**), a second deion plate set **672,** a semiconductive gap assembly **650,** a semiconductive or trigger gap **652,** a first gap electrode **643,** a second gap electrode **645,** a semiconductive member **454,** a movable separator (insulating) **662,** a loading or biasing device (*e.g*., a spring) **663,** and two meltable retainers or elements **664** corresponding to the first terminal electrode **434,** the second terminal electrode **436,** the chamber **438,** the SGA fuse element assembly **440,** the thermally-actuated disconnect mechanism **460,** the first fuse element **442,** the second fuse element **444,** the first deion plate set **470,** the second deion plate set **472,** the semiconductive gap assembly **450,** the gap **452,** the first gap electrode **443,** the second gap electrode **445,** the semiconductive member **454,** the movable separator **462,** the loading device **463,** and meltable elements **464,** respectively. The housing **602** is shown in dashed lines in **FIG. 17** for clarity.

The fused SPD module **600** further includes an OPC **610** corresponding to the OPC **110** of the fused SPD module **400,** except that the OPC **610** includes both a varistor (*e.g*., MOV) **612** and a GDT **613.** The varistor **610** and the GDT **613** are provided in electrical series with one another and with the fuse assembly **630.** A first electrode **612A** electrically connects the varistor **612** to the terminal **606** and a second electrode **612B** electrically connects an opposing side of the varistor **612** to the fuse assembly **630.**

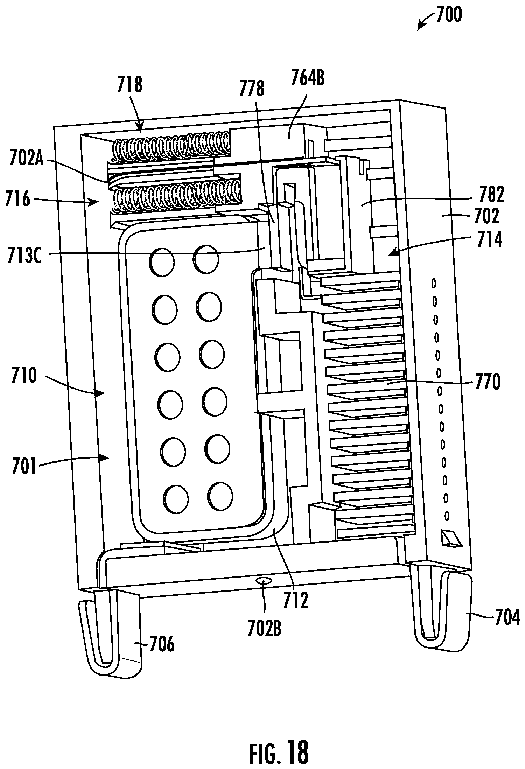

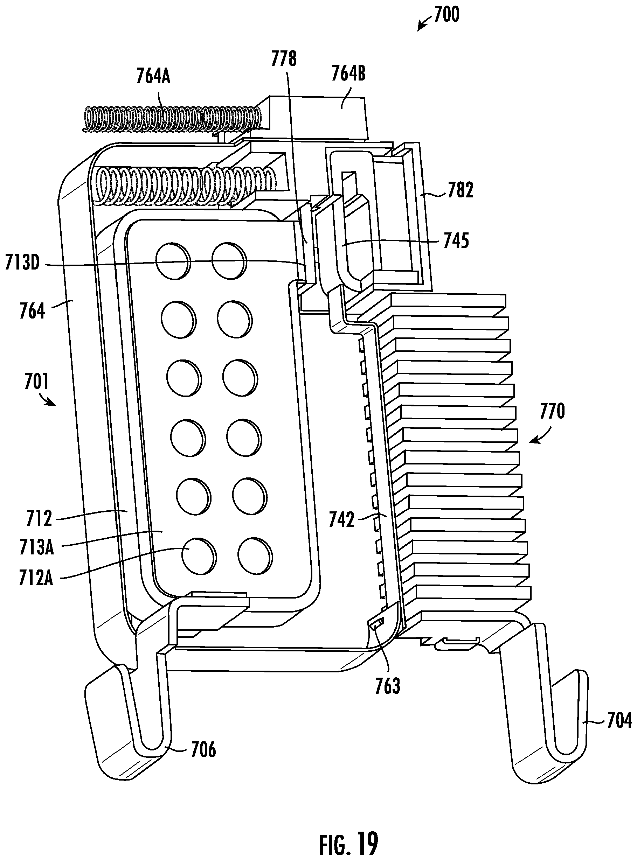

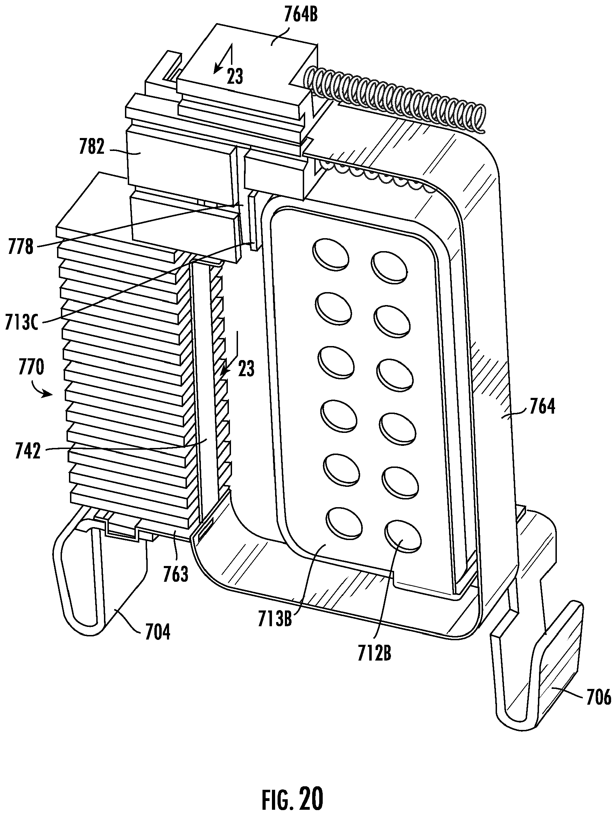

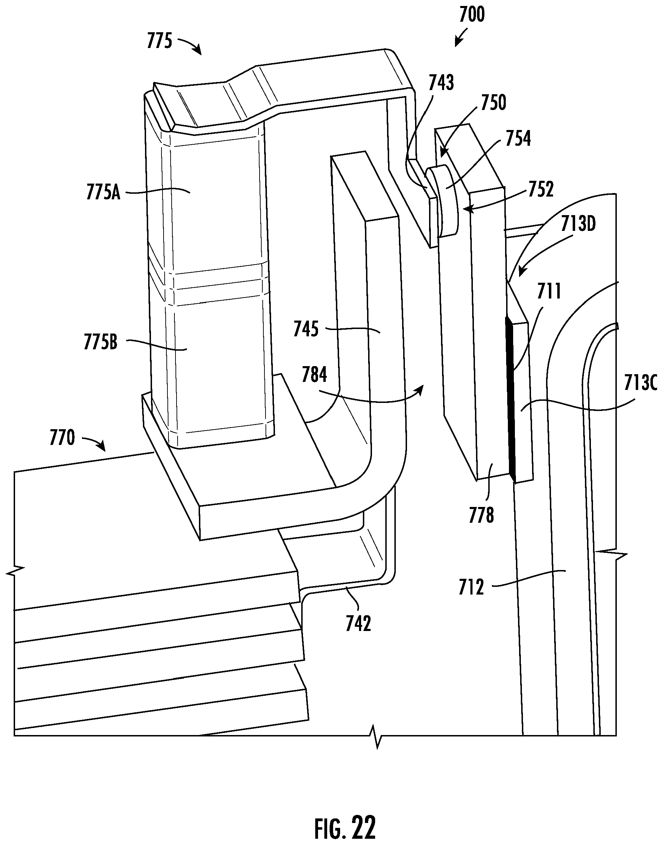

With reference to **FIGS. 18-27****,** a fused SPD module **700** according to further embodiments is shown therein. The fused SPD module **700** includes a module housing **702,** a first electrical contact or terminal **704,** a second electrical contact or terminal **706,** an overvoltage protection circuit (OPC) **710,** an integrated overcurrent protection circuit **714,** a thermal disconnect indicator mechanism **716,** and an overcurrent indicator mechanism **718.** The overcurrent protection circuit **714** and the OPC **710** are disposed in the housing **702,** and are electrically connected between the terminals **704** and **706** to form a fused SPD electrical circuit **701.**

In some embodiments, the fused SPD module **700** is provided, installed and used as a component in a protection circuit of a power supply circuit **10** in place of the SPD module **100** as shown in **FIG. 1****,** for example. In the power supply circuit **10,** the OPC **710** is in electrical series with the integrated overcurrent protection circuit **714,** and the OPC **710** and the overcurrent protection circuit **714** are in electrical parallel across sensitive equipment. The fused SPD module **700** is designed to protect the sensitive equipment from overvoltages and current surges. The fused SPD module **700** may also be connected to the power source via an upstream second fuse or circuit breaker **12.**

The overcurrent protection circuit **714** and the OPC **710** are disposed in the housing **702,** and are electrically connected between the terminals **704** and **706** to form a fused SPD electrical circuit **701.** The housing **702** may be formed of any suitable electrically insulating material. In some embodiments, the housing **132** is formed of a polymeric material *(e.g.,* a plastic), which may include glass fibers, or any other suitable electrically insulating material. The housing **702** may include an outer cover corresponding to the cover **802C** discussed below.

The OPC **710** includes a varistor **712.** In some embodiments, the varistor **712** is an MOV. The varistor **712** has a first side **712A** and an opposing second side **712B.** A first electrically conductive varistor electrode **713A** electrically connects the first side **712A** to the terminal **706.** A second electrically conductive varistor electrode **713B** contacts the second side **712B** and includes a joint tab **713C.**

The integrated overcurrent protection circuit **714** includes a thermal disconnect mechanism **760,** a spark gap assembly **780,** a fuse assembly **730,** a triggering circuit **775** (including a triggering (semiconductive) spark gap assembly **750**), and a main spark gap **784.**

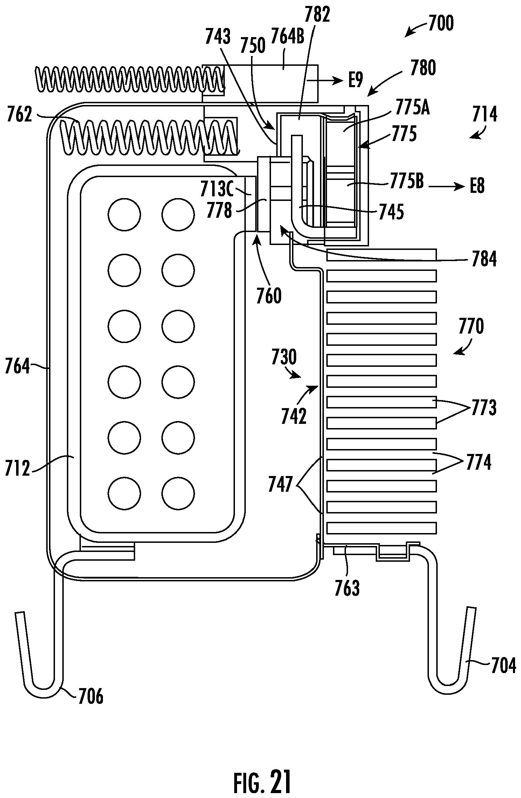

With reference to **FIG. 21****,** the spark gap assembly **780** includes a spark gap carrier **782,** a triggering electrode (first gap electrode) **743,** a thermal disconnect joint electrode (second gap electrode) **778,** and a movable deion plate (third gap electrode) **745.**

The electrodes **778, 743** are formed of a suitable electrically conductive metal.

The spark gap carrier **782** may be formed of an electrically nonconductive polymer, for example.

The triggering circuit **775** includes a varistor **775A** connected in electrical series with a GDT **775B,** and the triggering (semiconductive) spark gap assembly **750.** The triggering spark gap assembly **750** includes a triggering electrode (first gap electrode) **743,** a thermal disconnect joint electrode (second gap electrode) **778,** and a semiconductive or trigger gap **752** defined between the electrodes **743** and **778.** The triggering spark gap assembly **750** further includes a semiconductive member **754,** corresponding to and constructed as described herein for the semiconductive member **154.** The semiconductive member **754** spans the distance between and engages each of the electrodes **743** and **778.**

The main spark gap **784** is defined by and between the movable deion plate (third gap electrode) **745** and the thermal disconnect joint electrode **778.**

The fuse assembly **730** includes a deion plate set **770** and a fuse element **742.** The deion plate set **770** may be constructed and operate in the same manner as described for the deion plate set **470.** The deion plate set **770** includes a series of deion plates **773** that define a series of spark gaps **774** therebetween. The fuse element **742** may be constructed and operate in the same manner as described for the fuse element **142.**

The varistor **712,** the varistor electrodes **713A, 713B** (including the tab **713C**), and the deion plates **773** are mounted to remain stationary in or relative to the housing **702.** A portion of the fuse element **742** extends along the edges of the deion plates **773** *(e.g.,* in contact with or closely adjacent the deion plates **773**) as illustrated in **FIG. 21****,** for example. The fuse element **742** is electrically connected at one end to the movable deion plate **745** at one end and to the terminal **704** at its opposing end.

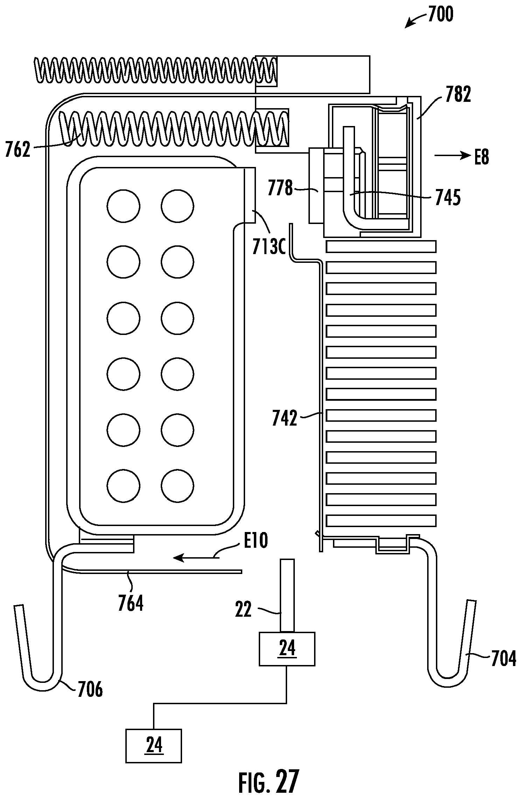

The spark gap carrier **782** is movably or slidably mounted in the housing **702** to move in a release direction **E8** from a ready position (as shown in **FIG. 21**) to an open position (as shown in **FIG. 27**)**.** The spark gap carrier **782** is biased, loaded, or urged in the direction **E8** by a spark gap carrier spring **762**. The disconnect joint electrode **778,** the triggering electrode **743**, the movable deion plate **745**, the varistor **775A,** the GDT **775B,** the main spark gap **784**, and the triggering spark gap assembly **750** (including the semiconductive member **754**) are mounted on the spark gap carrier **782** for movement therewith. The varistor **775A,** and the GDT **775B** are arranged in electrical series between the triggering electrode **743** and the movable deion plate **745**.

The thermal disconnect mechanism 760 includes the thermal disconnect joint electrode 778, the joint tab 713C, and a solder 711. The solder 711 bonds the thermal disconnect j oint electrode 778 to the joint tab 713C to form a releasable joint 713D. As discussed below, the solder 711 can be heated by heat generated by the varistor 712 and/or the main spark gap 784, thereby causing the solder 711 to melt or soften and release the thermal disconnect joint electrode 778 from the joint tab 713C.

The thermal disconnect indicator mechanism 716 includes the spark gap carrier **782,** the spring **762**, a retention spring **763,** an indicator element or strip **764,** a guide slot **702A** (defined in the housing **702**), and a remote switch hole **702B** (defined in the housing **702**).

The overcurrent indicator mechanism **718** includes an indicator member **764B,** a spring **764A,** the retention spring **763,** the indicator strip **764,** and the hole **702B.** The spring **764A** urges the indicator member **764B** in a direction **E9.**

The retention spring **763** is affixed to the terminal **706.** The retention spring **763** is disintegrable or meltable. The strip **764** is slidably seated in the guide slot **702A.** One end of the strip **764** is affixed to the retention spring **763.** The opposing end of the strip **764** is coupled to each of the spark gap carrier **782** and the indicator member **764B.** The spark gap carrier **782** and the indicator member **764B** are movable independently of one another such that either member **782, 764B** can pull the indicator strip **764** while the other member **782, 764A** remains stationary. The indicator strip **764** may be formed of a flexible, electrically nonconductive material.

According to some embodiments of the inventive concept, the fused SPD module **700** is configured to operate under the four different conditions discussed above with regard to the fused SPD module **100** (*i.e.,* 1) normal (stand by) operation; 2) an overvoltage or current surge event in which the fused SPD module **700** is designed to shunt an SPD surge impulse current to ground; 3) a high short circuit (fault) event; and 4) a low short circuit (fault) event).

During normal operation, the varistor **712** practically acts as an insulator. The voltage applied across the triggering spark gap assembly **750** is insufficient to initiate a spark across the trigger spark gap **752.** The fused SPD module **700** remains in the configuration shown in **FIG. 21** and no current is conducted through the fuse element **742.**

When an overvoltage or current surge event (*e.g.*, a transient power surge) applies a surge impulse current to the fused SPD circuit **701,** the varistor **712** will temporarily go to a low impedance state (*e.g.*, effectively becoming a short circuit), and the integrated overcurrent protection circuit **714** is supplied with an SPD surge impulse current. The varistor **712** is designed to shunt the surge impulse current associated with such events to ground to protect sensitive equipment. The SPD surge impulse current may be on the order of tens of kA, but will typically last only a short duration (in the range of from about tens of microseconds to a few milliseconds).

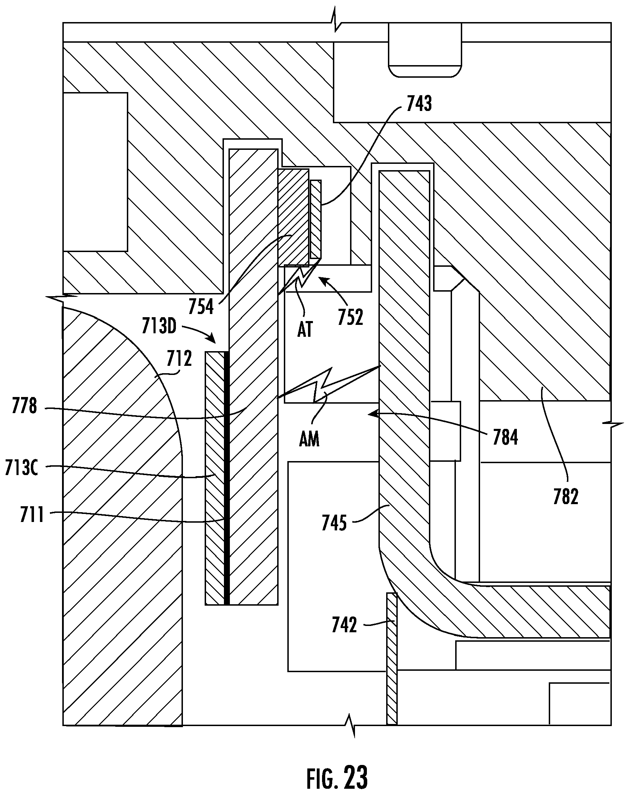

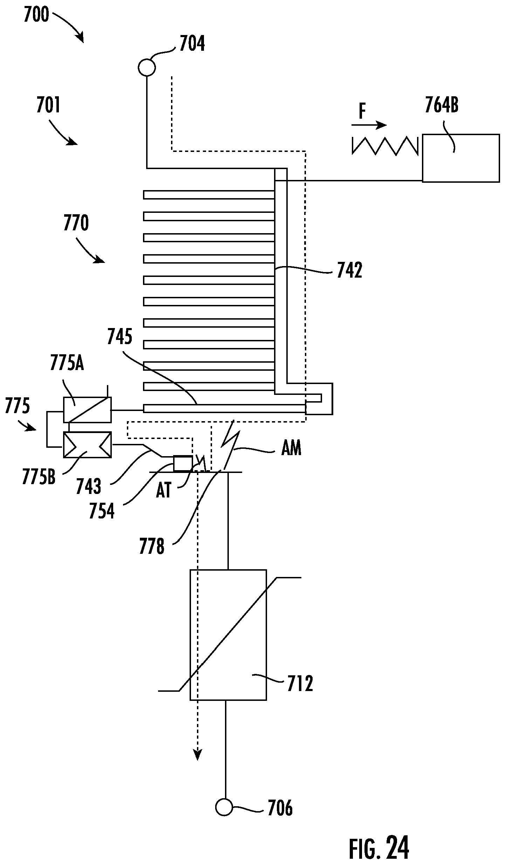

During the surge event, the current initially flows through the fuse element **742,** the movable deion plate **745,** the varistor **775A,** the GDT **775B,** and the triggering electrode **743,** across the triggering spark gap assembly **750,** and through the thermal disconnect joint electrode **778,** the electrode **713B,** the varistor **712,** and the electrode **713A** to the terminal **706,** as illustrated in **FIG. 24****.** The voltage applied across the trigger gap **752** by the surge event exceeds the prescribed threshold flashover voltage of the triggering spark gap assembly **750.** In response, the voltage across the triggering spark gap assembly **750** initiates electrical arc flashover **AT (****FIGS. 23** and **24****)** across the trigger gap **752.** That is, electrical arcing **AT** is generated between the gap electrodes **743** and **778.** The initiation of the electrical arc flashover **AT** is assisted by the semiconductive member **754** in response to the overvoltage developed across the electrodes **743, 778** in the same manner as described above for the semiconductive gap assembly **150** and the semiconductive member **154.**

Shortly after the start of the electrical arc flashover **AT** (*e.g*., within microseconds), the current flow triggers an electric arc flashover **AM** (**FIGS. 23** and **24**) across the main spark gap **784** between the electrodes **745** and **778.** The full surge current is thereby diverted from the triggering circuit **775** to the main spark gap **784.**

When the supplied surge current ceases, the voltage across the gap electrodes **743** and **778** and between the electrodes **745** and **778** drops below the ignition voltage, the flashover ends and the overcurrent protection circuit **714** stops conducting. The fused SPD module **700** may return to its standby mode. The fused SPD module **700** remains in its ready configuration and the indicator mechanisms **716, 718** are not triggered.

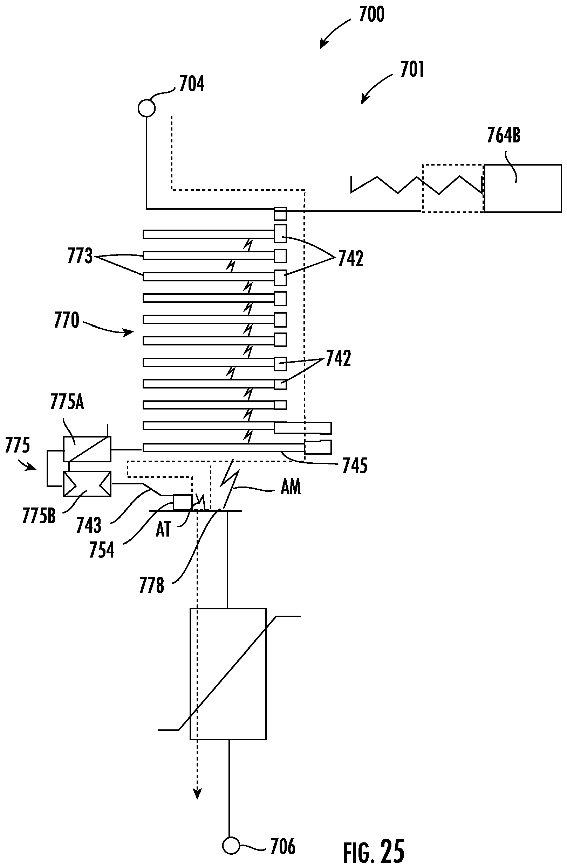

When a high short circuit event (condition 3) discussed above) occurs, the varistor **712** will supply the overcurrent protection circuit **714** with a relatively high SPD short circuit current. During the high short circuit event, the current initially flows through the fuse element **742,** the movable deion plate **745,** the varistor **775A,** the GDT **775B,** and the triggering electrode **743,** across the triggering spark gap assembly **750,** and through the thermal disconnect joint electrode **778,** the electrode **713B,** the varistor **712,** and the electrode **713A** to the terminal **706,** as illustrated in **FIG. 25****.** The voltage applied across the trigger gap **752** by the surge event exceeds the prescribed threshold flashover voltage of the triggering spark gap assembly **750.** In response, the voltage across the triggering spark gap assembly **750** initiates electrical arc flashover **AT** (**FIGS. 23** and **25**) across the trigger gap **752.** That is, electrical arcing **AT** is generated between the gap electrodes **743** and **778.** The initiation of the electrical arc flashover **AT** is assisted by the semiconductive member **754** in response to the overvoltage developed across the electrodes **743, 778** in the same manner as described above for the semiconductive gap assembly **150** and the semiconductive member **154.**

Shortly after the start of the electrical arc flashover **AT** (*e.g.*, within microseconds), the current flow triggers an electric arc flashover **AM** (**FIGS. 23** and **25**) across the main spark gap **784** between the electrodes **745** and **778.** The full surge current is thereby diverted from the triggering circuit **775** to the main spark gap **784.**

As illustrated in **FIG. 25****,** the high fault current disintegrates connecting sections **747** of the fuse element **742** between the deion plates **773.** As the high fault current disintegrates the connecting sections of the fuse elements, the current between the adjacent fuse element sections is redirected to arcing between the deion plates **773** at those locations. Each deion plate arc creates a voltage drop between the terminals. These voltage drops add together and increasingly reduce the voltage across the triggering spark gap assembly **750** and the main spark gap **784** to relatively low values, until the voltage across the triggering spark gap assembly **750** and the main spark gap **784** is less than the ignition voltage necessary to sustain the arcing between the gap electrodes **743** and **778** and between the electrodes **745** and **778.** The voltage across the triggering spark gap assembly **750** is then also less than necessary to trigger flashover between the gap electrodes **743, 778** or to conduct current through or along the surface of the semiconductive member **754.** That is, at this lower voltage, the semiconductive member **474** operates as an electrical insulator between the gap electrodes **743, 778.** The overcurrent protection circuit **714** is thereby opened at the triggering spark gap assembly **750** and the main spark gap **784,** and the fault current through the overcurrent protection circuit **714** and the fused SDP module **700** is cut off or interrupted. The thermal disconnect joint **713D** remains intact.

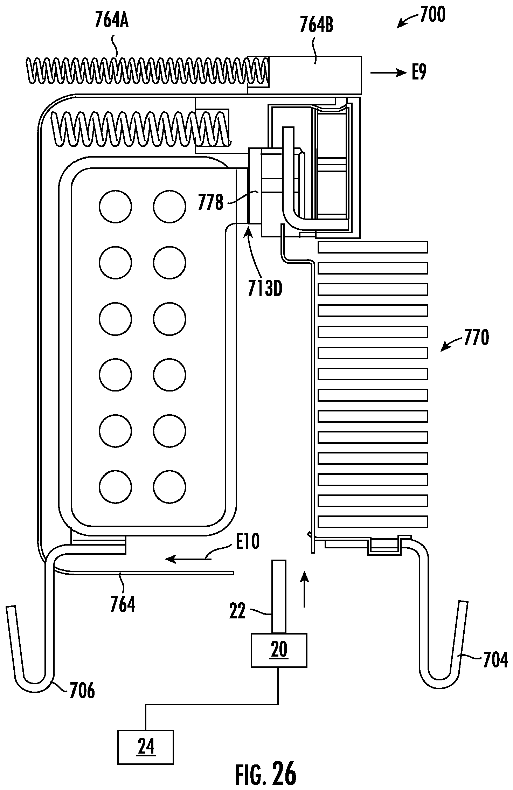

The high fault current also actuates the overcurrent indicator mechanism **718.** During the high fault current, the disintegration of the fuse element **742** will cause melting of the retention spring **763.** The melting of the retention spring **763** enables the spring **764A** to pull the indicator member **764B** and the indicator strip **764** in a direction **E10,** as illustrated in **FIG. 26****.** This displacement of the indicator strip **764** enables a pin **22** of a remote sensor switch **20** to move into the housing **702** through the hole **702B.** The change of state of the switch **20** is transmitted to a remote monitoring system **24** to indicate that the SPD module **700** has failed. The displacement of the indicator member **764B** can also serve as a local alert or indicator. For example, the indicator member **764B** may be visible through an opening in the housing.

When a low short circuit event (condition 4) discussed above) occurs, the varistor **712** will supply the overcurrent protection circuit **714** with a relatively low SPD short circuit current. During the low short circuit event, the current initially flows through the fuse element **742,** the movable deion plate **745,** the varistor **775A,** the GDT **775B,** and the triggering electrode **743,** across the triggering spark gap assembly **750,** and through the thermal disconnect joint electrode **778,** the electrode **713B,** the varistor **712,** and the electrode **713A** to the terminal **706** *(i.e.,* the same current path as illustrated in **FIG. 23**)**.** The voltage applied across the trigger gap **752** by the surge event exceeds the prescribed threshold flashover voltage of the triggering spark gap assembly **750.** In response, the voltage across the triggering spark gap assembly **750** initiates electrical arc flashover **AT** (**FIG. 23**) across the trigger gap **752.** That is, electrical arcing **AT** is generated between the gap electrodes **743** and **778.** The initiation of the electrical arc flashover **AT** is assisted by the semiconductive member **754** in response to the overvoltage developed across the electrodes **743, 778** in the same manner as described above for the semiconductive gap assembly **150** and the semiconductive member **154.**

Shortly after the start of the electrical arc flashover **AT** (*e.g*., within microseconds), the current flow triggers an electric arc flashover **AM** (**FIG. 23**) across the main spark gap **784** between the electrodes **745** and **778.** The full surge current is thereby diverted from the triggering circuit **775** to the main spark gap **784.**

The low short circuit fault current then conducted through overcurrent protection circuit **714** is insufficient to interrupt the current in the manner described above for a high short circuit fault current (*i.e.*, by disintegrating the fuse element **742**). Instead, the heat generated by the varistor **712** is conducted to the solder **711** via the tab **713C,** which causes the solder **711** to melt *(e.g.,* soften). Additionally, the heat generated in the electric arc **AM** is also conducted to the solder **711** via the electrode **778** to contribute to the softening of the solder **711.** As illustrated in **FIG. 27****,** the melting of the solder **711** permits the spark gap carrier spring **762** to force the spark gap carrier **782,** and thereby the electrode **778,** in the direction **E8** away from the tab **713C.** The electrode **778** and the tab **713C** are thereby spaced so far apart that the electrical circuit is opened therebetween. The fault current is thereby interrupted. The combination of the heating by the varistor **712** and the heating by the main spark gap **784** can increase the reliability and rate of response of the thermal disconnect mechanism **760.**

The low short circuit fault current also actuates the overcurrent indicator mechanism **718.** During the low fault current, the retention spring **763** is not melted. Instead, the release of the spark gap carrier **782** at the joint **713D** enables the spark gap carrier spring **762** to pull the spark gap carrier **782** and the indicator strip **764** in the direction **E10** (**FIG. 27**). This displacement of the indicator strip **764** enables the pin **22** of the remote sensor switch **20** to move into the housing **702** through the hole **702B.** The change of state of the switch **20** is transmitted to a remote monitoring system **24** to indicate that the SPD module **700** has failed. The displacement of the spark gap carrier **782** can also serve as a local alert or indicator. For example, the spark gap carrier **782** may be visible through an opening in the housing.

The spark gap carrier **782** and the indicator member **764B** are movable independently of one another. According to some embodiments, the spring force of the spring **764A** is less than the spring force of the retention spring **763,** which is less than the spring force of the spark gap carrier spring **762.** Once the thermal disconnect mechanism **760** operates, the spark gap carrier spring **762** must pull the strip **764** by bending the retention spring **763,** while the spring **764A** should not be able to bend the retention spring **763** otherwise a false indication would be executed. However, when the fused SPD module **700** responds to and interrupts a high fault current, the spring **764A** must be able to displace the strip **764** and the indicator member **764B.**

The varistor **775A** and the GDT **775B** are connected in electrical series with the semiconductive member **754** and in electrical parallel with the main spark gap **784.** The varistor **775A** and the GDT **775B** serve to cut off any continuation currents along or through the semiconductive member **754** after the main spark gap arc **AM** is initiated.

The fused SPD module **700** can provide several benefits. The SPD module **700** can withstand surge and lightning events, is current leakage free (as there is a gap in series that prevents current conduction through the varistor **712** in the event of an overvoltage or MOV derating), and can also interrupt currents from a very low level compared to standard circuit breakers and fuses (*e.g.*, from 50A or lower while standard fuses can disconnect from about 1.4 times the load current, which is around 300A as a minimum).

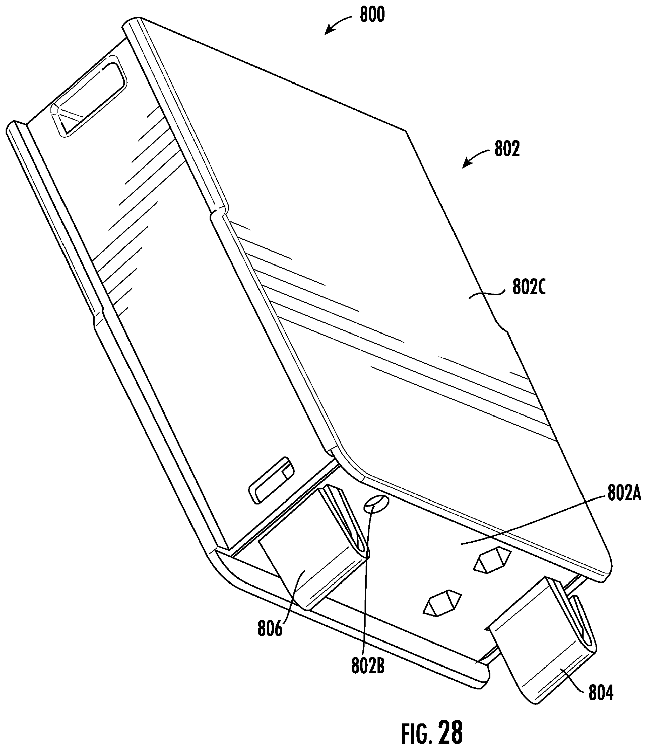

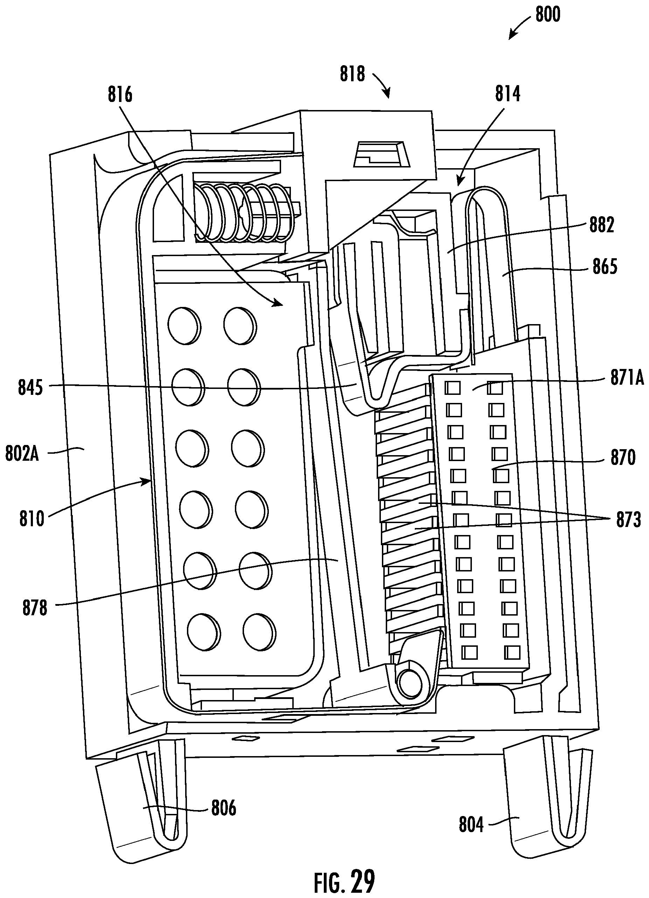

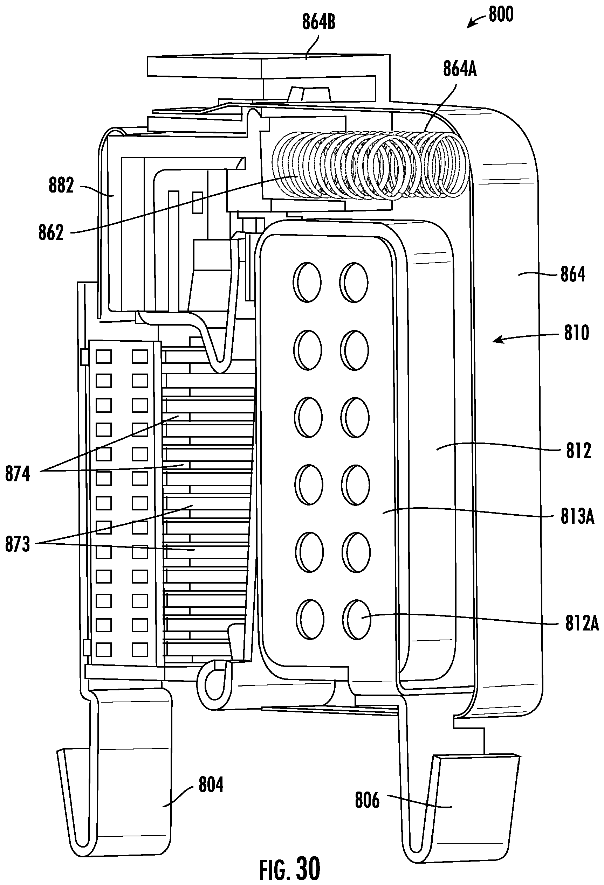

With reference to **FIGS. 28-34****,** an SPD module **800** according to further embodiments is shown therein. The SPD module **800** includes a module housing **802,** a first electrical contact or terminal **804,** a second electrical contact or terminal **806,** an overvoltage protection circuit (OPC) **810,** an integrated overcurrent protection circuit **814,** a thermal disconnect indicator mechanism **816,** and an overcurrent indicator mechanism **818.** The overcurrent protection circuit **814** and the OPC **810** are disposed in the housing **802,** and are electrically connected between the terminals **804** and **806** to form an SPD electrical circuit **801.**

In some embodiments, the SPD module **800** is provided, installed and used as a component in a protection circuit of a power supply circuit **10** in place of the SPD module **100** as shown in **FIG. 1****,** for example. In the power supply circuit **10,** the OPC **810** is in electrical series with the integrated overcurrent protection circuit **814,** and the OPC **810** and the overcurrent protection circuit **814** are in electrical parallel across sensitive equipment. The SPD module **800** is designed to protect the sensitive equipment from overvoltages and current surges. The SPD module **800** may also be connected to the power source via an upstream fuse or circuit breaker **12.**

The housing **802** may be formed of the same material as described for the housing **702.** The housing **802** includes an inner housing member or frame **802A** and an outer cover **802C.**

The OPC **810** includes a varistor **812.** In some embodiments, the varistor **812** is an MOV. The varistor **812** has a first side **812A** and an opposing second side **812B.** A first electrically conductive varistor electrode **813A** electrically connects the first side **812A** to the terminal **806.** A second electrically conductive varistor electrode **813B** contacts the second side **812B** and includes a joint tab **813C.**

The integrated overcurrent protection circuit **814** includes a thermal disconnect mechanism **860,** a spark gap assembly **880,** a flexible electrical conductor **865,** an arc chute or deion chamber **871,** a triggering circuit **875** (including a triggering (semiconductive) spark gap assembly **850**), a main spark gap **884,** and a secondary spark gap **885.**

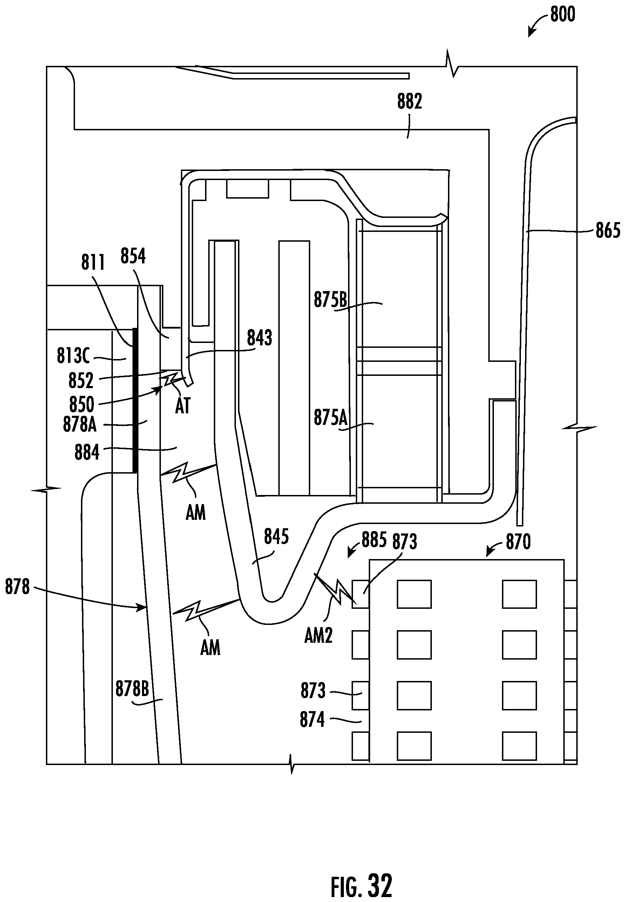

With reference to **FIG. 32****,** the spark gap assembly **880** includes a spark gap carrier **882,** a thermal disconnect joint electrode (second gap electrode) **878,** a triggering electrode (first gap electrode) **843,** and a movable deion plate **845** corresponding to and constructed as described for the spark gap carrier **782,** the thermal disconnect joint electrode (second gap electrode) **778,** the triggering electrode (first gap electrode) **743,** and the movable deion plate **745,** except as shown and as discussed below.

The triggering circuit **875** includes a varistor **875A** connected in electrical series with a GDT **875B,** and the triggering (semiconductive) spark gap assembly **850.** The triggering spark gap assembly **850** includes the triggering electrode (first gap electrode) **843,** the thermal disconnect joint electrode (second gap electrode) **878,** and a semiconductive or trigger gap **852** defined between the electrodes **843** and **878.** The triggering spark gap assembly **850** further includes a semiconductive member **854,** corresponding to and constructed as described herein for the semiconductive member **154.** The semiconductive member **854** spans the distance between and engages each of the electrodes **843** and **878.**

A lower end **878B** of the thermal disconnect joint electrode **878** is mounted on a post **803** of the housing **802** such that the thermal disconnect joint electrode **878** can pivot in a release direction **E12** away from the joint tab **813C.**

The main spark gap **884** is defined by and between the movable deion plate (third gap electrode) **845** and an opposing upper portion **878A** of the thermal disconnect joint electrode **878.** In some embodiments and as illustrated, the main spark gap **884** is a horn spark gap.

The deion chamber **871** includes an arc chute or deion plate set **870** and electrically insulating plate supports **871A.** The deion plate set **870** may be constructed and operate in the same manner as described for the deion plate set **770,** except as shown and as discussed below. The deion plate set **870** includes a series of arc chute or deion plates **873** that define a series of spark gaps **874** therebetween. Unlike the SPD **700,** the SPD **800** does not include a fuse element corresponding to the fuse element **742.** Instead, the deion plate set **870** is electrically floating between the terminal **704** and the varistor **812.**

The secondary spark gap **885** is defined between the movable deion plate **845** and the uppermost deion plate **873** *(i.e.,* the deion plate **873** closest to the movable deion plate **845**).

The varistor **812,** the varistor electrodes **813A, 813B** (including the tab **813C**), and the deion plates **873** are mounted to remain stationary in or relative to the housing **802.**

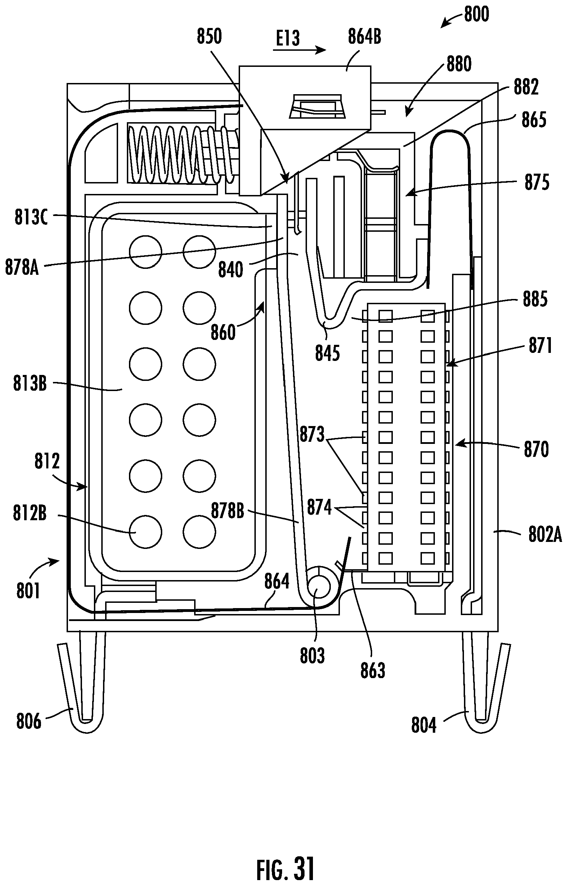

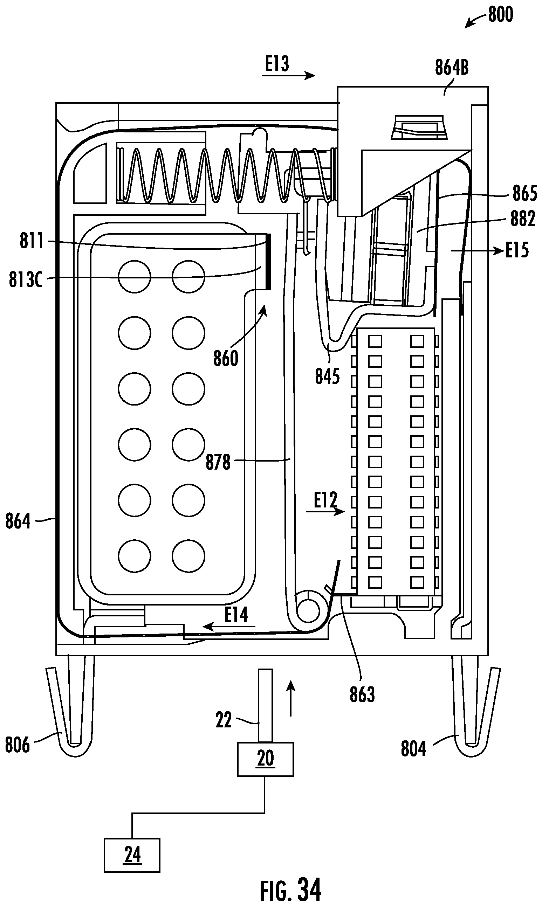

The spark gap carrier **882** is movably or slidably mounted in the housing **802** to move in a release direction **E15** from a ready position (as shown in **FIG. 31**) to an open position (as shown in **FIG. 34**). The spark gap carrier **882** is biased, loaded, or urged in the direction **E15** by a spark gap carrier spring **862.** The disconnect joint electrode **878,** the triggering electrode **843,** the movable deion plate **845,** the varistor **875A,** the GDT **875B,** the main spark gap **884,** and the triggering spark gap assembly **850** (including the semiconductive member **854**) are mounted on the spark gap carrier **882** for movement therewith in the same manner described for the spark gap assembly **780.** The varistor **875A** and the GDT **875B** are arranged in electrical series between the triggering electrode **843** and the movable deion plate **845.**

The thermal disconnect mechanism **860** includes the thermal disconnect joint electrode **878,** the joint tab **813C,** and a solder **811.** The solder **811** bonds the thermal disconnect j oint electrode **878** to the joint tab **813C** to form a releasable joint **813D.** As discussed below, the solder **811** can be heated by heat generated by the varistor **812** and/or the main spark gap **884,** thereby causing the solder **811** to melt or soften and release the thermal disconnect joint electrode **878** from the joint tab **813C.**

The thermal disconnect indicator mechanism **816** includes the spark gap carrier **882,** the spring **862,** a retention spring **863,** an indicator element or strip **864,** a guide slot **802A** (defined in the housing **802**), and a remote switch hole **802B** (defined in the housing **802**).

The overcurrent indicator mechanism **818** includes an indicator member **864B,** a spring **864A,** the retention spring **863,** the indicator strip **864,** and the hole **802B.** The spring **864A** urges the indicator member **864B** in a direction **E13.**

The retention spring **863** is affixed to the lower end of the deion chamber **871.** The retention spring **863** is disintegrable or meltable. The strip **864** is slidably seated in the guide slot **802A.** One end of the strip **864** is affixed to the retention spring 863. The opposing end of the strip **864** is coupled to each of the spark gap carrier **882** and the indicator member **864B.** The spark gap carrier **882** and the indicator member **864B** are movable independently of one another such that each member **882, 864B** can pull the indicator strip **864** while the other member **882, 864A** remains stationary. The indicator strip **864** may be formed of a flexible, electrically nonconductive material.

According to some embodiments of the inventive concept, the SPD module **800** is configured to operate under the four different conditions discussed above with regard to the fused SPD module **100** *(i.e.,* 1) normal (stand by) operation; 2) an overvoltage or current surge event in which the SPD module **800** is designed to shunt an SPD surge impulse current to ground; 3) a high short circuit (fault) event; and 4) a low short circuit (fault) event).

During normal operation, the varistor **812** practically acts as an insulator. The voltage applied across the triggering spark gap assembly **850** is insufficient to initiate a spark across the triggering spark gap assembly **850.** The SPD module **800** remains in the configuration shown in **FIG. 31** and no current is conducted through the triggering spark gap assembly **850** or the main spark gap **884.**

When an overvoltage or current surge event (*e.g.,* a transient power surge) applies a surge impulse current to the fused SPD circuit **801,** the varistor **812** will temporarily go to a low impedance state (*e.g*., effectively becoming a short circuit), and the integrated overcurrent protection circuit **814** is supplied with an SPD surge impulse current. The varistor **812** is designed to shunt the surge impulse current associated with such events to ground to protect sensitive equipment. The SPD surge impulse current may be on the order of tens of kA, but will typically last only a short duration (in the range of from about tens of microseconds to a few milliseconds).

During the surge event and with reference to **FIGS. 31** and **32****,** the current initially flows through the terminal **804,** the flexible conductor **865,** the movable deion plate **845,** the varistor **875A,** the GDT **875B,** and the triggering electrode **843,** across the triggering spark gap assembly **850,** and through the thermal disconnect joint electrode **878,** the electrode **813B,** the varistor **812,** and the electrode **813A** to the terminal **806.** The voltage applied across the trigger gap **852** by the surge event exceeds the prescribed threshold flashover voltage of the triggering spark gap assembly **850.** In response, the voltage across the triggering spark gap assembly **850** initiates electrical arc flashover **AT** (as illustrated in **FIG. 32**) across the trigger gap **852.** That is, electrical arcing **AT** is generated between the gap electrodes **843** and **878.** The initiation of the electrical arc flashover **AT** is assisted by the semiconductive member **854** in response to the overvoltage developed across the electrodes **843, 878** in the same manner as described above for the semiconductive gap assembly **150** and the semiconductive member **154.**

Shortly after the start of the electrical arc flashover **AT** (*e.g.*, within microseconds), the current flow triggers an electric arc flashover **AM** (as illustrated in **FIG. 32**) across the main spark gap **884** between the electrodes **845** and **878.** The full surge current is thereby diverted from the triggering circuit **875** to the main spark gap **884.**

When the supplied surge current ceases, the voltage across the gap electrodes **843** and **878** and between the electrodes **845** and **878** drops below the ignition voltage, the flashover ends and the overcurrent protection circuit **814** stops conducting. The SPD module **800** may return to its standby mode. The SPD module **800** remains in its ready configuration and the indicator mechanisms **816, 818** are not triggered.

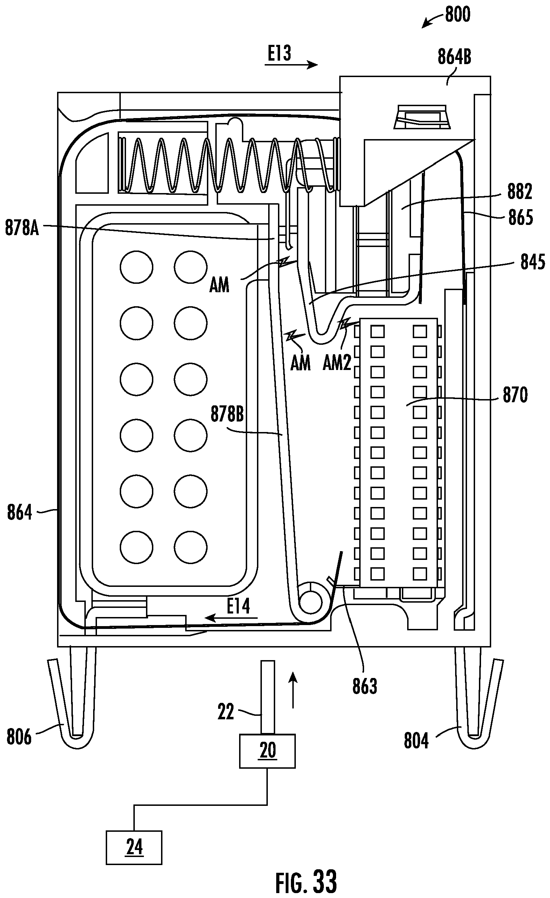

When a high short circuit event (condition 3) discussed above) occurs, the varistor **812** will supply the overcurrent protection circuit **814** with a relatively high SPD short circuit current. With reference to **FIGS. 32** and **33****,** during the high short circuit event, the current initially flows through the terminal **804,** the flexible conductor **865,** the movable deion plate **845,** the varistor **875A,** the GDT **875B,** and the triggering electrode **843,** across the triggering spark gap assembly **850,** and through the thermal disconnect joint electrode **878,** the electrode **813B,** the varistor **812,** and the electrode **813A** to the terminal **806.** The voltage applied across the trigger gap **852** by the surge event exceeds the prescribed threshold flashover voltage of the triggering spark gap assembly **850.** In response, the voltage across the triggering spark gap assembly **850** initiates electrical arc flashover **AT** (**FIGS. 32** and **33**) across the trigger gap **852.** That is, electrical arcing **AT** is generated between the gap electrodes **843** and **878.** The initiation of the electrical arc flashover **AT** is assisted by the semiconductive member **854** in response to the overvoltage developed across the electrodes **843, 878** in the same manner as described above for the semiconductive gap assembly **150** and the semiconductive member **154.**

Shortly after the start of the electrical arc flashover **AT** (*e.g.*, within microseconds), the current flow triggers an electric arc flashover **AM** (**FIGS. 32** and **33**) across the main spark gap **884** between the electrodes **845** and **878.** The full surge current is thereby diverted from the triggering circuit **875** to the main spark gap **884.**

As illustrated in **FIGS. 32** and **33****,** after a period of time (*e.g.*, from about 0.3 to 1 milliseconds), the electric arc flashover **AM** migrates to the secondary spark gap **885** to form an electric arc **AM2** across the secondary spark gap **885** between the electrode **845** and the upper deion plate **873.**

The arcing **AM2** is redirected to arcing between the deion plates **873.** Each deion plate arc creates a voltage drop between the electrode **845** and the electrode **878** (and thereby between the terminals **804, 806**). These voltage drops add together increasing the voltage between the terminal **804** and the electrode **878** to relatively high values, until the voltage across the deion chamber **871** (and between the terminals **804** and **806**) is higher than the power system voltage. The voltage drop developed on the deion chamber **871** opposes the mains voltage thus the fault current is rapidly reduced and eventually extinguished.

Thus, it will be appreciated that the electrical arc flashover **AT** triggers the electric arc flashover **AM,** which during high fault currents expands and propagates to the deion chamber **871.** The expansion and propagation are driven by electromagnetic and acoustical forces. Once the arc **AM2** enters the deion chamber **871,** it is split into a plurality of smaller arcs and cooled down.

According to some embodiments, the SPD module **800** is further provided with a trigger disabling mechanism that, in response to the displacement of the indicator member **864B** as discussed below (*i.e.*, in direction **E13,** upon release of the indictor strip **864** by the melted retention spring **863**), disables the triggering circuit **875.** For example, the trigger disabling mechanism may move the gap electrode **843** away from the disconnect electrode **878.** By way of further example, the movement of the indicator member **864** or other movement will disconnect the gap electrode **843** from the trigger MOV **875A.** Once the triggering circuit **875** is thus opened or disabled, further triggering of the main spark gap **884** is prevented.

The overcurrent protection circuit **814** is thereby opened at the triggering spark gap **850** and the spark gaps **884, 885** and the fault current through the overcurrent protection circuit **814** and the SDP module **800** is cut off or interrupted. The thermal disconnect joint **813D** remains intact.

It will be appreciated that a surge current will be relatively short in duration (in some embodiments, less than 0.5 milliseconds) and a high fault current will relatively long in duration (in some embodiments, at least 1 milliseconds). A surge current will not sustain the arc **AM** long enough to enable the arc **AM** to move or migrate to the secondary spark gap **885** and the deion chamber **870.** As a result, the current is not directed through the deion chamber **870** during a surge event. By contrast, the high fault current (in a high short circuit event) will sustain the arc **AM** long enough to enable the arc **AM** to move or migrate to the secondary spark gap **885** so that the current is directed through the deion chamber **870** during a high short circuit event.

The high fault current also actuates the overcurrent indicator mechanism **818.** During the high fault current, the arcing between the lower deion plates **873** proximate the retention spring **863** will cause the retention spring **863** to melt. The melting of the retention spring **863** enables the spring **864A** to pull the indicator member **864B** in the direction **E13** and the indicator strip **864** in a direction **E14,** as illustrated in **FIG. 33****.** This displacement of the indicator strip **864** enables a pin **22** of a remote sensor switch **20** to move into the housing **802** through the hole **802B.** The change of state of the switch **20** is transmitted to a remote monitoring system **24** to indicate that the SPD module **700** has failed. The displacement of the indicator member **864B** can also serve as a local alert or indicator. For example, the indicator member **864B** may be visible through an opening in the housing.

When a low short circuit event (condition 4) discussed above) occurs, the varistor **812** will supply the overcurrent protection circuit **814** with a relatively low SPD short circuit current. With reference to **FIGS. 32** and **34****,** during the low short circuit event, the current initially flows through the terminal **804,** the flexible conductor **865,** the movable deion plate **845,** the varistor **875A,** the GDT **875B,** and the triggering electrode **843,** across the triggering spark gap assembly **850,** and through the thermal disconnect joint electrode **878,** the electrode **813B,** the varistor **812,** and the electrode **813A** to the terminal **806.** The voltage applied across the trigger gap **852** by the surge event exceeds the prescribed threshold flashover voltage of the triggering spark gap assembly **850.** In response, the voltage across the triggering spark gap assembly **850** initiates electrical arc flashover **AT** (**FIG. 32**) across the trigger gap **852.** That is, electrical arcing **AT** is generated between the gap electrodes **843** and **878.** The initiation of the electrical arc flashover **AT** is assisted by the semiconductive member **854** in response to the overvoltage developed across the electrodes **843, 878** in the same manner as described above for the semiconductive gap assembly **150** and the semiconductive member **154.**

Shortly after the start of the electrical arc flashover **AT** (e.g., within microseconds), the current flow triggers an electric arc flashover **AM** (**FIG. 32**) across the main spark gap **884** between the electrodes **845** and **878.** The full surge current is thereby diverted from the triggering circuit **875** to the main spark gap **884.**

The low short circuit fault current then conducted through overcurrent protection circuit **814** is insufficient to interrupt the current in the manner described above for a high short circuit fault current. Instead, the heat generated by the varistor **812** is conducted to the solder **811** via the tab **813C,** which causes the solder **811** to melt (*e.g.*, soften). Additionally, the heat generated in the electric arc **AM** is also conducted to the solder **811** via the disconnect electrode **878** to contribute to the softening of the solder **811.** As illustrated in **FIG. 34****,** the melting of the solder **811** permits the spark gap carrier spring **862** to force the spark gap carrier **882,** and thereby the disconnect electrode **878,** in the direction **E12** away from the tab **813C.** The electrode **878** and the tab **813C** are thereby spaced so far apart that the electrical circuit is opened therebetween. The fault current is thereby interrupted. The combination of the heating by the varistor **812** and the heating by the main spark gap **884** can increase the reliability and rate of response of the thermal disconnect mechanism **860.**

Thus, it can be seen that the solder **811** is meltable in response to overheating in the SPD module **800** (by heat generated in the varistor **812** and the spark gap **884**), and the thermal disconnector mechanism **860** is configured to displace the thermal disconnect joint electrode **878** away from the varistor electrode **813B** and thereby electrically disconnect the varistor **812** from the spark gap **884.** The spark gap **884** is defined by the electrodes **878** and **845.** The displaceable thermal disconnect joint electrode **878** thus serves as both one of the spark gap electrodes and the moveable disconnect element of the thermal disconnector mechanism **860.**

The low short circuit fault current also actuates the overcurrent indicator mechanism **818.**

During the low fault current, the retention spring **863** is not melted. Instead, the release of the spark gap carrier **882** at the joint **813D** enables the spark gap carrier spring **862** to pull the spark gap carrier **882,** the indicator member **864B,** and the indicator strip **864** in the directions **E13, E14.** This displacement of the indicator strip **864** enables the pin **22** of the remote sensor switch **20** to move into the housing **802** through the hole **802B.** The change of state of the switch **20** is transmitted to a remote monitoring system **24** to indicate that the SPD module **800** has failed. The displacement of the indicator member **864B** can also serve as a local alert or indicator. For example, the indicator member **864B** may be visible through an opening in the housing.

The spark gap carrier **882** and the indicator member **864B** are movable independently of one another. According to some embodiments, the spring force of the spring **864A** is less than the spring force of the retention spring **863,** which is less than the spring force of the spark gap carrier spring **862.** Once the thermal disconnect mechanism **860** operates, the spark gap carrier spring **862** must pull the strip **864** by bending the retention spring **863,** while the spring **864A** should not be able to bend the retention spring **863** otherwise a false indication would be executed. However, when the SPD module **800** responds to and interrupts a high fault current, the spring **864A** must be able to displace the strip **864** and the indicator member **864B** upon melting of the retention spring **863.**

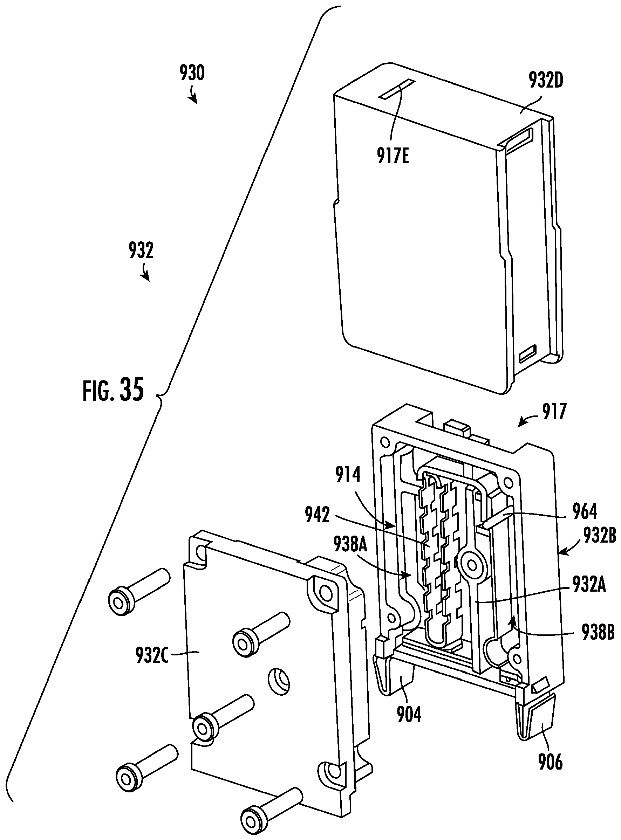

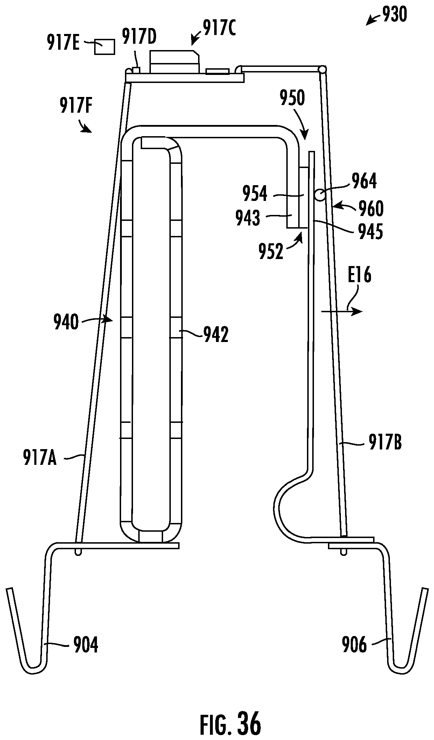

With reference to **FIGS. 35** and **36****,** an SGA fuse assembly **930** according to further embodiments is shown therein.

In some embodiments, the SGA fuse assembly **930** is provided, installed and used as a component in a protection circuit of a power supply circuit **10** in place of the SGA fuse assembly **130** as shown in **FIG. 1****,** for example.

The SGA fuse assembly **930** is configured to operate in the same manner as the SGA fuse assembly **330** in response to surge current events and high short circuit (fault) currents. The SGA fuse assembly **930** includes a first electrical contact or terminal **904,** a second electrical contact or terminal **906,** module housing assembly **932,** an integrated overcurrent protection circuit **914,** and an electronic indicator system **917.**

The integrated overcurrent protection circuit **914** includes an SGA fuse element assembly **940** and a thermally-actuated disconnect mechanism **960.** The thermally-actuated disconnect mechanism **960** corresponds to the disconnect mechanism **360** and is provided to interrupt a low short circuit (fault) current in the case of a low short circuit (fault) current event.

The module housing assembly **932** includes a first inner housing member **932B,** a second inner housing member **932C,** and a cover **932D** that fitted over the housing members **932B, 932C.** The housing member **932B** includes an integral partition wall **932A** and an integral meltable feature or post **964.** The housing members **932B, 932C** form an internal chamber. The partition wall **932A** divides the chamber **938** into a fuse chamber **938A** and a disconnect chamber **938B.**

The SGA fuse element assembly **940** includes a fuse element **942** and a semiconductive gap assembly **950.** The fuse element **942** may be constructed the same as the fuse element **142.** The semiconductive gap assembly **950** includes a semiconductive or trigger gap **952,** a first gap electrode **943,** a second gap electrode **945,** and a semiconductive member **954** corresponding to the trigger gap **152,** the gap electrode **143,** the gap electrode **145,** and the semiconductive member **154,** respectively. The first gap electrode **943** is an end of the fuse element **942.** The second gap electrode **945** is a movable contact forming a part of the disconnect mechanism **960.**

The thermal disconnect mechanism **960** includes the movable contact **945** and a meltable retainer element **964.** According to some embodiments (*e.g.*, as illustrated), the movable contact **945** is a spring leg. According to some embodiments, the meltable retainer element **964** is a post or other feature forming a part of or attached to the housing assembly **932.** In the illustrated disconnect mechanism **960,** the movable contact **945** is a resilient metal spring strip and the meltable retainer element **964** is a post forming a part of the inner housing member **932B.** The post **964** holds the spring leg **945** in an elastically deflected state as shown in **FIG. 36** such that the spring **945** applies a load in a disconnect direction **E16** away from the trigger gap **952.** The meltable post **964** holds the spring **945** in position relative to the gap electrode **943** against the deflection load of the spring leg **945.**

The trigger gap **952** is defined by and between the opposing gap electrodes **943** and **945.** The semiconductive member **954** is positioned in the gap **952** and interposed between the gap electrodes **943** and **945.** The semiconductive member **954** is connected in electrical series between the fuse element **942** and the movable contact **945.** In some embodiments and as illustrated, the opposed end faces of the semiconductive member **954** are each in electrical contact with a respective one of the gap electrodes **943, 945.**

The indicator system **917** includes a first wire **917A,** a second wire **917B,** a printed circuit board assembly **917C** (including a light emitting diode (LED) **917D**), and a lens **917E.** The wire **917A** electrically connects the PCB **917C** to the terminal **904** and the wire **917B** electrically connects the PCB **917C** to the terminal **906.** When illuminated, the LED **917D** is visible exterior of the housing assembly **932** through the lens **917E** to alert an observer that the SGA fuse assembly **930** has failed. It will be appreciated that the wires **917A, 917B** and PCB **917C** form an electrical indicator circuit **917F** parallel to the overcurrent protection circuit **914** (formed by the SGA fuse element assembly **940** and the thermally-actuated disconnect mechanism **960**) between the terminals **704, 706.**

The SGA fuse assembly **930** is configured to respond to surge current events, high short circuit events, and low short circuit events in the same manners as described for the SGA fuse assembly **330,** except as follows. The deflected spring leg **945** serves as the second gap electrode in place of the movable contact **345.** The thermal disconnect mechanism **960** operates in place of the thermal disconnect mechanism **360.** The indicator system **917** is triggered in response failure of the SGA fuse assembly **930** (as discussed below).

Regarding the operation of the thermal disconnect mechanism **960,** as discussed above with regard to the SGA fuse assembly **330,** the low short circuit fault current conducted through the SGA fuse element assembly **940** is insufficient to interrupt the current in the manner described above for a high short circuit fault current. Instead, the heat generated by the arcing across the semiconductive gap assembly **950** is conducted to the meltable post **964,** which causes the meltable post **964** to melt (*e.g.*, soften). The melting of the meltable post **964** permits the deflected spring leg (movable gap electrode) **945** to pull away from the gap electrode **943** in direction **E16,** thereby disconnecting the terminal **906** from the fuse element **942.** The fault current is thereby interrupted.

The indicator system **917** operates as both a thermal disconnect indicator system and an overcurrent indicator system. The PCB **917C** has a threshold current level below which the LED **917D** is illuminated and above which the LED **917D** is not illuminated. During normal operation, high fault current events, and low fault current events when the SGA fuse element assembly **940** is intact and the thermal disconnect mechanism **960** is not actuated (*i.e*., the spring leg **945** is in contact with the semiconductive member **954**), the current between the terminals **904, 906** is divided between the overcurrent protection circuit **914** and the indicator circuit **917F** so that the current through the PCB **917C** remains below the threshold current level.

However, when the SGA fuse assembly **930** experiences a high fault current that disintegrates the fuse element **942** and thereby opens the overcurrent protection circuit **914** to interrupt the fault current through the overcurrent protection circuit **914,** all the current is then directed through indicator circuit **917F.** The applied current exceeds the threshold current level and illuminates the LED to signal that the SGA fuse assembly **930** has failed.

Similarly, when the when the SGA fuse assembly **930** experiences a low fault current that opens the thermal disconnect mechanism **960** and thereby opens the overcurrent protection circuit **914** to interrupt the fault current through the overcurrent protection circuit **914,** all the current is then directed through the indicator circuit **917F.** The applied current exceeds the threshold current level and illuminates the LED to signal that the SGA fuse assembly **930** has failed.

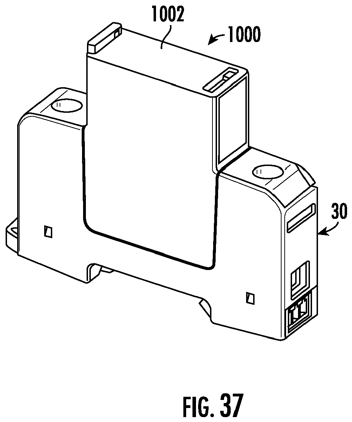

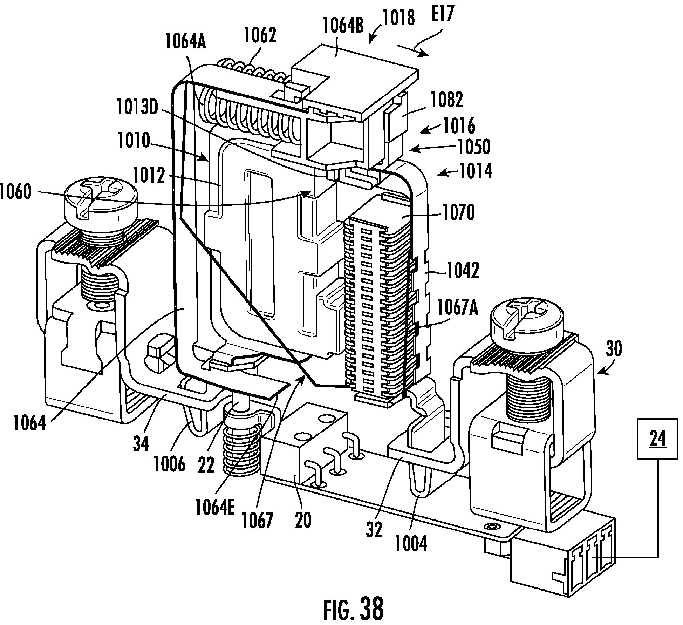

With reference to **FIGS. 37** and **38****,** a fused SPD module **1000** according to further embodiments is shown therein. The fused SPD module **1000** includes a module housing **1002,** a first electrical contact or terminal **1004,** a second electrical contact or terminal **1006,** an overvoltage protection circuit (OPC) **1010,** an integrated overcurrent protection circuit **1014,** a thermal disconnect indicator mechanism **1016,** and an overcurrent indicator mechanism **1018** corresponding to, constructed and operating in the same manner as the module housing **702,** the first terminal **704,** the second terminal **706,** the OPC **710,** the integrated overcurrent protection circuit **714,** the thermal disconnect indicator mechanism **716,** and the overcurrent indicator mechanism **718,** except as discussed below.

In some embodiments, the SPD module **1000** is provided, installed and used as a component in a protection circuit of a power supply circuit **10** in place of the SPD module **100** as shown in **FIG. 1****,** for example.

The fused SPD module **1000** is removably and replaceably mounted in a base **30.** The fused SPD module **1000** is electrically and mechanically connected to electrical terminals **32, 34** of the base by the terminals **704, 706** when mounted in the base **30.** The base **30** may be, for example, a DIN rail mountable base.

The fused SPD module **1000** includes an MOV **1012** (optionally and as illustrated in **FIG. 38****,** encased in an epoxy layer), a triggering spark gap assembly **1050,** a fuse element **1042,** a deion plate set **1070,** a spark gap carrier **1082,** and a spark gap carrier spring **1062** corresponding to, constructed and operating in the same manner as the MOV **712,** the triggering spark gap assembly **750,** the fuse element **742,** the deion plate set **770,** the spark gap carrier **782,** and the spark gap carrier spring **762.** In some embodiments, a capacitor is provided in electrical parallel with the MOV (e.g., below the epoxy).

In the overcurrent protection circuit **1014,** the fuse element **1042** is routed along the side of the deion plate set **1070** opposite the MOV **1012** and the triggering spark gap assembly **1050.**

The overcurrent protection circuit **1014,** includes a triggering circuit corresponding to the triggering circuit **775.** In some embodiments, the triggering circuit of the module **1000** includes only a triggering GDT (corresponding to the GDT **775B**) and does not include a varistor corresponding to the varistor **775A.**

The overcurrent indicator mechanism **1018** includes an indicator member **1064B,** a spring **1064A,** an indicator strip **1064,** and an electrically resistive element or wire **1067** The spring **1064A** urges the indicator member **1064B** in a direction **E17.**

A first end of the resistive wire **1067** is secured to the spark gap carrier **1082** and the opposite end of the resistive wire **1067** is secured to the indicator member **1064B.** A section **1067A** of the resistive wire **1067** extends along (in contact with or closely adjacent) the deion chamber **1070.** The resistive wire **1067** is disintegrable or meltable in response to a sufficient current flowing therethrough. The resistive wire **1067** is slidably seat in one more guide slots in the module housing (not shown).

The strip **1064** is slidably seated in in one more guide slots in the module housing (not shown). One end **1064E** of the strip **1064** is free. The opposing end of the strip **1064** is coupled to the indicator member **1064B.** The indicator strip **1064** may be formed of a flexible, electrically nonconductive material.

The indicator member **1064B** is movable independently of the spark gap carrier **1082** such that the indicator member **1064B** can pull the indicator strip **1064** while the spark gap carrier **1082** remains stationary.

The spark gap carrier **1082** is coupled to the indicator member **1064B** such that the spark gap carrier **1082** will pull the indicator member **1064B** and the indicator strip **1064** when the spark gap carrier **1082** is displaced by the spring **1062.**

The fused SPD module **1000** will respond to a high short circuit event (condition 3) discussed above) as discussed above for the fused SPD module **700,** except in the operation of the overcurrent indicator mechanism **1018.** Instead of melting the retention spring **763,** the resistive wire **1067** is disintegrated or melted. More particularly, a portion of the high fault current is diverted through the resistive wire **1067** from the deion plates of the deion chamber **1070** and causes the resistive wire **1067** to break by disintegrating or melting.

The breaking of the resistive wire **1067** enables the spring **1064A** to pull the indicator member **1064B** and the indicator strip **1064** in a direction **E17 (****FIG. 38****).** This displacement of the indicator strip **1064** enables a pin **22** of a remote sensor switch **20** to move into the housing **1002** through the hole (not shown). The change of state of the switch **20** is transmitted to a remote monitoring system **24** to indicate that the SPD module **1000** has failed. The displacement of the indicator member **1064B** can also serve as a local alert or indicator. For example, the indicator member **1064B** may be visible through an opening in the housing.

The fused SPD module **1000** will respond to a low short circuit event (condition 4) discussed above) as discussed above for the fused SPD module **700,** except in the operation of the overcurrent indicator mechanism **1018.**

The low short circuit fault current also actuates the overcurrent indicator mechanism **1018.** During the low fault current, the resistive wire **1067** is not disintegrated or broken. Instead, the release of the spark gap carrier **1082** at the soldered thermal disconnect joint **1013D** (corresponding to joint **713D)** enables the spark gap carrier spring **1062** to pull the spark gap carrier **1082** and the indicator strip **1064** in the direction **E17.** The intact resistive wire **1067** is likewise pulled around. This displacement of the indicator strip **1064** enables the pin **22** of the remote sensor switch **20** to move into the housing **1002** through the hole **1002B.** The change of state of the switch **20** is transmitted to a remote monitoring system **24** to indicate that the SPD module **1000** has failed. The displacement of the spark gap carrier **1082** can also serve as a local alert or indicator. For example, the spark gap carrier **1082** may be visible through an opening in the housing.

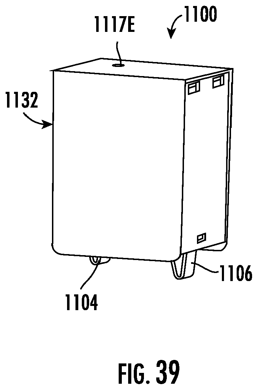

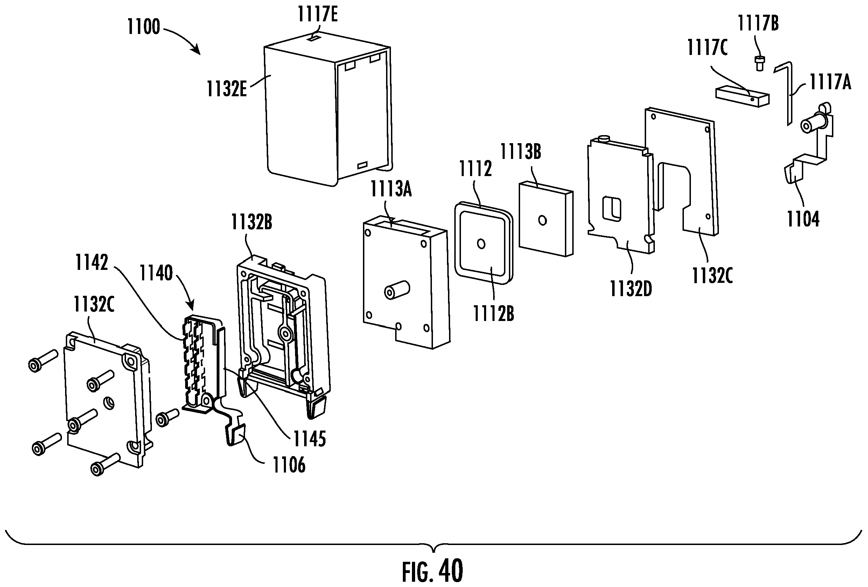

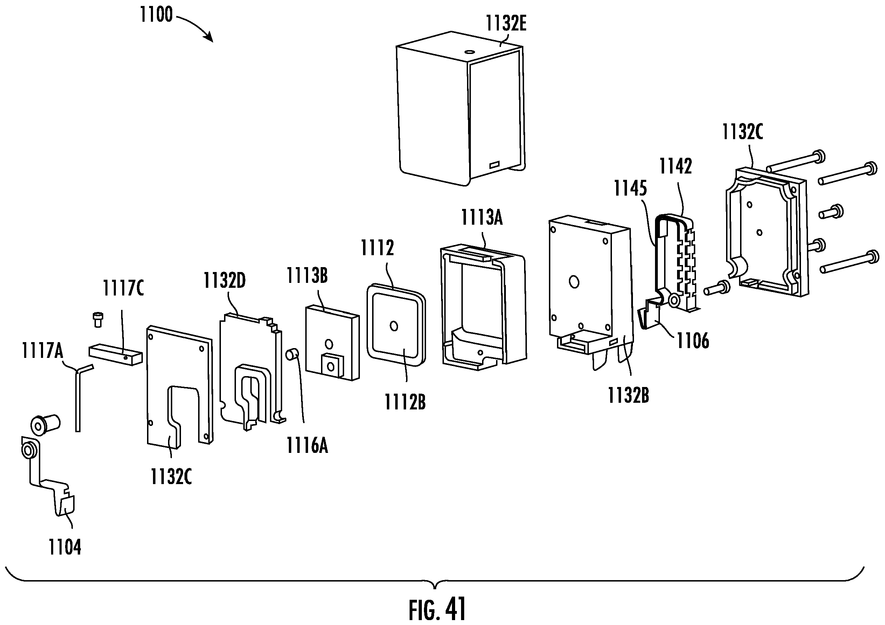

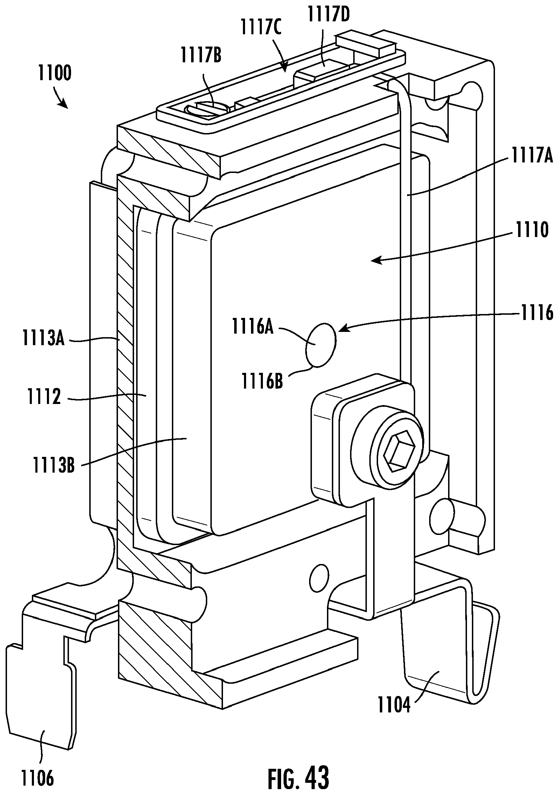

With reference to **FIGS. 39-43****,** a fused SPD module **1100** according to further embodiments is shown therein.

The SPD module **1100** includes a module housing assembly **1132,** a first electrical contact or terminal **1104,** a second electrical contact or terminal **1106,** an overvoltage protection circuit (OPC) **1110,** an integrated overcurrent protection circuit **1114,** a varistor (MOV) fail-safe mechanism **1116,** and an electronic overcurrent indicator system **1117.** The overcurrent protection circuit **1114** and the OPC **1110** are disposed in the housing assembly **1132,** and are electrically connected between the terminals **1104** and **1106** to form an SPD electrical circuit **1101.**

In some embodiments, the SPD module **1100** is provided, installed and used as a component in a protection circuit of a power supply circuit **10** in place of the SPD module **100** as shown in **FIG. 1****,** for example.

The module housing assembly **1132** includes an inner housing frame member **1132B,** a pair of side covers **1132C,** a rubber spacer **1132D,** and an outer cover **1132E** that fitted over the components **1132B, 1132C, 1132D.** The inner housing frame member **1132B** includes an integral partition wall **1132A** and an integral meltable feature or post **1164.** The housing members **1132B, 1132C** form an internal chamber **1138.** The partition wall **1132A** divides the chamber **1138** into a fuse chamber **1138A** and a disconnect chamber **1138B.**

The integrated overcurrent protection circuit **1114** includes an SGA fuse element assembly **1140** and a thermally-actuated disconnect mechanism **1160.** The thermally-actuated disconnect mechanism **1160** corresponds to the disconnect mechanism **360** and is provided to interrupt a low short circuit (fault) current in the case of a low short circuit (fault) current event.

The SGA fuse element assembly **1140** includes a fuse element **1142,** a fuse element electrode **1141,** and a semiconductive gap assembly **1150.**

The fuse element **1142** may be constructed the same as the fuse element **142.**

The fuse element electrode **1141** electrically connects an end **1142A** of the fuse element **1142** to the electrically conductive housing member **1113A** discussed below.

The semiconductive gap assembly **1150** includes a semiconductive or trigger gap **1152,** a first gap electrode **1143,** a second gap electrode **1145,** and a semiconductive member **1154** corresponding to the trigger gap **152,** the gap electrode **143,** the gap electrode **145,** and the semiconductive member **154,** respectively. The first gap electrode **1143** is the end of the fuse element **1142** opposite the end **1142A.** The second gap electrode **1145** is a movable contact forming a part of the disconnect mechanism **1160.**

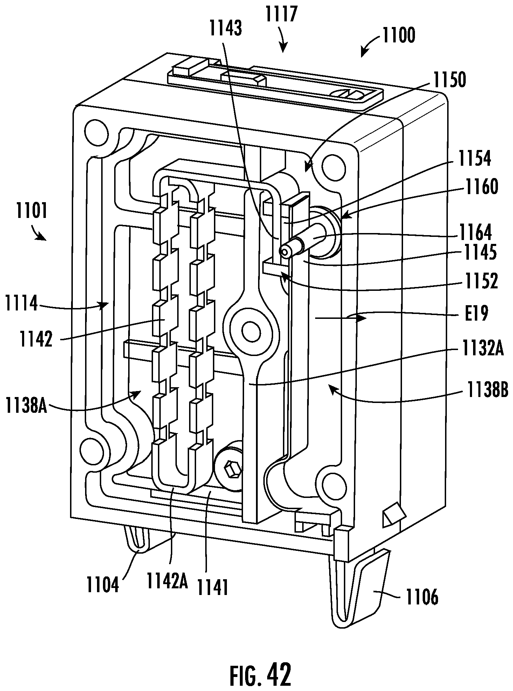

The thermal disconnect mechanism **1160** includes the movable contact **1145** and a meltable retainer element **1164.** According to some embodiments (*e.g*., as illustrated), the movable contact **1145** is a spring leg. According to some embodiments, the meltable retainer element **1164** is a post or other feature forming a part of or attached to the housing assembly **1132.** In the illustrated disconnect mechanism **1160,** the movable contact **1145** is a resilient metal spring strip and the meltable retainer element **1164** is a post forming a part of the inner housing frame **1132B.** The post **1164** holds the spring leg **1145** in an elastically deflected state as shown in **FIG. 42** such that the spring **1145** applies a load in a disconnect direction **E19** away from the trigger gap **1152.** The meltable post **1164** holds the spring **1145** in position relative to the gap electrode **1143** against the deflection load of the spring leg **1145.**

The trigger gap **1152** is defined by and between the opposing gap electrodes **1143** and **1145.** The semiconductive member **1154** is positioned in the gap **1152** and interposed between the gap electrodes **1143** and **1145.** The semiconductive member **1154** is connected in electrical series between the fuse element **1142** and the movable contact **1145.** In some embodiments and as illustrated, the opposed end faces of the semiconductive member **1154** are each in electrical contact with a respective one of the gap electrodes **1143, 1145.**

The OPC **1110** includes a varistor **1112,** a first electrically conductive varistor electrode **1113A,** a second electrically conductive varistor electrode **1113B,** and a fail-safe mechanism **1116.**

In some embodiments, the varistor **1112** is an MOV. The varistor **1112** has a first side **1112A** and an opposing second side **1112B.** A through hole **1112C** is defined in the varistor **1112** and connects the sides **1112A, 1112B.** The first varistor electrode **1113A** electrically connects the first side **1112A** to the terminal **1106.** The second varistor electrode **1113B** contacts the second side **1112B** and electrically connects the second side **1112B** to the fuse element **1142** via the electrode **1141.**

The fail-safe mechanism **1116.** includes a meltable member **1116A** disposed in a hole **1116B** defined in the varistor electrode **1113B.**

The indicator system **1117** includes a wire **1117A,** a screw **1117B,** a printed circuit board assembly **1117C** (including a LED **1117D),** and a lens **1117E.** The wire **1117A** electrically connects the PCB **1117C** to the terminal **1104** and the screw **1117B** electrically connects the PCB **1117C** to the terminal **1106** (via the electrode **1113A,** the electrode **1141,** the fuse element **1142,** and the electrode **1145).** When illuminated, the LED **1117D** is visible exteriorly of the housing assembly **1132** through the lens **1117E** to alert an observer that the overcurrent protection circuit **1114** has failed. It will be appreciated that the components **1117A, 1117B, 1117C** form an electrical indicator circuit **1117F** between the terminals **1104, 1106.**

The fuses SPD assembly **1100** is configured to respond to surge current events, high short circuit events, and low short circuit events in the same manners as described for the SGA fuse assembly **930,** except as discussed below.

During normal operation, the varistor **1112** practically acts as an insulator. The voltage applied across the triggering spark gap assembly **1150** is insufficient to initiate a spark across the trigger spark gap **1152.** The fused SPD module **1100** remains in the configuration shown in **FIG. 42** and no current is conducted through the fuse element **1142.**

When an overvoltage or current surge event (*e.g*., a transient power surge) applies a surge impulse current to the fused SPD circuit **1101,** the varistor **1112** will temporarily go to a low impedance state (*e.g.*, effectively becoming a short circuit), and the integrated overcurrent protection circuit **1114** is supplied with an SPD surge impulse current.

During the surge event, the current flows through the terminal **1106,** through the spring leg **1145,** across the triggering spark gap assembly **1150,** through the fuse element **1142,** through the electrode **1113A,** through the varistor **1112,** and through the electrode **1113B** to the terminal **1104.** The voltage applied across the trigger gap **1152** by the surge event exceeds the prescribed threshold flashover voltage of the triggering spark gap assembly **1150.** In response, the voltage across the triggering spark gap assembly **1150** initiates electrical arc flashover (corresponding to the electric arc flashover AT of triggering spark gap assembly **1150)** across the trigger gap **1152** between the gap electrodes **1143** and **1145.** The initiation of the electrical arc flashover is assisted by the semiconductive member **1154** in response to the overvoltage developed across the electrodes **1143, 1145** in the same manner as described above for the semiconductive gap assembly **150** and the semiconductive member **154.** As discussed with regard to the SGA fuse element assembly **140,** the fused SPD assembly **1100** is capable of conducting this SPD surge impulse current without disintegrating or significantly degrading the SGA fuse element assembly **1140** (*i.e.*, without disintegrating or significantly degrading the fuse element **1142** or the semiconductive member **1154).**

When a high short circuit event (condition 3) discussed above) occurs, the OPC **1110** will supply the fuse element assembly **1140** with a relatively high SPD short circuit current. The voltage applied across the gap **1152** by the high short circuit event exceeds the prescribed threshold flashover voltage of the semiconductive gap assembly **1150** and initiates electrical arc flashover across the gap **1152** between the gap electrodes **1143** and **1145** as described above with regard to the semiconductive member **154.** The high fault current disintegrates portions of the fuse element **1142,** creating one or more voltage drops between the terminals. These voltage drops add together and increasingly reduce the voltage across the semiconductive gap assembly **1150** until the voltage across the semiconductive gap assembly **1150** is less than the ignition voltage necessary to sustain the arcing between the gap electrodes **1143, 1145** and less than necessary to trigger flashover between the gap electrodes **1143, 1145** or to conduct current through or along the surface of the semiconductive member **1154.** The fused SPD module **1100** is thereby opened at the semiconductive gap assembly **1150** and the fault current through the fused SDP module **1100** is cut off or interrupted.

When a low short circuit event (condition 4) discussed above) occurs, the OPC **1110** will supply the overcurrent protection circuit **1114** with a relatively low SPD short circuit current. During the low short circuit event, the voltage applied across the semiconductive gap assembly **1150** by the low short circuit event exceeds the prescribed threshold flashover voltage of the semiconductive gap assembly **350.** In response, the voltage across the semiconductive gap assembly **1150** initiates electrical arc flashover across the trigger gap **1152.** During the low short circuit event, the semiconductive member **1154** functions as a spark gap trigger that assists in initiating the flashover between the gap electrodes **1143, 1145** in the same manner as described above for the semiconductive member 154.

The thermal disconnect mechanism **1160** operates in the same manner as the thermal disconnect mechanism **960.** As discussed above with regard to the SGA fuse assembly **930,** the low short circuit fault current conducted through the SGA fuse element assembly **1140** is insufficient to interrupt the current in the manner described above for a high short circuit fault current. Instead, the heat generated by the arcing across the semiconductive gap assembly **1150** is conducted to the meltable post **1164,** which causes the meltable post **1164** to melt (*e.g.,* soften). The melting of the meltable post **1164** permits the deflected spring leg (movable gap electrode) **1145** to pull away from the gap electrode **1143** in direction **E19,** thereby disconnecting the terminal **1106** from the fuse element **1142.** The fault current is thereby interrupted.

The indicator system **1117** operates as both a thermal disconnect indicator system and an overcurrent indicator system and in a manner different from that described above for the indicator system **917.** The PCB **1117C** has a threshold current level below which the LED **1117D** is not illuminated and above which the LED **1117D** is illuminated. During normal operation, high fault current events, and low fault current events when the SGA fuse element assembly **1140** is intact and the thermal disconnect mechanism **1060** is not actuated, the current between the terminals **1104, 1106** remains above the threshold current level and the LED **1117D** is illuminated to indicate that the overcurrent protection circuit **1114** is working properly.

However, when the fused SDP module **1100** experiences a high fault current that opens the overcurrent protection circuit **1114,** no current is supplied to the indicator circuit **1117F.** As a result, the LED **1117D** is no longer illuminated, which signals that the SGA fuse assembly **1130** has failed.

Similarly, when the fused SDP module **1100** experiences a low fault current that opens the thermal disconnect mechanism **1160,** no current is supplied to the indicator circuit **1117F.** As a result, the LED **1117D** is no longer illuminated, which signals that the SGA fuse assembly **1130** has failed.

The fail-safe mechanism **1116** is triggered when the varistor **1112** fails and overheats. When heated to a threshold temperature by heat generated in the varistor **1112,** the meltable member **1116A** will melt and flow out of the hole **1116B** and into and through the hole **1112C** to bridge and electrically connect the electrodes **1113A, 1113B.** The meltable member **1116A** thereby redirects the current applied to the OPC **1110** to bypass the varistor **1112** so that current induced heating of the varistor **1112** ceases. The fail-safe mechanism **1116** may thereby serve to prevent or inhibit thermal runaway and catastrophic failure of the varistor **1112.** Actuation of the fail-safe mechanism **1116** may create a high short circuit event (condition 3) that disintegrates the fuse element **1142** as described above.

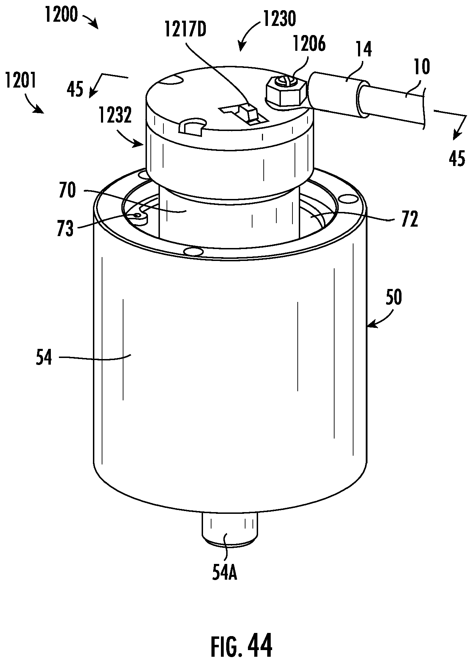

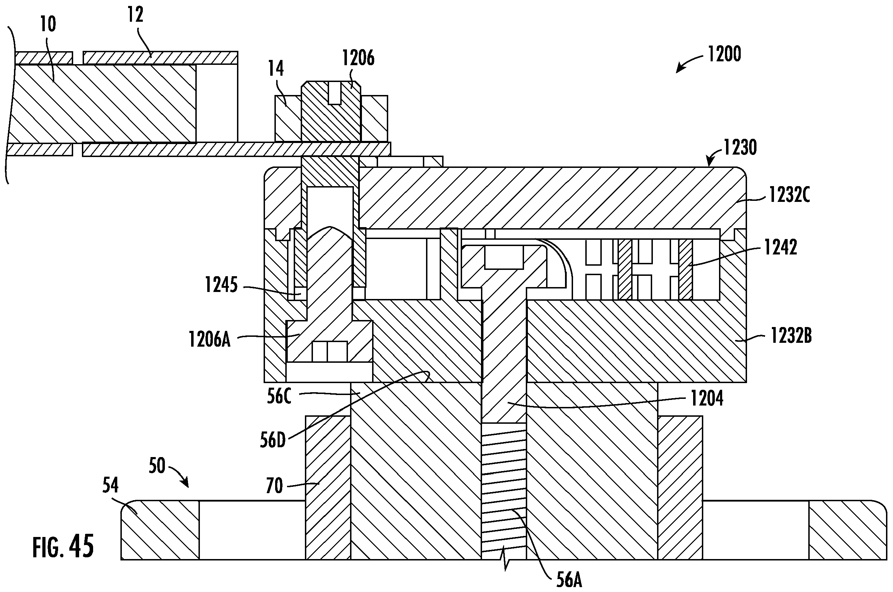

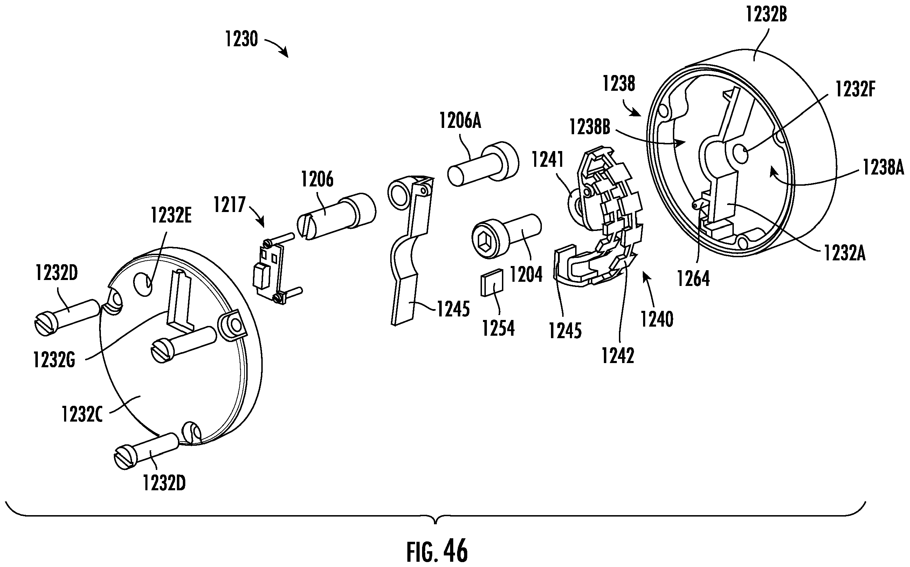

With reference to **FIGS. 44-47****,** a fused SPD module **1200** according to further embodiments is shown therein. The fused SPD module **1200** includes an SGA fuse assembly module **1230** and the OPC module **50,** which are electrically and mechanically joined to form the integrated fused SPD module **1200.** The SGA fuse assembly module **1230** and the OPC module **50** together form an SPD electrical circuit **1201.**

The OPC module **50** is described above and shown in **FIG. 6** in more detail.

The SGA fuse assembly module **1230** includes a module housing assembly **1232,** a first electrical contact or terminal **1204,** a second electrical contact or terminal **1206,** an integrated overcurrent protection circuit **1214,** and an overcurrent indicator system **1217.**

The module housing assembly **1232** includes a cup-shaped main housing member **1232B** and a cover **1232C,** fastened together by bolts **1232D.** The main housing member **1232B** includes an integral partition wall **1232A** and an integral meltable feature or post **1264.** The housing members **1232B, 1232C** form an internal chamber **1238.** The partition wall **1232A** divides the chamber **1238** into a fuse chamber **1238A** and a disconnect chamber **1238B.**

The terminal **1206** projects through a hole **1232E** in the cover **1232C.** In use, a power line **10** can be connected to the terminal **1206** with a lug **12** and nut **14,** for example.

The terminal **1204** is a threaded member (e.g., a bolt, threaded pin or threaded post) that projects through a hole **1232F** in the bottom wall of the main housing member **1232B.**

The integrated overcurrent protection circuit **1214** includes an SGA fuse element assembly **1240** and a thermally-actuated disconnect mechanism **1260.** The thermally-actuated disconnect mechanism **1260** corresponds to the disconnect mechanism **1160** and is provided to interrupt a low short circuit (fault) current in the case of a low short circuit (fault) current event.

The SGA fuse element assembly **1240** includes a fuse element **1242,** a fuse element electrode **1241,** and a semiconductive gap assembly **1250.**

The fuse element electrode **1241** electrically connects an end **1242A** of the fuse element **1242** to the piston electrode shaft **56C** of the OPC module **50** as discussed below.

The semiconductive gap assembly **1250** includes a semiconductive or trigger gap **1152,** a first gap electrode **1243,** a second gap electrode **1245,** and a semiconductive member **1254** corresponding to the trigger gap **1152,** the gap electrode **1143,** the gap electrode **1145,** and the semiconductive member **1154,** respectively. The first gap electrode **1243** is the end of the fuse element **1242** opposite the end **1242A.** The second gap electrode **1245** is a movable contact forming a part of the disconnect mechanism **1260.**

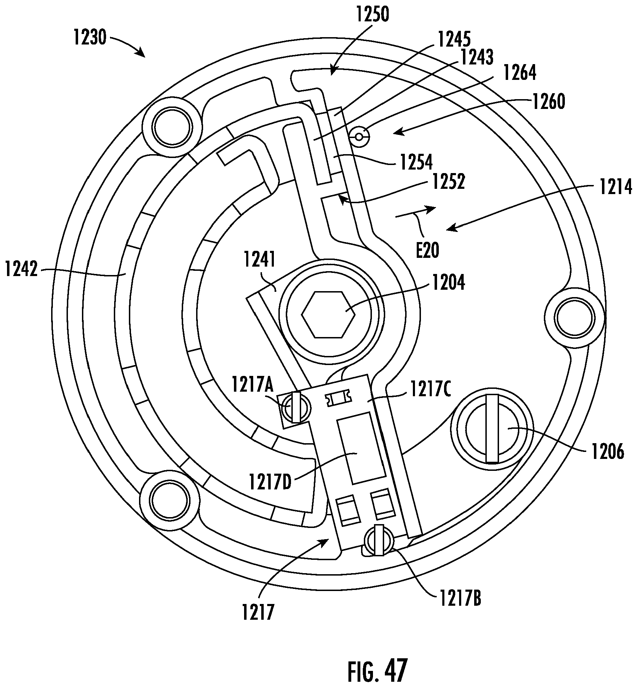

The thermal disconnect mechanism **1260** includes the movable contact **1245** and a meltable retainer element **1264.** According to some embodiments (*e.g.*, as illustrated), the movable contact **1245** is a spring leg. According to some embodiments, the meltable retainer element **1264** is a post or other feature forming a part of or attached to the housing assembly **1232.** In the illustrated disconnect mechanism **1260,** the movable contact **1245** is a resilient metal spring strip and the meltable retainer element **1264** is a post forming a part of the main housing member **1232B.** The post **1264** holds the spring leg **1245** in an elastically deflected state as shown in **FIG. 47** such that the spring **1245** applies a load in a disconnect direction **E20** away from the trigger gap **1252.** The meltable post **1264** holds the spring **1245** in position relative to the gap electrode **1243** against the deflection load of the spring leg **1245.** The fixed end of the spring leg **1245** is electrically connected to the terminal **1206** with a screw **1206A.**

The trigger gap **1252** is defined by and between the opposing gap electrodes **1243** and **1245.** The semiconductive member **1254** is positioned in the gap **1252** and interposed between the gap electrodes **1243** and **1245.** The semiconductive member **1254** is connected in electrical series between the fuse element **1242** and the movable contact **1245.** In some embodiments and as illustrated, the opposed end faces of the semiconductive member **1254** are each in electrical contact with a respective one of the gap electrodes **1243, 1245.**

The SGA fuse assembly module **1230** is mechanically secured directly to the end of the OPC module **50** by the threaded terminal **1204.** The terminal **1204** extends through the hole **1232F** and is threaded into the bore **56A** to fasten the SGA fuse assembly module **1230** to the shaft **56C** of the piston electrode **56.** The fuse electrode **1241** is thereby electrically connected to the piston electrode **56.** In some embodiments, the housing assembly **1232** is mounted in direct contact with the OPC module **50** to form a unitary structure. In some embodiments and as illustrated, the housing assembly **1232** is mounted in direct contact with the piston electrode **56.** In some embodiments and as illustrated, the piston electrode **56** and the housing assembly **1232** have complementary mating surfaces, *e.g.,* as illustrated. The power line **10** is secured to the terminal **1206** with the lug **12** and the nut **14.** The other line (not shown in **FIGS. 44-47****)** is connected to the terminal post **54A.** In other embodiments, the connections may be reversed so that the SGA fuse assembly module **1230** is instead mounted on the terminal post **54A** and is directly supported by the housing electrode **54.**

The indicator system **1217** includes a screw **1217A,** a screw **1217B,** a printed circuit board assembly **1217C** (including a LED **1217D),** and an opening **1232G** in the cover **1232C.** The screw **1217A** electrically connects the PCB **1217C** to the terminal **1104** and the screw **1217B** electrically connects the PCB **1217C** to the terminal **1206.**

The fused SPD module **1200** will operate as described above for the fused SPD module **1100.** The integrated overcurrent protection circuit **1214** will respond to surge current events, high short circuit events, and low short circuit events in the same manners as described for the overcurrent protection circuit **1114.**

The OPC module **50** will respond to surge current events, high short circuit events, and low short circuit events in the same manners as described for the OPC **1110.** The fail-safe mechanism **62** will serve the function of the fail-safe mechanism **1116.**

The indicator system **1217** will operate in the same manner as described for the indicator system **1117** to serve as both a thermal disconnect indicator system and an overcurrent indicator system.

It will be appreciated that the construction of the SGA fuse assembly module **1230** can enable the SGA fuse assembly module **1230** to be modularly and mechanically mounted on and electrically connected to an OPC module **50** that is not always intended for use with an integral fuse circuit. For example, the OPC module **50** may be a STRIKESORB^{™} SPD available from Raycap, S.A. of Greece.

The terminology used herein is for the purpose of describing particular aspects only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. Like reference numbers signify like elements throughout the description of the figures.

It will be understood that, although the terms "first," "second," etc. may be used herein to describe various elements, these elements should not be limited by these terms. These terms are only used to distinguish one element from another. Thus, a first element could be termed a second element without departing from the teachings of the inventive subject matter.

Unless otherwise defined, all terms (including technical and scientific terms) used herein have the same meaning as commonly understood by one of ordinary skill in the art to which this inventive concept belongs. It will be further understood that terms, such as those defined in commonly used dictionaries, should be interpreted as having a meaning that is consistent with their meaning in the context of the relevant art and this specification and will not be interpreted in an idealized or overly formal sense unless expressly so defined herein.

## Claims

1. An electrical protection assembly comprising:
a semiconductive gap-assisted (SGA) fuse assembly (130) forming an overcurrent protection circuit and including:
a fuse element (142); and
a semiconductive gap assembly (150) electrically connected in series with the fuse element, wherein the semiconductive gap assembly includes:
a first gap electrode (143) and an opposing second gap electrode (145);
a trigger gap (152) defined between the first and second gap electrodes; and
a semiconductive member (154) disposed in the trigger gap;
wherein the semiconductive member is configured to assist in initiation of an electrical arc flashover (AF) across the trigger gap between the first and second gap electrodes responsive to an overvoltage developed across the first and second gap electrodes.

2. The electrical protection assembly of Claim 1 wherein the semiconductive member (154) is formed of:
a composition including a mixture of a polymeric material, as a nonconductive matrix, and an electrically conductive filler; or
a semiconductive ceramic selected from the group consisting of zinc oxide, barium titanate, and silicon carbide.

3. The electrical protection assembly of any preceding claim wherein a portion of the fuse element (142) forms the first gap electrode (143) or the second gap electrode (145).

4. The electrical protection assembly of any preceding Claim including a second fuse element (144), wherein the semiconductive gap assembly is connected in electrical series between the first and second fuse elements,
wherein:
a portion of the first fuse element (142) forms the first gap electrode (143); and
a portion of the second fuse element (144) forms the second gap electrode (145).

5. The electrical protection assembly of any preceding Claim including a thermal disconnect mechanism (360) configured to disconnect the overcurrent protection circuit in response to a current insufficient to disintegrate the fuse element,
wherein the thermal disconnect mechanism includes a spring-loaded electrode (345) and a meltable retainer (364).

6. The electrical protection assembly of any preceding Claim including a deion chamber (470) that is connected in electrical parallel with the fuse element.

7. The electrical protection assembly of any preceding Claim including an overcurrent failure indicator system (718) configured to signal when the overcurrent protection circuit is interrupted.

8. The electrical protection assembly of any preceding Claim wherein the electrical protection assembly is a fused surge protective device (SPD) (100) including an overvoltage protection circuit connected in electrical series with the SGA fuse assembly (130) to form a fused SPD circuit.

9. The electrical protection assembly of Claim 8 wherein the overvoltage protection circuit includes a voltage-switching/limiting component (112), optionally a varistor.

10. The electrical protection assembly of Claim 9 wherein the overvoltage protection circuit includes a thermal disconnect mechanism (760, 1160, ...) configured to interrupt the fused SPD circuit in response to heat from the voltage-switching/limiting component (712) and/or from the semiconductive gap assembly (750),
wherein the thermal disconnect mechanism includes a solder joint (713D) or a meltable retainer element (1164).

11. The electrical protection assembly of Claim 9 wherein the overvoltage protection circuit includes a fail-safe mechanism (62) configured to short circuit the overvoltage protection circuit in response to heat from the voltage-switching/limiting component (52).

12. The electrical protection assembly of any of Claims 8 to 11 including a third gap electrode (745) and a main spark gap (784) defined at least in part by the third gap electrode, wherein the electrical protection assembly is configured such that the electrical arc flashover will propagate into and through the main spark gap from the trigger gap.

13. The electrical protection assembly of Claim 12 including a varistor (712) and/or a gas discharge tube connected in electrical series with the semiconductive member (754) and in electrical parallel with the main spark gap (784).

14. The electrical protection assembly of any of Claims 8 to 11 including a deion chamber (770) connected in electrical series with semiconductive gap assembly (750).

15. The electrical protection assembly of any of Claims 8 to 11 including:
an SPD module (550) including the overvoltage protection circuit; and
a fuse assembly module (1230);
wherein the fuse assembly module is mounted on and secured to the SPD module such that the SPD module and the fuse assembly module in combination form a unitary fused SPD module (1200); and
wherein:
the SPD module (50) includes:
a housing electrode (54) including an end wall (54B) and an integral sidewall (54C) collectively defining a cavity (80), wherein the housing electrode is unitarily formed of metal;
a piston electrode (56) extending into the cavity; and
a varistor wafer (52) disposed in the cavity between the housing electrode and the piston electrode; and
the fuse assembly module is mounted on the piston electrode or the housing electrode.

16. The electrical protection assembly of Claim 8 wherein:
the overvoltage protection circuit includes a voltage-switching/limiting component (812);
the fused SPD includes:
a spark gap assembly (880), the spark gap assembly including a first spark gap electrode (878) and a second spark gap electrode (843) defining a spark gap (852) therebetween; and
a thermal disconnector mechanism (860) positioned in a ready configuration, wherein the voltage-switching/limiting component is electrically connected in electrical series with the spark gap, the thermal disconnector mechanism being repositionable to electrically disconnect the voltage-switching/limiting component from the spark gap, the thermal disconnector mechanism including:
the first spark gap electrode (878);
a voltage-switching/limiting component electrode (813C) electrically connecting the spark gap to the voltage-switching/limiting component; and
a solder (811) securing the first spark gap electrode in electrical connection with the voltage-switching/limiting component electrode in the ready configuration;
wherein:
the solder is meltable in response to overheating in the fused SPD; and
the thermal disconnector mechanism is configured to displace the first spark gap electrode away from the voltage-switching/limiting component electrode and thereby electrically disconnect the voltage-switching/limiting component from the spark gap when the solder is melted.

## Patentansprüche

1. Elektrische Schutzanordnung, die Folgendes umfasst:
eine SGA-(Semi-Conductive Gap-Assisted)-Sicherungsanordnung (130), die eine Überstromschutzschaltung bildet und Folgendes beinhaltet:
ein Sicherungselement (142); und
eine halbleitende Spaltanordnung (150), die elektrisch in Reihe mit dem Sicherungselement geschaltet ist, wobei die halbleitende Spaltanordnung Folgendes beinhaltet:
eine erste Spaltelektrode (143) und eine gegenüberliegende zweite Spaltelektrode (145);
einen Auslösespalt (152), der zwischen der ersten und der zweiten Spaltelektrode definiert ist; und
ein in dem Auslösespalt angeordnetes halbleitendes Element (154);
wobei das halbleitende Element zum Unterstützen der Einleitung eines elektrischen Lichtbogenüberschlags (AF) über den Auslösespalt zwischen der ersten und zweiten Spaltelektrode als Reaktion auf eine über der ersten und zweiten Spaltelektrode entstandene Überspannung konfiguriert ist.

2. Elektrische Schutzanordnung nach Anspruch 1, wobei das halbleitende Element (154) gebildet ist aus:
einer Zusammensetzung, die eine Mischung aus einem Polymermaterial als nicht leitfähige Matrix und einem elektrisch leitfähigen Füllstoff enthält; oder
einer halbleitenden Keramik, ausgewählt aus der Gruppe bestehend aus Zinkoxid, Bariumtitanat und Siliziumkarbid.

3. Elektrische Schutzanordnung nach einem vorherigen Anspruch, wobei ein Teil des Sicherungselements (142) die erste Spaltelektrode (143) oder die zweite Spaltelektrode (145) bildet.

4. Elektrische Schutzanordnung nach einem vorherigen Anspruch, die ein zweites Sicherungselement (144) beinhaltet, wobei die halbleitende Spaltanordnung in elektrischer Reihe zwischen dem ersten und zweiten Sicherungselement geschaltet ist,
wobei:
ein Teil des ersten Sicherungselements (142) die erste Spaltelektrode (143) bildet; und
ein Teil des zweiten Sicherungselements (144) die zweite Spaltelektrode (145) bildet.

5. Elektrische Schutzanordnung nach einem vorherigen Anspruch, die einen thermischen Trennmechanismus (360) umfasst, der zum Trennen der Überstromschutzschaltung als Reaktion auf einen Strom konfiguriert ist, der nicht ausreicht, um das Sicherungselement zu zersetzen,
wobei der thermische Trennmechanismus eine federbelastete Elektrode (345) und einen schmelzbaren Halter (364) beinhaltet.

6. Elektrische Schutzanordnung nach einem vorherigen Anspruch, die eine Entionisierungskammer (470) beinhaltet, die elektrisch parallel mit dem Sicherungselement geschaltet ist.

7. Elektrische Schutzanordnung nach einem vorherigen Anspruch, die ein Überstromfehleranzeigesystem (718) umfasst, das so konfiguriert ist, dass es signalisiert, wenn die Überstromschutzschaltung unterbrochen ist.

8. Elektrische Schutzanordnung nach einem vorherigen Anspruch, wobei die elektrische Schutzanordnung ein abgesichertes Überspannungsschutzgerät (SPD) (100) ist, das eine Überspannungsschutzschaltung umfasst, die in elektrischer Reihe mit der SGA-Sicherungsanordnung (130) geschaltet ist, um eine abgesicherte SPD-Schaltung zu bilden.

9. Elektrische Schutzanordnung nach Anspruch 8, wobei die Überspannungsschutzschaltung eine Spannungsschalt-/-begrenzungskomponente (112), optional einen Varistor, beinhaltet.

10. Elektrische Schutzanordnung nach Anspruch 9, wobei die Überspannungsschutzschaltung einen thermischen Trennmechanismus (760, 1160, ...) beinhaltet, der zum Unterbrechen der abgesicherten SPD-Schaltung als Reaktion auf Wärme von der Spannungsschalt-/-begrenzungskomponente (712) und/oder von der halbleitenden Spaltanordnung (750) konfiguriert ist,
wobei der thermische Trennmechanismus eine Lötverbindung (713D) oder ein schmelzbares Halteelement (1164) beinhaltet.

11. Elektrische Schutzanordnung nach Anspruch 9, wobei die Überspannungsschutzschaltung einen ausfallsicheren Mechanismus (62) beinhaltet, der zum Kurzschließen der Überspannungsschutzschaltung als Reaktion auf Wärme von der Spannungsschalt-/-begrenzungskomponente (52) konfiguriert ist.

12. Elektrische Schutzanordnung nach einem der Ansprüche 8 bis 11, die eine dritte Spaltelektrode (745) und eine Hauptfunkenstrecke (784) beinhaltet, die zumindest teilweise durch die dritte Spaltelektrode definiert ist, wobei die elektrische Schutzanordnung so konfiguriert ist, dass sich der elektrische Lichtbogenüberschlag vom Auslösespalt in die Hauptfunkenstrecke und durch diese hindurch ausbreitet.

13. Elektrische Schutzanordnung nach Anspruch 12, die einen Varistor (712) und/oder eine Gasentladungsröhre beinhaltet, die in elektrischer Reihe mit dem halbleitenden Element (754) und elektrisch parallel mit der Hauptfunkenstrecke (784) geschaltet ist.

14. Elektrische Schutzanordnung nach einem der Ansprüche 8 bis 11, die eine Entionisierungskammer (770) umfasst, die in elektrischer Reihe mit der halbleitenden Spaltanordnung (750) geschaltet ist.

15. Elektrische Schutzanordnung nach einem der Ansprüche 8 bis 11, die Folgendes beinhaltet:
ein SPD-Modul (550), das die Überspannungsschutzschaltung beinhaltet; und
ein Sicherungsanordnungsmodul (1230);
wobei das Sicherungsanordnungsmodul auf dem SPD-Modul montiert und so daran befestigt ist, dass das SPD-Modul und das Sicherungsanordnungsmodul zusammen ein einheitliches abgesichertes SPD-Modul (1200) bilden; und
wobei:
das SPD-Modul (50) Folgendes beinhaltet:
eine Gehäuseelektrode (54) mit einer Endwand (54B) und einer integralen Seitenwand (54C), die zusammen einen Hohlraum (80) definieren, wobei die Gehäuseelektrode einstückig aus Metall geformt ist;
eine sich in den Hohlraum erstreckende Kolbenelektrode (56), und
einen Varistorwafer (52), der in dem Hohlraum zwischen der Gehäuseelektrode und der Kolbenelektrode angeordnet ist; und
das Sicherungsanordnungsmodul an der Kolbenelektrode oder der Gehäuseelektrode montiert ist.

16. Elektrische Schutzanordnung nach Anspruch 8, wobei:
die Überspannungsschutzschaltung eine Spannungsschalt-/-begrenzungskomponente (812) beinhaltet;
das abgesicherte SPD Folgendes beinhaltet:
eine Funkenstreckenanordnung (880), wobei die Funkenstreckenanordnung eine erste Funkenstreckenelektrode (878) und eine zweite Funkenstreckenelektrode (843) umfasst, die dazwischen eine Funkenstrecke (852) definieren; und
einen thermischen Trennmechanismus (860), der in einer Bereitschaftskonfiguration positioniert ist, wobei die Spannungsschalt-/- begrenzungskomponente elektrisch in Reihe mit der Funkenstrecke geschaltet ist, wobei der thermische Trennmechanismus umpositionierbar ist, um die Spannungsschalt-/-begrenzungskomponente von der Funkenstrecke elektrisch zu trennen, wobei der thermische Trennmechanismus Folgendes beinhaltet:
die erste Funkenstreckenelektrode (878);
eine Spannungsschalt-/-begrenzungskomponentenelektrode (813C), die die Funkenstrecke elektrisch mit der Spannungsschalt-/-begrenzungskomponente verbindet; und
ein Lot (811), das die erste Funkenstreckenelektrode in elektrischer Verbindung mit der Spannungsschalt-/-begrenzungskomponentenelektrode in der Bereitschaftsanordnung sichert;
wobei:
das Lot als Reaktion auf eine Überhitzung im geschmolzenen SPD schmelzbar ist; und
der thermische Trennmechanismus so konfiguriert ist, dass er die erste Funkenstreckenelektrode von der Spannungsschalt-/-begrenzungskomponentenelektrode weg bewegt und dadurch die Spannungsschalt-/-begrenzungskomponente von der Funkenstrecke elektrisch trennt, wenn das Lot geschmolzen ist.

## Revendications

1. Ensemble de protection électrique comprenant :
un ensemble fusible semi-conducteur assisté par espacement (SGA) (130) formant un circuit de protection contre les surintensités et incluant :
un élément fusible (142) ; et
un ensemble espacement semi-conducteur (150) connecté électriquement en série avec l'élément fusible, l'ensemble espacement semi-conducteur incluant :
une première électrode d'espacement (143) et une deuxième électrode d'espacement opposée (145) ;
un espacement de déclenchement (152) défini entre les première et deuxième électrodes d'espacement ; et
une pièce semi-conductrice (154) disposée dans l'espacement de déclenchement ;
dans lequel la pièce semi-conductrice est configurée pour assister à l'amorce d'un contournement d'arc électrique (AF) en travers de l'espacement de déclenchement entre les première et deuxième électrodes d'espacement en réaction à une surtension qui s'est développée en travers des première et deuxième électrodes d'espacement.

2. Ensemble de protection électrique de la revendication 1 dans lequel la pièce semi-conductrice (154) est formée :
d'une composition incluant un mélange d'une matière polymère, en tant que matrice non conductrice, et une matière de charge électriquement conductrice ; ou
d'une céramique semi-conductrice sélectionnée parmi le groupe consistant en oxyde de zinc, titanate de baryum, et carbure de silicium.

3. Ensemble de protection électrique de n'importe quelle revendication précédente dans lequel une portion de l'élément fusible (142) forme la première électrode d'espacement (143) ou la deuxième électrode d'espacement (145).

4. Ensemble de protection électrique de n'importe quelle revendication précédente incluant un deuxième élément fusible (144), dans lequel l'ensemble espacement semi-conducteur est connecté en série électrique entre les premier et deuxième éléments fusibles,
dans lequel :
une portion du premier élément fusible (142) forme la première électrode d'espacement (143) ; et
une portion du deuxième élément fusible (144) forme la deuxième électrode d'espacement (145).

5. Ensemble de protection électrique de n'importe quelle revendication précédente incluant un mécanisme de déconnexion thermique (360) configuré pour déconnecter le circuit de protection contre les surintensités en réaction à un courant qui est insuffisant pour désintégrer l'élément fusible,
dans lequel le mécanisme de déconnexion thermique inclut une électrode chargée par ressort (345) et un dispositif de retenue apte à fondre (364).

6. Ensemble de protection électrique de n'importe quelle revendication précédente incluant une chambre de désionisation (470) qui est connectée en parallèle électrique avec l'élément fusible.

7. Ensemble de protection électrique de n'importe quelle revendication précédente incluant un système à indicateur de défaillance de surintensité (718) configuré pour signaler le moment où le circuit de protection contre les surintensités est interrompu.

8. Ensemble de protection électrique de n'importe quelle revendication précédente dans lequel l'ensemble de protection électrique est un dispositif de protection contre les pointes de tension (SPD) à fusible (100) incluant un circuit de protection contre les surtensions connecté en série électrique avec l'ensemble fusible SGA (130) afin de former un circuit de SPD à fusible.

9. Ensemble de protection électrique de la revendication 8 dans lequel le circuit de protection contre les surtensions inclut un composant de commutation/limitation de tension (112), facultativement une varistance.

10. Ensemble de protection électrique de la revendication 9 dans lequel le circuit de protection contre les surtensions inclut un mécanisme de déconnexion thermique (760, 1160, ...) configuré pour interrompre le circuit de SPD à fusible en réaction à la chaleur provenant du composant de commutation/limitation de tension (712) et/ou de l'ensemble espacement semi-conducteur (750),
dans lequel le mécanisme de déconnexion thermique inclut un raccord à brasure (713D) ou un élément de retenue apte à fondre (1164).

11. Ensemble de protection électrique de la revendication 9 dans lequel le circuit de protection contre les surtensions inclut un mécanisme à sécurité intrinsèque (62) configuré pour court-circuiter le circuit de protection contre les surtensions en réaction à la chaleur provenant du composant de commutation/limitation de tension (52).

12. Ensemble de protection électrique de n'importe lesquelles des revendications 8 à 11 incluant une troisième électrode d'espacement (745) et un éclateur principal (784) défini au moins en partie par la troisième électrode d'espacement, l'ensemble de protection électrique étant configuré de telle sorte que le contournement de l'arc électrique va se propager dans et à travers l'éclateur principal à partir de l'espacement de déclenchement.

13. Ensemble de protection électrique de la revendication 12 incluant une varistance (712) et/ou un tube à décharge gazeuse connecté/e en série électrique avec la pièce semi-conductrice (754) et en parallèle électrique avec l'éclateur principal (784).

14. Ensemble de protection électrique de n'importe lesquelles des revendications 8 à 11 incluant une chambre de désionisation (770) connectée en série électrique avec un ensemble espacement semi-conducteur (750).

15. Ensemble de protection électrique de n'importe lesquelles des revendications 8 à 11 incluant :
un module de SPD (550) incluant le circuit de protection contre les surtensions ; et
un module d'ensemble fusible (1230) ;
dans lequel le module d'ensemble fusible est monté sur et fixé au module de SPD de telle sorte que le module de SPD et le module d'ensemble fusible forment, en combinaison, un module unitaire de SPD à fusible (1200) ; et
dans lequel :
le module de SPD (50) inclut :
une électrode de logement (54) incluant une paroi d'extrémité (54B) et une paroi latérale intégrée (54C) définissant collectivement une cavité (80), dans lequel l'électrode de logement est unitairement constituée de métal ;
une électrode de piston (56) s'étendant dans la cavité ; et
une tranche de varistance (52) disposée dans la cavité entre l'électrode de logement et l'électrode de piston ; et
le module d'ensemble fusible est monté sur l'électrode de piston ou l'électrode de logement.

16. Ensemble de protection électrique de la revendication 8 dans lequel :
le circuit de protection contre les surtensions inclut un composant de commutation/limitation de tension (812) ;
le SPD à fusible inclut :
un ensemble éclateur (880), l'ensemble éclateur incluant une première électrode d'éclateur (878) et une deuxième électrode d'éclateur (843) définissant un éclateur (852) entre elles ; et
un mécanisme de déconnecteur thermique (860) positionné dans une configuration Prête, dans lequel le composant de commutation/limitation de tension est connecté électriquement en série électrique avec l'éclateur, le mécanisme de déconnecteur thermique étant apte à être repositionné afin de déconnecter électriquement le composant de commutation/limitation de tension par rapport à l'éclateur, le mécanisme de déconnecteur thermique incluant :
la première électrode d'éclateur (878) ;
une électrode à composant de commutation/limitation de tension (813C) connectant électriquement l'éclateur au composant de commutation/limitation de tension ; et
une brasure (811) fixant la première électrode d'éclateur en connexion électrique avec l'électrode à composant de commutation/limitation de tension dans la configuration Prête ;
dans lequel :
la brasure est apte à fondre en réaction à une surchauffe dans le SPD à fusible ; et
le mécanisme de déconnecteur thermique est configuré pour déplacer la première électrode d'éclateur en l'éloignant de l'électrode à composant de commutation/limitation de tension et déconnecter ainsi électriquement le composant de commutation/limitation de tension par rapport à l'éclateur lorsque la brasure est fondue.
